# EUROPEAN PATENT SPECIFICATION

(11) **EP 3 715 399 B1**
(45) Date of publication and mention of the grant of the patent: **11.02.2026**
(21) Application number: 18882026.0
(22) Date of filing: 05.11.2018
(51) Int. Cl.: C08G 65/00, C08G 65/336, C09D 171/00

(54) **FLUOROPOLYETHER-GROUP-CONTAINING POLYMER, SURFACE TREATMENT AGENT, AND ARTICLE**
FLUORPOLYETHERGRUPPENHALTIGES POLYMER, OBERFLÄCHENBEHANDLUNGSMITTEL UND ARTIKEL
POLYMÈRE CONTENANT UN GROUPE FLUOROPOLYÉTHER, AGENT DE TRAITEMENT DE SURFACE, ET ARTICLE

(30) Priority: 21.11.2017 JP 2017223581
(43) Date of publication of application: 30.09.2020
(73) Proprietor: Shin-Etsu Chemical Co., Ltd., Tokyo 100-0004 (JP)
(72) Inventor: SAKOH Ryusuke, Annaka-shi Gunma 379-0224 (JP); MATSUDA Takashi, Annaka-shi Gunma 379-0224 (JP); YAMANE Yuji, Annaka-shi Gunma 379-0224 (JP)
(74) Representative: Ter Meer Steinmeister & Partner
(86) International application number: PCT/JP2018/041014
(87) International publication number: WO 2019/102832

(56) References cited:
- WO-A1-2015/190526
- WO-A1-2017/141707
- JP-A- 2007 099 726
- JP-A- 2009 144 133
- JP-A- 2014 070 163
- JP-A- 2016 204 656
- JP-A- 2017 137 511

## Description

### TECHNICAL FIELD

The present invention relates to a fluoropolyether-group-containing polymer (compound having an intramolecular mono- or divalent fluorooxyalkylene-group-containing polymer residue). Specifically, the present invention relates to a fluoropolyether-group-containing polymer that forms a coating having excellent water/oil-repellent property and abrasion resistance, a surface treatment agent containing the polymer and/or a partial (hydrolytic) condensate thereof, and an article that is surface-treated with the surface treatment agent.

### BACKGROUND ART

Recently, there is an accelerating demand to mount touch panels as the screen on mobile phones and other displays. While the touch panel has a screen kept bare, there are many chances of the finger or cheek coming in direct contact with the screen. Undesirably the touch panel is readily fouled with stains like sebum. There is an annually increasing need for technology to attain fingerprint proofness or easy stain removal on a display surface for better appearance or visibility. It is thus desired to have a material capable of meeting these requirements. In particular, for touch panel displays which are readily stained with fingerprints, it is desirable to form a water/oil-repellent layer on their surface. Conventional water/oil-repellent layers have high water/oil-repellent property and easy stain wipe-off, but suffer from the problem that the antifouling performance deteriorates during service.

Generally, fluoropolyether-group-containing compounds exhibit, by virtue of their extremely low surface free energy, water/oil-repellent property, chemical resistance, lubricity, releasability, antifouling and other properties. Taking advantage of these properties, they find use in a variety of industrial fields as water/oil repellent antifouling agents for paper and textiles, lubricants for magnetic recording media, oil repellent agents for precision instruments, releasing agents, cosmetic ingredients, protective films and the like. Inversely, the same properties indicate non-tackiness or non-adhesion to other substrates. Even if they can be applied to the substrate surface, it is difficult for the coating to tightly adhere thereto.

On the other hand, silane coupling agents are well known for their ability to bond surfaces of glass or fabric substrates to organic compounds. They are widely used as surface coating agents for numerous substrates. The silane coupling agent contains an organic functional group and a reactive silyl group (typically a hydrolyzable silyl group such as an alkoxysilyl group) in one molecule. In the presence of airborne moisture or the like, the hydrolyzable silyl groups undergo self-condensation reaction to form a coating. The hydrolyzable silyl groups form chemical and physical bonds with the surface of glass or metal, whereby the coating becomes a tough coating having durability.

Patent Documents 1 to 6 (JP-A 2008-534696, JP-A 2008-537557, JP-A 2012-072272, JP-A 2012-157856, JP-A 2013-136833, JP-A 2015-199906) disclose a composition comprising a fluoropolyether-group-containing polymer which is obtained by introducing a hydrolyzable silyl group into a fluoropolyether-group-containing compound, the composition being tightly adherent to the substrate surface and capable of forming a coating with water/oil-repellent property, chemical resistance, lubricity, releasability, antifouling and other properties on the substrate surface. Patent Document 7 (JP 2016 204656 A) relates to a fluoropolyester-containing polymer-modified silane, and more specifically, to a fluoropolyester-containing polymer-modified silane that forms a coating with excellent water and oil repellency and wear resistance, surface treatment agents containing said silane and/or its partial (hydrolyzed) condensation product, and articles treated with said surface treatment agent.

When lenses and antireflective coatings are surface treated with a composition comprising the fluoropolyether-group-containing polymer obtained by introducing a hydrolyzable silyl group into a fluoropolyether-group-containing compound, the cured coatings are improved in slippage, releasability and durability to abrasion with steel wool, but insufficient in durability to abrasion with erasers.

### PRIOR ART DOCUMENTS

### PATENT DOCUMENTS

Patent Document 1: JP-A 2008-534696
Patent Document 2: JP-A 2008-537557
Patent Document 3: JP-A 2012-072272
Patent Document 4: JP-A 2012-157856
Patent Document 5: JP-A 2013-136833
Patent Document 6: JP-A 2015-199906
Patent Document 7: JP 2016 294656 A

### SUMMARY OF INVENTION

### TECHNICAL PROBLEM

An object of the invention, which has been made under the above-mentioned circumstances, is to provide a fluoropolyether-group-containing polymer capable of forming a cured coating having excellent water/oil-repellent property and abrasion resistance, a surface treatment agent containing the polymer and/or a partial (hydrolytic) condensate thereof, and an article that is surface-treated with the surface treatment agent.

### SOLUTION TO PROBLEM

The present inventors made diligent efforts to solve the above problem, and found that in the fluoropolyether-group-containing polymer, by using a fluoropolyether-group-containing polymer represented by the later-described general formula (1) or (2) having a hydroxyl group or a hydrolyzable group and a hydroxyl or hydrolyzable-group-containing polyether group, in particular, a fluoropolyether-group-containing polymer represented by the later-described general formula (3) having a hydroxyl group or a hydrolyzable group and a hydroxyl or hydrolyzable-group-containing polyether group, a surface treatment agent containing the polymer and/or a partial (hydrolytic) condensate of the polymer can form a cured coating having excellent water/oil-repellent property, eraser abrasion resistance, and steel wool abrasion resistance, and finally accomplished the present invention.

Accordingly, the present invention provides a fluoropolyether-group-containing polymer (compound having an intramolecular mono- or divalent fluorooxyalkylene-group-containing polymer residue), a surface treatment agent, and an article, as defined below.

A first aspect of the invention is a fluoropolyether-group-containing polymer having a hydroxyl group or a hydrolyzable group, and a hydroxyl or hydrolyzable-group-containing polyether group, represented by the following general formula (1) or (2):

Rf¹-[N(V)_{β}(E)_{γ}]_{α} (1)

wherein Rf¹ is a mono- or divalent fluorooxyalkylene-group-containing polymer residue, Ns are each independently a carbon atom, a silicon atom, a nitrogen atom or a tri- to octavalent organic group which may be substituted with fluorine, Vs are each independently a monovalent organic group having a plurality of hydroxyl groups or hydrolyzable groups at the terminal, wherein V does not include an oxyalkylene group, Es are each independently a monovalent group having an oxyalkylene group, and a hydroxyl group or a hydrolyzable group,
wherein E is represented by W'(-(LO)₁-V)_{f'}
wherein W' is an oxygen atom, or a divalent or trivalent group that is a combination of X' and an oxygen atom, X' is a divalent or trivalent groups having 2 to 20 carbon atoms, which may have a silicon atom, a siloxane bond, a silalkylene bond or a silarylene bond, and X' may have a hydroxyl group or hydrolyzable group on the silicon atom, Ls are each independently an alkylene group having 1 to 4 carbon atoms, which may be used alone or in combination, 1 is an integer of 1 to 20, V is as defined above, and f' is 1 or 2,
α is 1 or 2, β is an integer of 1 to 6, γ is an integer of 1 to 6, and β + γ is an integer of 2 to 7,

   Rf¹-[Q-(G)_{δ}-(E')_{ε}-B]_{α} (2)
wherein Rf¹ and α are as defined above, Qs are each independently a single bond or a divalent organic group, Gs are each independently a divalent group having a hydroxyl group or a hydrolyzable group, E's are each independently a divalent group having an oxyalkylene group and a hydroxyl group or a hydrolyzable group, G and E' are linearly connected, and G and E' may be randomly arranged, Bs are each independently a hydrogen atom, an alkyl group having 1 to 4 carbon atoms, or a halogen, δ is an integer of 1 to 10, and ε is an integer of 1 to 10.

Preferred embodiments of the first aspect are defined by dependent claims 2 to12.

A second aspect of the invention is a surface treatment agent comprising a fluoropolyether-group-containing polymer having a hydroxyl group or a hydrolyzable group, and a hydroxyl or hydrolyzable-group-containing polyether group according to the invention, and/or a partial (hydrolytic) condensate thereof.

Preferred embodiments of the second aspect are defined by dependent claims 13 and 14.

A third aspect of the invention is an article that is surface-treated with the surface treatment agent according to the invention.

### ADVANTAGEOUS EFFECTS OF INVENTION

The fluoropolyether-group-containing polymer of the present invention has improved substrate adhesion and wettability by having an intramolecular hydroxyl or hydrolyzable-group-containing polyether group, and thus, an article that is surface-treated with a surface treatment agent containing the polymer and/or a partial (hydrolytic) condensate thereof is excellent in water/oil-repellent property, eraser abrasion resistance and steel wool abrasion resistance.

### DESCRIPTION OF EMBODIMENTS

A fluoropolyether-group-containing polymer of the present invention having an intramolecular fluoropolyether group (mono- or divalent fluorooxyalkylene-group-containing polymer residue) and reactive functional group (hydroxyl group or hydrolyzable group), and having a hydroxyl or hydrolyzable-group-containing polyether group is a fluoropolyether-group-containing polymer having a hydroxyl group or a hydrolyzable group, and a hydroxyl or hydrolyzable-group-containing polyether group, represented by either of the following general formulas (1) and (2), and may be a mixture of these.

Rf¹-[N(V)_{β}(E)_{γ}]_{α} (1)

wherein Rf¹ is a mono- or divalent fluorooxyalkylene-group-containing polymer residue, Ns are each independently a with a carbon atom, a silicon atom, a nitrogen atom, or a tri- to octavalent organic group which may be substituted a fluorine, Vs are each independently a monovalent organic group having a plurality of hydroxyl group or a hydrolyzable group at the terminal, Es are each independently a monovalent group having an oxyalkylene group, and a hydroxyl group or a hydrolyzable group,
wherein E is represented by W'(-(LO)₁-V)_{f'}
wherein W' is an oxygen atom, or a divalent or trivalent group that is a combination of X' and an oxygen atom, X' is a divalent or trivalent groups having 2 to 20 carbon atoms, which may have a silicon atom, a siloxane bond, a silalkylene bond or a silarylene bond, and X' may have a hydroxyl group or hydrolyzable group on the silicon atom, Ls are each independently an alkylene group having 1 to 4 carbon atoms, which may be used alone or in combination, 1 is an integer of 1 to 20, V is as defined above, and f' is 1 or 2,
α is 1 or 2, β is an integer of 1 to 6, γ is an integer of 1 to 6, and β + γ is an integer of 2 to 7,

   Rf¹-[Q-(G)_{δ}-(E')_{ε}-B]_{α} (2)
wherein Rf¹ and α are as defined above, Qs are each independently a single bond or a divalent organic group, Gs are each independently a divalent group having a hydroxyl group or a hydrolyzable group, E's are each independently a divalent group having an oxyalkylene group and a hydroxyl group or a hydrolyzable group, G and E' are linearly connected, and G and E' may be randomly arranged, Bs are each independently a hydrogen atom, an alkyl group having 1 to 4 carbon atoms, or a halogen atom, δ is an integer of 1 to 10, and ε is an integer of 1 to 10.

The fluoropolyether-group-containing polymer of the present invention has such a structure that a polymer residue containing a monovalent fluorooxyalkyl group or a divalent fluorooxyalkylene group (that is, a mono- or divalent fluorooxyalkylene-group-containing polymer residue), and a hydrolyzable silyl group such as an alkoxysilyl group or a hydroxyl-group-containing silyl group are bonded via a linking group, and further has an intramolecular polyether group containing a hydrolyzable silyl group such as an alkoxysilyl group or a hydroxysilyl group, and thus, the fluoropolyether-group-containing polymer of the present invention has improved substrate adhesion and wettability, and excellent water/oil-repellent property, eraser abrasion resistance, and steel wool abrasion resistance.

In the above formulas (1) and (2), Rf¹ is a mono- or divalent fluorooxyalkylene-group-containing polymer residue, and when α is 1 (that is, when Rf¹ is a monovalent fluorooxyalkylene-group-containing polymer residue), Rf¹ is represented by A-Rf'-, and when α is 2 (that is, when Rf¹ is a divalent fluorooxyalkylene-group-containing polymer residue), Rf¹ is represented by -Rf'-.

Here, Rf' is preferably a divalent fluorooxyalkylene-group-containing polymer residue represented by the following formula (6): 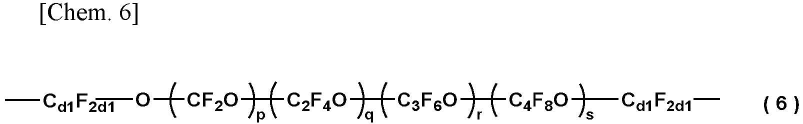 wherein p, q, r, and s each are an integer of 0 to 200, p + q + r + s = 3 to 200, each repeating unit may be linear or branched, individual repeating units may be randomly bonded, d1 is an integer of 0 to 3, and each unit may be linear or branched.

In the above formula (6), p, q, r, and s each are an integer of 0 to 200, and preferably, p is an integer of 5 to 100, q is an integer of 5 to 100, r is an integer of 0 to 100, s is an integer of 0 to 100, p + q + r + s = 3 to 200, preferably 10 to 105, each repeating unit may be linear or branched, and individual repeating units may be randomly bonded. More preferably, p + q is 10 to 105, especially, an integer of 15 to 60, and r = s = 0. The range is preferred because adhesion and curability are satisfactory if p + q + r + s is below the upper limit, and the characteristics of fluoropolyether group are fully exerted if p + q + r + s is above the lower limit.

In the above formula (6), d1 is an integer of 0 to 3 independently for each unit, preferably 1 or 2, and each unit may be linear or branched.

"A" is a fluorine atom, a hydrogen atom, or a monovalent fluorine-containing group terminated with -CF₃, -CF₂H or -CH₂F group, and is preferably a fluorine atom, -CF₃, -CF₂CF₃ or -CF₂CF₂CF₃ group.

In the above formula (1), N is a carbon atom, a silicon atom, a nitrogen atom or a tri- to octavalent organic group which may be substituted with fluorine. The tri- to octavalent organic group can be represented by the formula: -(J)ₜ-M- (wherein J is a divalent organic group, M is selected from a tri- or tetravalent group having a carbon atom or a silicon atom, and a tri- to octavalent siloxane residue, and t is 0 or 1), and the combination of J and M is not particularly limited.

J is a divalent organic group which is a linking group between Rf group and M group. Preferably J is an unsubstituted or substituted divalent organic group having 2 to 12 carbon atoms, which may contain one or more selected from the group consisting of amide bond, ether bond, ester bond, diorganosilylene groups such as dimethylsilylene, diethylsilylene and diphenylsilylene, groups of the formula: -Si[-OH][-(CH₂)_{f}-Si(CH₃)₃]- (f is an integer of 2 to 4) and diorganosiloxane group, and preferably an unsubstituted or substituted divalent hydrocarbon group having 2 to 12 carbon atoms which may contain the above structure.

Here, the unsubstituted or substituted divalent hydrocarbon group having 2 to 12 carbon atoms may be alkylene groups such as methylene, ethylene, propylene (trimethylene, methylethylene), butylene (tetramethylene, methylpropylene), hexamethylene and octamethylene, arylene groups such as phenylene, or combinations of two or more of these groups (e.g., alkylene-arylene groups), and further, substituted forms of the foregoing groups in which part or all of the hydrogen atoms are substituted with halogen atoms such as fluorine can be recited. Among these, unsubstituted or substituted alkylene groups having 2 to 4 carbon atoms, and a phenylene group are preferred.

Examples of J include the following groups: 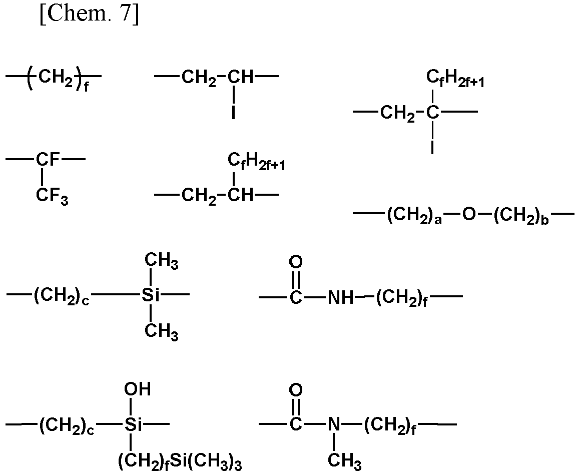 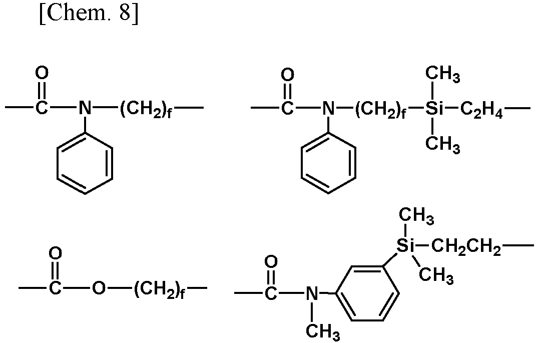 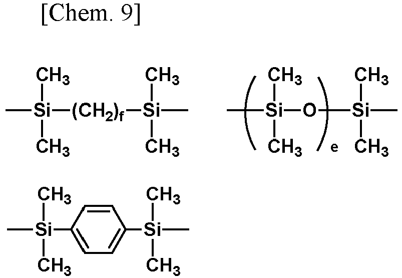 wherein f is an integer of 2 to 4, a, b, and c each are an integer of 1 to 4, and e is an integer of 1 to 50.

M is a group selected from a trivalent or tetravalent group having a carbon atom or a silicon atom, and a tri- to octavalent siloxane residues. Specifically M is selected from a trivalent group represented by the formula -C(-T)= [Ts are each independently preferably an alkyl group having 1 to 3 carbon atoms, an alkenyl group having 2 or 3 carbon atoms, a hydroxyl group, a halogen atom, or a silylether group represented by the formula K₃SiO-(Ks are each independently a hydrogen atom, an alkyl group preferably having 1 to 3 carbon atoms, an aryl group such as a phenyl group, or an alkoxy group preferably having 1 to 3 carbon atoms)], a trivalent group represented by the formula -Si(-T)= (T is as defined above), a tetravalent group represented by the formula -C≡, a tetravalent group represented by the formula -Si=, and a tri- to octavalent siloxane residues. When a siloxane bond is included, M is preferably a linear, branched or cyclic organopolysiloxane residue having 2 to 13 silicon atoms, preferably 2 to 5 silicon atoms. A silalkylene structure in which two silicon atoms are linked by an alkylene group, that is, Si-(CH₂)ₓ-Si (x is an integer of 2 to 6) may be included.

The organopolysiloxane residue can be those having 1 to 8 carbon atoms, more preferably those having an alkyl groups having 1 to 4 carbon atoms, such as a methyl group, an ethyl group, a propyl group, or a butyl group, or a phenyl group. The alkylene group in the silalkylene structure may have 2 to 6 carbon atoms, preferably 2 to 4 carbon atoms.

Examples of M are as follows.

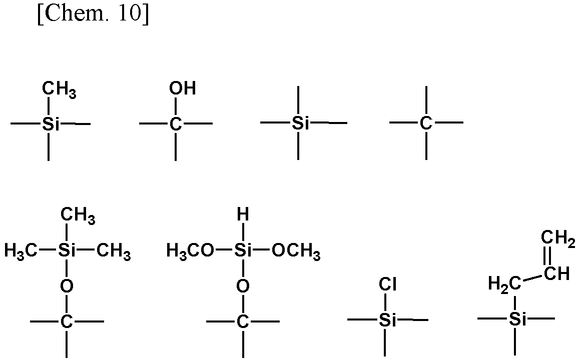

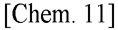

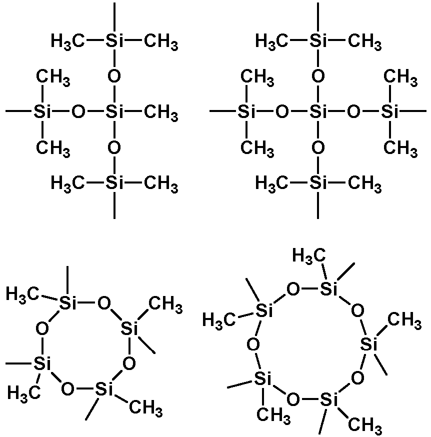

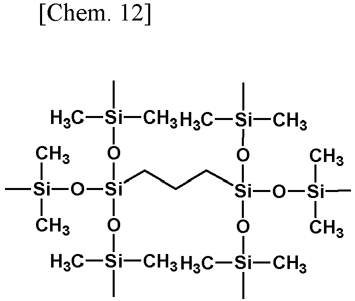

In the above formula (1), Vs are each independently a monovalent group terminated with a hydroxyl group or a hydrolyzable group, and is preferably a monovalent organic group in which a plurality of hydroxyl groups or hydrolyzable groups are introduced, and examples of V include the groups represented by the following formulas (7a) to (7f). It is preferred that an oxyalkylene group is not included as V. 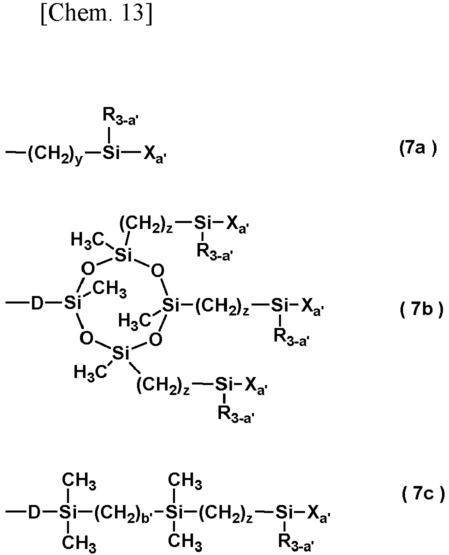 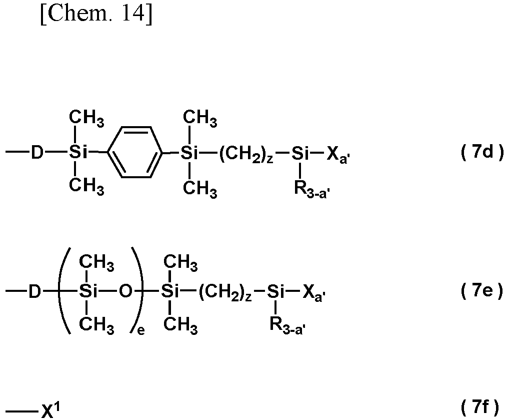 wherein Rs are each independently an alkyl group having 1 to 4 carbon atoms or a phenyl group, Xs are each independently a hydroxyl group or a hydrolyzable group, X¹ is a hydrolyzable group, a' is 2 or 3, y is an integer of 0 to 10, zs are each independently an integer of 1 to 10, D is a single bond or a divalent organic group having 1 to 20 carbon atoms, which may be substituted with fluorine, b' is an integer of 2 to 6, and e is an integer of 1 to 50.

In the above formulas (7a) to (7e), R is an alkyl group having 1 to 4 carbon atoms, such as methyl, ethyl, propyl or butyl, or a phenyl group. Xs are each independently a hydroxyl group or a hydrolyzable group. Examples of X include a hydroxyl group, alkoxy groups having 1 to 10 carbon atoms such as methoxy, ethoxy, propoxy and butoxy, alkoxyalkoxy groups having 2 to 10 carbon atoms such as methoxymethoxy and methoxyethoxy, acyloxy groups having 1 to 10 carbon atoms such as acetoxy, alkenyloxy groups having 2 to 10 carbon atoms such as isopropenoxy, halogen atoms such as chlorine, bromine and iodine, an oxime group, an isocyanate group, and a cyanate group. Among these, methoxy and ethoxy groups are preferred.

In the above formula (7f), X¹ is a hydrolyzable group, examples of which are as exemplified for the hydrolyzable group of X. Among these, methoxy and ethoxy groups are preferred. It is preferred that X¹ bonds with a (terminal) silicon atom in M to form the structure =Si-X¹.

D is a single bond, or a divalent organic group having 1 to 20 carbon atoms, preferably 2 to 8 carbon atoms, which may be substituted with fluorine, and preferably a divalent hydrocarbon group. Examples of the divalent hydrocarbon group include alkylene groups such as methylene, ethylene, propylene (trimethylene, methylethylene), butylene (tetramethylene, methylpropylene), hexamethylene and octamethylene, arylene groups such as phenylene, or combinations of two or more of these groups (e.g., alkylene-arylene groups), and further, substituted forms of the foregoing groups in which part or all of the hydrogen atoms are substituted with fluorine atoms. D is preferably ethylene, propylene or phenylene.

y is an integer of 0 to 10, preferably an integer of 2 to 8, z is an integer of 1 to 10, preferably an integer of 2 to 8, b' is an integer of 2 to 6, preferably an integer of 2 to 4, and e is an integer of 1 to 50, preferably an integer of 1 to 10.

In the above formula (1), Es are each independently a monovalent group having an oxyalkylene group, and a hydroxyl group or a hydrolyzable group, and is represented by - W'(-(LO)₁-V)_{f'}. W' is an oxygen atom, or a divalent or trivalent group that is a combination of X' and an oxygen atom, X' is a divalent or trivalent groups having 2 to 20 carbon atoms, which may have a silicon atom, a siloxane bond, a silalkylene bond or a silarylene bond, and X' may have a hydroxyl group or hydrolyzable group on the silicon atom, and an oxygen atom is especially preferred as W'. Ls are each independently an alkylene group having 1 to 4 carbon atoms such as methylene, ethylene, propylene or butylene, which may be used alone or in combination. 1 is an integer of 1 to 20, and is preferably an integer of 1 to 10. V is as defined above. f' is 1 or 2.

Examples of E include the following groups.

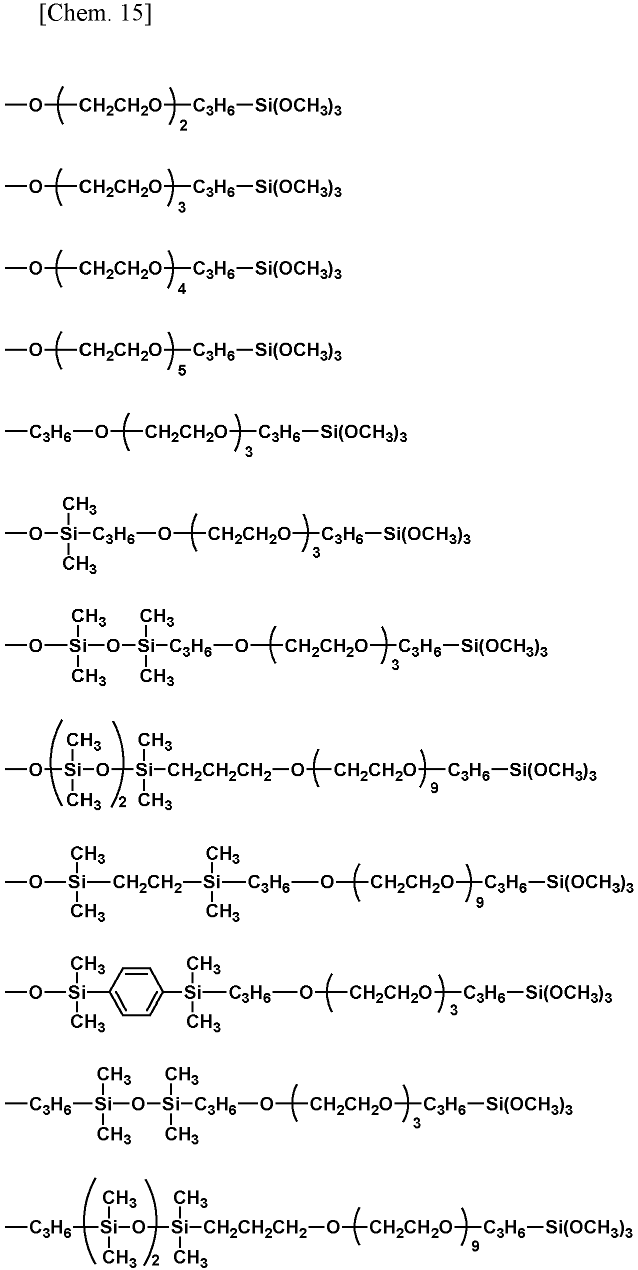

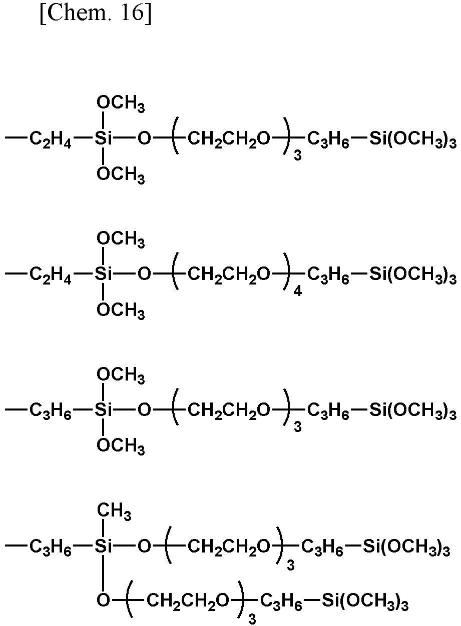

**In** the above formula (1), α is 1 or 2, β is an integer of 1 to 6, preferably 1 or 2, γ is an integer of 1 to 6, preferably 1 or 2, and β + γ is an integer of 2 to 7, preferably 2 or 3.

As a method for preparing the fluoropolyether-group-containing polymer represented by the above formula (1) when α is 1 (that is, Rf is a monovalent fluorooxyalkylene-group-containing polymer residue) or when α is 2 (that is, Rf is divalent fluorooxyalkylene-group-containing polymer residue), for example, the following method can be recited.

A fluoropolyether-group-containing polymer having, at one or both molecular chain terminals, at least one olefin moiety with a polyether group on the chain, and at least one olefin moiety free of a polyether group on the chain is dissolved in a solvent, for example, in a fluorine-based solvent such as 1,3-bis(trifluoromethyl)benzene, and an organic silicon compound having a SiH group and a hydrolyzable terminal group in the molecule (halogen atom, alkoxy group or the like), such as, for example, trichlorosilane or trialkoxysilane is mixed. The mixture is aged in the presence of a hydrosilylation catalyst, for example, a solution of chloroplatinic acid/vinyl siloxane complex in toluene, at a temperature of 40 to 120°C, preferably 60 to 100°C, more preferably about 80°C for 1 to 72 hours, preferably 20 to 36 hours, more preferably about 24 hours. When a SiH-group-containing halogenated (organic) silicon compound such as trichlorosilane is used as the organic silicon compound having a SiH group and a hydrolyzable terminal group in the molecule, the substituent (halogen atom) on the silyl group may be converted to an alkoxy group such as a methoxy group as other hydrolyzable group afterward.

Examples of the fluoropolyether-group-containing polymer having, at one or both molecular chain terminals, at least one olefin moiety with a polyether group on the chain, and at least one olefin moiety free of a polyether group on the chain include the following: 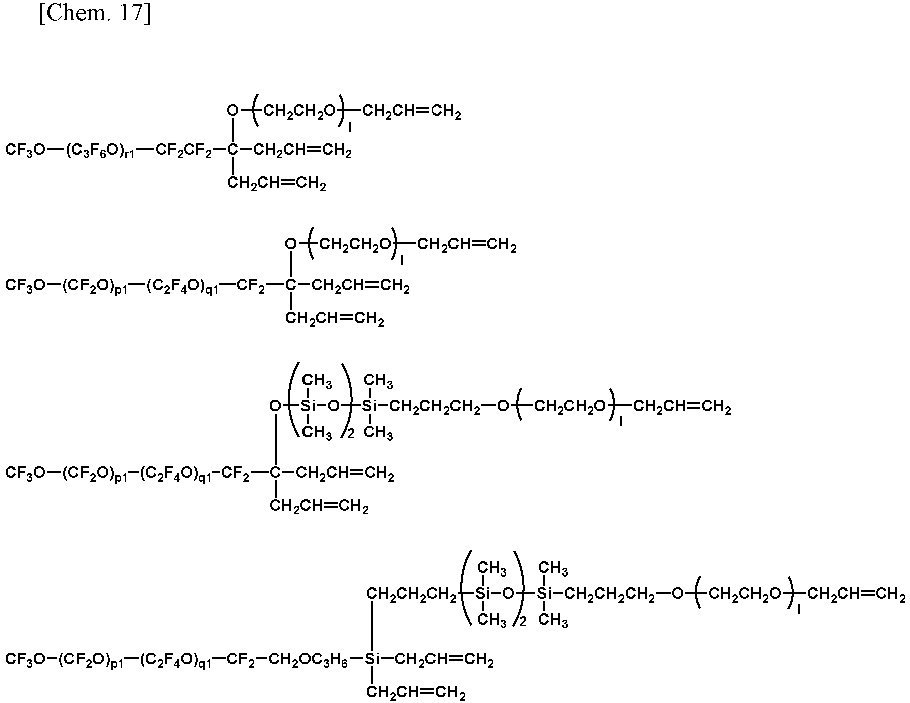 wherein 1 is as defined above. p1 is an integer of 5 to 100, q1 is an integer of 5 to 100, p1 + q1 is an integer of 10 to 105, and r1 is an integer of 0 to 100.

One method for producing the fluoropolyether-group-containing polymer having, at one or both molecular chain terminals, at least one olefin moiety with a polyether group on the chain, and at least one olefin moiety free of a polyether group on the chain is as follows. For example, a fluoropolyether-group-containing polymer having at least one hydroxyl group and at least one olefin moiety (free of a polyether group on the chain) at one or both molecular chain terminals, and a polyether group introducing agent having an olefin moiety are used in such quantities that the polyether group introducing agent is 1 to 15 equivalents, more preferably 3 to 9 equivalents, further preferably about 6 equivalents, per 1 equivalent of hydroxyl groups in the fluoropolyether-group-containing polymer having at least one hydroxyl group and at least one olefin moiety at one or both molecular chain terminals. In the presence of a base, and additionally a solvent as needed, the fluoropolyether-group-containing polymer and the polyether group introducing agent are aged at a temperature of 0 to 90°C, preferably 60 to 80°C, more preferably about 70°C for 1 to 48 hours, preferably 10 to 40 hours, more preferably about 25 hours.

Another method for producing the fluoropolyether-group-containing polymer having, at one or both molecular chain terminals, at least one olefin moiety with a polyether group on the chain, and at least one olefin moiety free of a polyether group on the chain is as follows. For example, a fluoropolyether-group-containing polymer having at least one hydroxyl group and at least one olefin moiety (free of a polyether group on the chain) at one or both molecular chain terminals, and an organic silicon compound free of a hydrolyzable terminal group (and olefin moiety with a polyether group on the chain) and having two or more SiH groups in the molecule are used in such quantities that the organic silicon compound free of a hydrolyzable terminal group and having two or more SiH groups in the molecule is 7 to 30 equivalents, more preferably 5 to 20 equivalents, further preferably about 10 equivalents per 1 equivalent of hydroxyl groups in the fluoropolyether-group-containing polymer having at least one hydroxyl group and at least one olefin moiety at one or both molecular chain terminals. In the presence of a dehydrogenation catalyst, and additionally a solvent as needed, dehydrogenation is caused at a temperature of 0 to 60°C, preferably 15 to 35°C, more preferably about 25°C for 10 minutes to 24 hours, preferably 30 minutes to 2 hours, more preferably about 1 hour, to give a fluoropolyether-group-containing polymer having, at one or both molecular chain terminals, at least one SiH group and at least one olefin moiety (free of a polyether group on the chain).

Subsequently, the fluoropolyether-group-containing polymer having, at one or both molecular chain terminals, at least one SiH group and at least one olefin moiety obtained above, and a polyether compound having two intramolecular olefin moieties (e.g., polyalkylene oxide compound blocked with an alkenyloxy group at both molecule chain terminals) are used in such quantities that the polyether compound having two intramolecular olefin moieties is 1 to 10 equivalents, more preferably 2 to 5 equivalents, further preferably about 3 equivalents per 1 equivalent of SiH groups in the fluoropolyether-group-containing polymer having, at one or both molecular chain terminals, at least one SiH group and at least one olefin moiety. The fluoropolyether-group-containing polymer and the polyether compound are dissolved in a solvent, for example, in a fluorine-based solvent such as 1,3-bis(trifluoromethyl)benzene, and the solution is aged in the presence of a hydrosilylation catalyst, for example, a solution of chloroplatinic acid/vinyl siloxane complex in toluene, at a temperature of 40 to 120°C, preferably 60 to 100°C, more preferably about 80°C for 1 to 72 hours, preferably 20 to 36 hours, more preferably about 24 hours.

Further, other method for producing the fluoropolyether-group-containing polymer having, at one or both molecular chain terminals, at least one olefin moiety with a polyether group on the chain, and at least one olefin moiety free of a polyether group on the chain are as follows. For example, a fluoropolyether-group-containing polymer having three olefin moieties (free of a polyether group on the chain) at one or both molecular chain terminals is dissolved in a fluorine-based solvent such as 1,3-bis(trifluoromethyl)benzene, and first, an organic silicon compound having an olefin moiety with a SiH group in the molecule and a polyether group (polyoxyalkylene group) on the chain is mixed so that the organic silicon compound having an olefin moiety with a SiH group in the molecule and a polyether group on the chain is 1/3 equivalent per 1 equivalent of the reactive terminal group in the fluoropolyether-group-containing polymer having three olefin moieties at one or both molecular chain terminals, and the mixture is aged in the presence of a hydrosilylation catalyst, for example, a solution of chloroplatinic acid/vinyl siloxane complex in toluene, at a temperature of 40 to 120°C, preferably 60 to 100°C, more preferably about 80°C for 1 to 72 hours, preferably 20 to 36 hours, more preferably about 24 hours to let part of the olefin moieties in the fluoropolyether-group-containing polymer react with SiH groups in the SiH-group-containing organic silicon compound.

Here, examples of the organic silicon compound having an olefin moiety with a SiH group in the molecule and a polyether group on the chain are as follows: 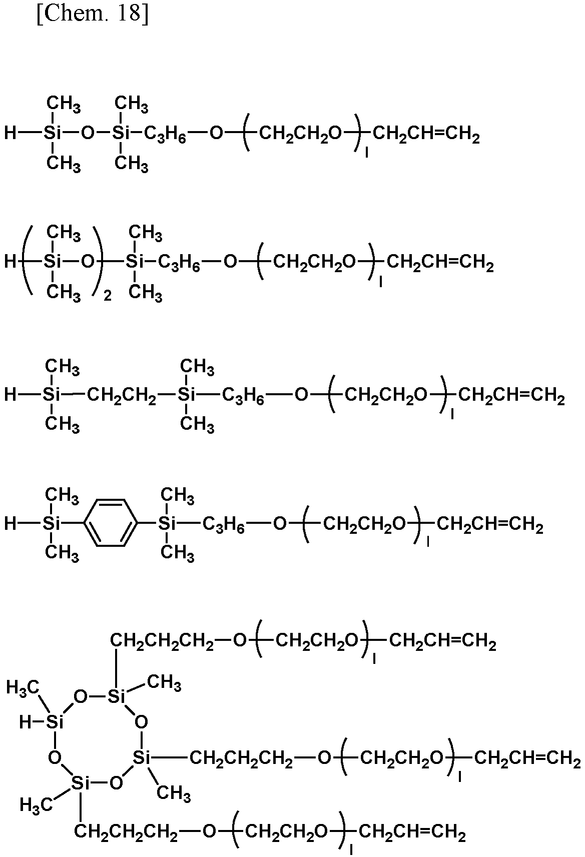 wherein 1 is as defined above.

In the method for preparing the fluoropolyether-group-containing polymer represented by formula (1), examples of the organic silicon compound having a SiH group and a hydrolyzable terminal group in the molecule are as follows. Trimethoxysilane, triethoxysilane, tripropoxysilane, triisopropoxysilane, tributoxysilane, triisopropenoxysilane, triacetoxysilane, trichlorosilane, tribromosilane, triiodosilane, and the following silane or siloxane compounds can be recited.

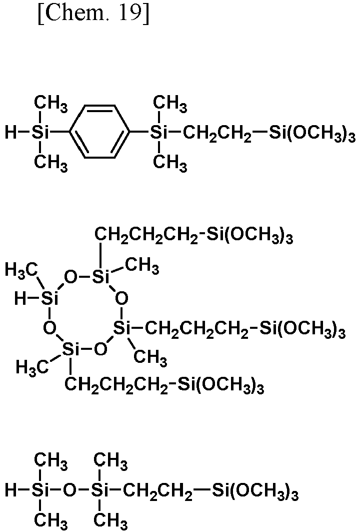

In letting the fluoropolyether-group-containing polymer having, at one or both molecular chain terminals, at least one olefin moiety with a polyether group on the chain, and at least one olefin moiety free of a polyether group on the chain, react with the organic silicon compound having a SiH group and a hydrolyzable terminal group in the molecule, the use amount of the organic silicon compound having a SiH group and a hydrolyzable terminal group in the molecule can be 1 to 4 equivalents, more preferably 1.5 to 2.5 equivalents, further preferably about 2 equivalents per 1 equivalent of olefin moieties in the fluoropolyether-group-containing polymer having, at one or both molecular chain terminals, at least one olefin moiety with a polyether group on the chain, and at least one olefin moiety free of a polyether group on the chain.

When a SiH-group-containing halogenated (organic) silicon compound such as trichlorosilane is used as the organic silicon compound having a SiH group and a hydrolyzable terminal group in the molecule, the substituent (halogen atom) on the silyl group may be converted to an alkoxy group such as methoxy as other hydrolyzable group afterward, and examples of the reagent that can be used in converting the substituent (halogen atom) on the silyl group to other hydrolyzable group include alcohols having 1 to 10 carbon atoms such as methanol, ethanol, propanol, isopropanol and butanol.

The use amount can be 10 to 200 parts by weight, more preferably 40 to 100 parts by weight, further preferably about 65 parts by weight per 100 parts by weight of an addition reaction product of the fluoropolyether-group-containing polymer having, at one or both molecular chain terminals, at least one olefin moiety with a polyether group on the chain, and at least one olefin moiety free of a polyether group on the chain, and the SiH-group-containing halogenated (organic) silicon compound.

Examples of the solvent include fluorine-based solvents. Examples of the fluorine-based solvents include 1,3-bis(trifluoromethyl)benzene, trifluoromethylbenzene, hydrofluoroether (HFE) solvents (trade name: Novec series, available from 3M) such as methyl nonafluorobutyl ether, methyl nonafluoroisobutyl ether, ethyl nonafluorobutyl ether, ethyl nonafluoroisobutyl ether and 1,1,1,2,3,4,4,5,5,5-decafluoro-3-methoxy-2-(trifluoromethyl)pentane, and perfluoro solvents composed of completely fluorinated compound (trade name: Fluorinert series, available from 3M).

The use amount of the solvent can be 10 to 300 parts by weight, preferably 50 to 150 parts by weight, further preferably about 100 parts by weight per 100 parts by weight of the fluoropolyether-group-containing polymer having, at one or both molecular chain terminals, at least one olefin moiety with a polyether group on the chain, and at least one olefin moiety free of a polyether group on the chain.

Examples of the hydrosilylation catalyst include the following. Platinum group metal based catalysts including platinum black, chloroplatinic acid, alcohol-modified chloroplatinic acid, complexes of chloroplatinic acid with olefin, aldehyde, vinyl siloxane, and acetylene alcohol, tetrakis(triphenylphosphine)palladium, and chlorotris(triphenylphosphine)rhodium can be recited. Preferably are platinum-based compounds such as vinyl siloxane coordination compounds.

The use amount of the hydrosilylation catalyst can be 0.1 to 100 ppm, more preferably 1 to 50 ppm in terms of transition metal (weight) per weight of the fluoropolyether-group-containing polymer having, at one or both molecular chain terminals, at least one olefin moiety with a polyether group on the chain, and at least one olefin moiety free of a polyether group on the chain.

Also, as another method for preparing the fluoropolyether-group-containing polymer represented by the above formula (1) when α is 1 (that is, Rf is a monovalent fluorooxyalkylene-group-containing polymer residue) or when α is 2 (that is, Rf is a divalent fluorooxyalkylene-group-containing polymer residue), for example, the following method can be recited.

A fluoropolyether-group-containing polymer having at least one olefin moiety at one or both molecular chain terminals is dissolved in a solvent, for example, in a fluorine-based solvent such as 1,3-bis(trifluoromethyl)benzene, and a SiH-group-containing halogenated (organic) silicon compound having a SiH group and a hydrolyzable terminal group in the molecule such as trichlorosilane is mixed. The resultant solution is aged in the presence of a hydrosilylation catalyst, for example, a solution of chloroplatinic acid/vinyl siloxane complex in toluene, at a temperature of 40 to 120°C, preferably 60 to 100°C, more preferably about 80°C for 1 to 72 hours, preferably 20 to 36 hours, more preferably about 24 hours. Thereafter, the substituent (halogen atom) on the silyl group is partly converted to an olefin moiety-containing polyether group with the use of polyether alcohol or the like. As a reaction method in this case, the fluoropolyether-group-containing polymer having a silyl group having a substituent such as a halogen atom, and a polyether alcohol having an olefin moiety are mixed, and the mixture is aged at a temperature of 50 to 100°C, preferably 60 to 90°C, more preferably about 80°C for 1 to 72 hours, preferably 20 to 36 hours, more preferably about 24 hours. Further, in the same manner as the hydrosilylation method described above, olefin moieties on the polyether group are caused to react with SiH groups in the SiH-group-containing halogenated (organic) silicon compound having a SiH group and a hydrolyzable terminal group in the molecule, such as trichlorosilane to introduce the hydrolyzable terminal group.

The substituent (halogen atom) on the silyl group may be converted to an alkoxy group such as a methoxy group as other hydrolyzable group.

Examples of the fluoropolyether-group-containing polymer having at least one olefin moiety at one or both molecular chain terminals include the following: 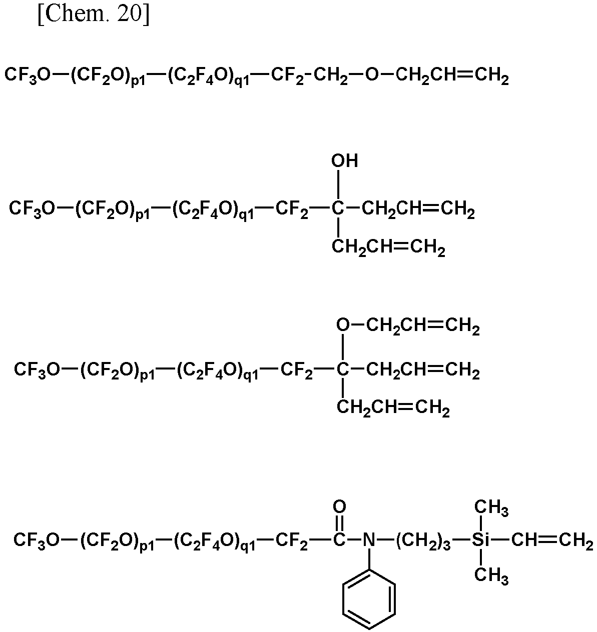 wherein p1 and q1 are as defined above.

Examples of the SiH-group-containing halogenated (organic) silicon compound having a SiH group and a hydrolyzable terminal group in the molecule include trichlorosilane, tribromosilane and triiodosilane.

The use amount of the SiH-group-containing halogenated (organic) silicon compound having a SiH group and a hydrolyzable terminal group in the molecule can be 1 to 4 equivalents, more preferably 1.5 to 2.5 equivalents, further preferably about 2 equivalents per 1 equivalent of olefin moieties in the fluoropolyether-group-containing polymer.

Examples of the solvent include fluorine-based solvents. Examples of the fluorine-based solvents include 1,3-bis(trifluoromethyl)benzene, trifluoromethylbenzene, hydrofluoroether (HFE) solvents (trade name: Novec series, available from 3M) such as methyl nonafluorobutyl ether, methyl nonafluoroisobutyl ether, ethyl nonafluorobutyl ether, ethyl nonafluoroisobutyl ether and 1,1,1,2,3,4,4,5,5,5-decafluoro-3-methoxy-2-(trifluoromethyl)pentane, and perfluoro solvents composed of completely fluorinated compound (trade name: Fluorinert series, available from 3M).

The use amount of the solvent can be 10 to 300 parts by weight, preferably 50 to 150 parts by weight, further preferably about 100 parts by weight per 100 parts by weight of the fluoropolyether-group-containing polymer having at least one olefin moiety at one or both molecular chain terminals.

Examples of the hydrosilylation catalyst include the following. Platinum group metal based catalysts including platinum black, chloroplatinic acid, alcohol-modified chloroplatinic acid, complexes of chloroplatinic acid with olefin, aldehyde, vinyl siloxane, and acetylene alcohol, tetrakis(triphenylphosphine)palladium, and chlorotris(triphenylphosphine)rhodium can be recited. Preferably are platinum-based compounds such as vinyl siloxane coordination compounds.

The use amount of the hydrosilylation catalyst can be 0.1 to 100 ppm, more preferably 1 to 50 ppm in terms of transition metal (weight) per weight of the fluoropolyether-group-containing polymer having at least one olefin moiety at one or both molecular chain terminals.

Examples of the polyether alcohol that can be used in converting the substituent (halogen atom) on the silyl group into an olefin moiety-containing polyether group include polyether alcohols having an olefin moiety such as polyethylene oxide blocked with a hydroxyl group at one molecular chain terminal, and blocked with an alkenyl group such as a vinyl group or an allyl group at the other terminal as shown below. 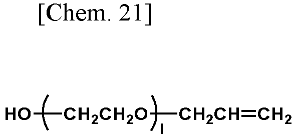 wherein 1 is as defined above.

Specific examples of the polyether alcohol having an olefin moiety include Uniox A200, Uniox A400 and Uniox A450R available from NOF Corp.

The use amount can be 5 to 100 parts by weight, more preferably 20 to 50 parts by weight, further preferably 35 parts by weight per 100 parts by weight of the addition reaction product between the fluoropolyether-group-containing polymer having at least one olefin moiety at one or both molecular chain terminals, and the SiH-group-containing halogenated (organic) silicon compound.

Examples of the reagent that can be used in converting the substituent (halogen atom) on the silyl group to other hydrolyzable group include alcohols having 1 to 10 carbon atoms such as methanol, ethanol, propanol, isopropanol and butanol.

The use amount can be 10 to 200 parts by weight, more preferably 40 to 100 parts by weight, further preferably about 65 parts by weight per 100 parts by weight of the reaction product of the fluoropolyether-group-containing polymer having at least one olefin moiety at one or both molecular chain terminals, the SiH-group-containing halogenated (organic) silicon compound, and the polyether alcohol having an olefin moiety.

Further, as another method for preparing the fluoropolyether-group-containing polymer represented by the above formula (1) when α is 1 (that is, Rf is a monovalent fluorooxyalkylene-group-containing polymer residue) or when α is 2 (that is, Rf is a divalent fluorooxyalkylene-group-containing polymer residue), for example, the following method can be recited.

A fluoropolyether-group-containing polymer having two or more olefin moieties at one or both molecular chain terminals is dissolved in a solvent, for example, in a fluorine-based solvent such as 1,3-bis(trifluoromethyl)benzene, and first, an organic silicon compound having a SiH group, a polyoxyalkylene group and a hydrolyzable group in the molecule is mixed, and the mixture is aged in the presence of a hydrosilylation catalyst, for example, a solution of chloroplatinic acid/vinyl siloxane complex in toluene, at a temperature of 40 to 120°C, preferably 60 to 100°C, more preferably about 80°C for 1 to 72 hours, preferably 20 to 36 hours, more preferably about 24 hours to let part of the olefin moieties in the fluoropolyether-group-containing polymer, react with SiH groups in the organic silicon compound containing a SiH group, a polyoxyalkylene group, and a hydrolyzable group. Subsequently, an organic silicon compound (free of polyoxyalkylene group) having a SiH group and a hydrolyzable terminal group (such as alkoxy group) in the molecule, such as trimethoxysilane is mixed, and the mixture is aged in the presence of a hydrosilylation catalyst, for example, a solution of chloroplatinic acid/vinyl siloxane complex in toluene, at a temperature of 40 to 120°C, preferably 60 to 100°C, more preferably about 80°C for 1 to 72 hours, preferably 20 to 36 hours, more preferably about 24 hours so as to let the remaining olefin moieties in the fluoropolyether-group-containing polymer react with SiH groups in the organic silicon compound.

When a SiH-group-containing halogenated (organic) silicon compound such as trichlorosilane is used as the organic silicon compound having a SiH group and a hydrolyzable terminal group in the molecule, the substituent (halogen atom) on the silyl group may be converted to an alkoxy group such as a methoxy group as other hydrolyzable group afterward.

Examples of the fluoropolyether-group-containing polymer having two or more olefin moieties at one or both molecular chain terminals include the following: 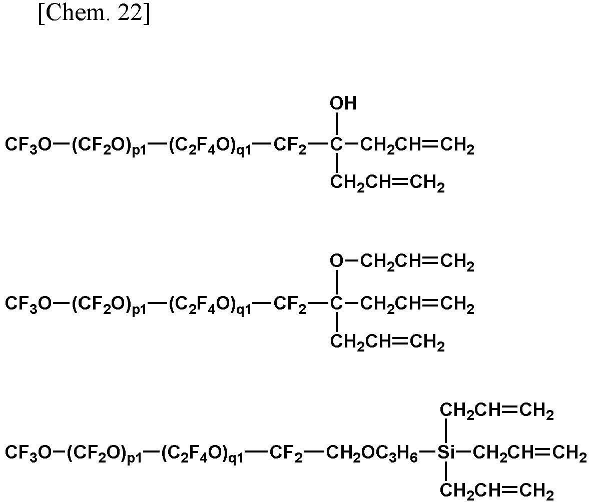 wherein p1 and q1 are as defined above.

Here, examples of the organic silicon compound having a SiH group, a polyoxyalkylene group, and a hydrolyzable group in the molecule are as follows: 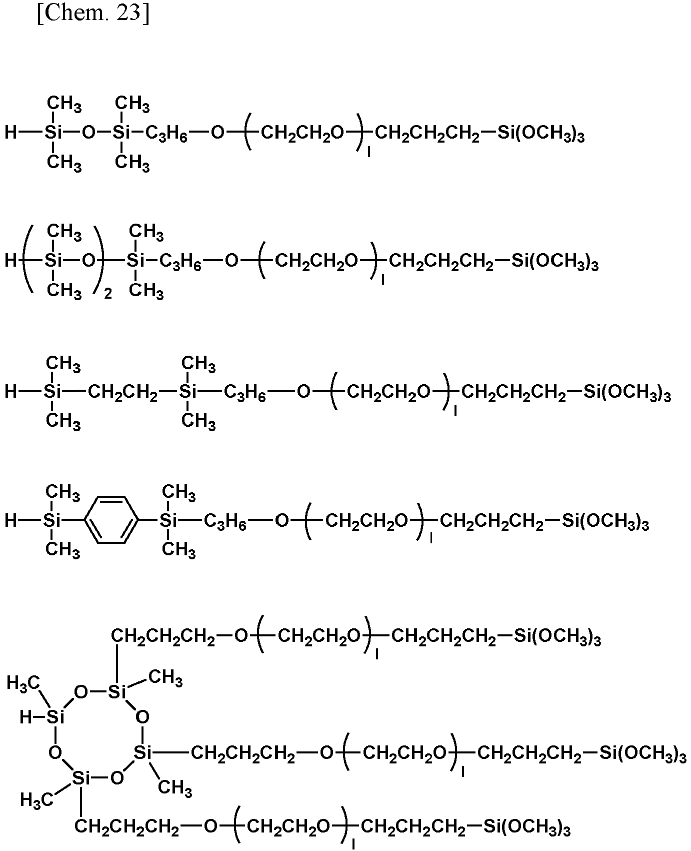 wherein 1 is as defined above.

The use amount of the organic silicon compound having a SiH group, a polyoxyalkylene group, and a hydrolyzable group in the molecule can be 0.1 to 0.9 equivalents, more preferably 0.3 to 0.7 equivalents, further preferably about 0.5 equivalents per 1 equivalent of olefin moieties in the fluoropolyether-group-containing polymer having two or more olefin moieties at one or both molecular chain terminals.

Examples of the organic silicon compound having a SiH group and a hydrolyzable terminal group in the molecule are as follows. Trimethoxysilane, triethoxysilane, tripropoxysilane, triisopropoxysilane, tributoxysilane, triisopropenoxysilane, triacetoxysilane, trichlorosilane, tribromosilane, triiodosilane and the following silane or siloxane compounds can be recited.

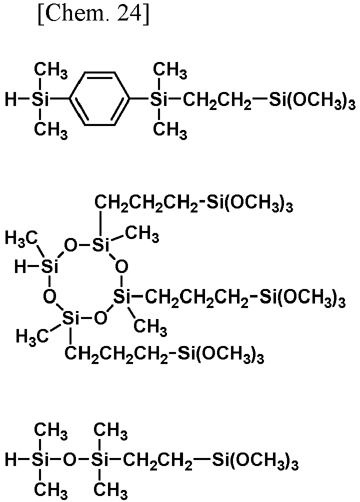

The use amount of the organic silicon compound having a SiH group and a hydrolyzable terminal group in the molecule can be 0.1 to 0.9 equivalents, more preferably 0.3 to 0.7 equivalents, further preferably about 0.5 equivalents per 1 equivalent of olefin moieties in the fluoropolyether-group-containing polymer having two or more olefin moieties at one or both molecular chain terminals.

Examples of the solvent include fluorine-based solvents. Examples of the fluorine-based solvents include 1,3-bis(trifluoromethyl)benzene, trifluoromethylbenzene, hydrofluoroether (HFE) solvents (trade name: Novec series, available from 3M) such as methyl nonafluorobutyl ether, methyl nonafluoroisobutyl ether, ethyl nonafluorobutyl ether, ethyl nonafluoroisobutyl ether and 1,1,1,2,3,4,4,5,5,5-decafluoro-3-methoxy-2-(trifluoromethyl)pentane, and perfluoro solvents composed of completely fluorinated compound (trade name: Fluorinert series, available from 3M).

The use amount of the solvent can be 10 to 300 parts by weight, preferably 50 to 150 parts by weight, further preferably about 100 parts by weight per 100 parts by weight of the fluoropolyether-group-containing polymer having two or more olefin moieties at one or both molecular chain terminals.

Examples of the hydrosilylation catalyst include the following. Platinum group metal based catalysts including platinum black, chloroplatinic acid, alcohol-modified chloroplatinic acid, complexes of chloroplatinic acid with olefin, aldehyde, vinyl siloxane, and acetylene alcohol, tetrakis(triphenylphosphine)palladium and chlorotris(triphenylphosphine)rhodium can be recited. Preferably are platinum-based compounds such as vinyl siloxane coordination compounds.

The use amount of the hydrosilylation catalyst can be 0.1 to 100 ppm, more preferably 1 to 50 ppm in terms of transition metal (weight) per weight of the fluoropolyether-group-containing polymer having two or more olefin moieties at one or both molecular chain terminals.

In the above formula (2), Qs are each independently a single bond or a divalent organic group, and is a linking bond between Rf¹ group and G group or E' group. The divalent organic group is preferably an unsubstituted or substituted divalent organic group having 2 to 12 carbon atoms, which may contain one or more structure selected from an amide bond, an ether bond, an ester bond, diorganosilylene groups such as a dimethylsilylene group, groups of the formula: -Si[-OH][-(CH₂)_{f}-Si(CH₃)₃]- (f is an integer of 2 to 4) and diorganosiloxane groups, and preferably an unsubstituted or substituted divalent hydrocarbon group having 2 to 12 carbon atoms which may contain the above structure.

Here, the unsubstituted or substituted divalent hydrocarbon group having 2 to 12 carbon atoms may include alkylene groups such as methylene, ethylene, propylene (trimethylene, methylethylene), butylene (tetramethylene, methylpropylene, hexamethylene and octamethylene, arylene groups such as phenylene, or combinations of two or more of these groups (e.g., alkylene-arylene group), and further, substituted forms of the foregoing groups in which part or all of the hydrogen atoms are substituted with halogen atoms such as fluorine can be recited. Among these, unsubstituted or substituted alkylene groups having 2 to 4 carbon atoms and phenylene are preferred.

Examples of the divalent organic group of Q include the following groups: 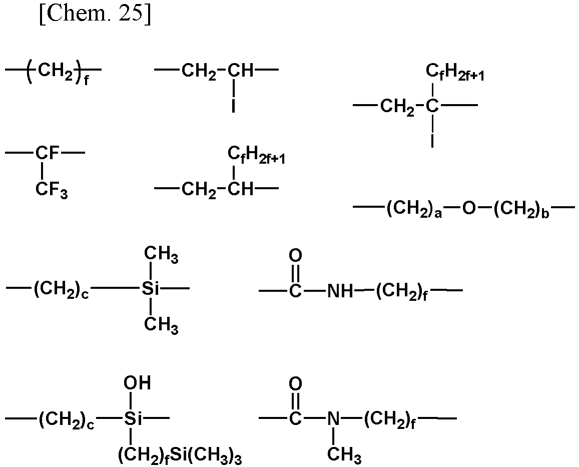 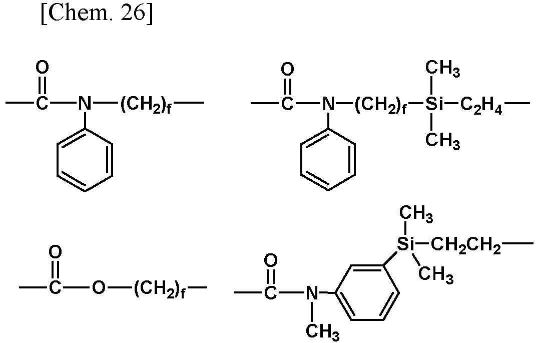 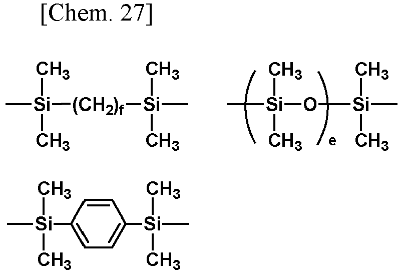 wherein f, a, b, c and e are as defined above.

In the above formula (2), Gs are each independently a divalent group having a hydroxyl group or a hydrolyzable group, and specific examples of G include the following groups. It is preferred that an oxyalkylene group is not included as G. 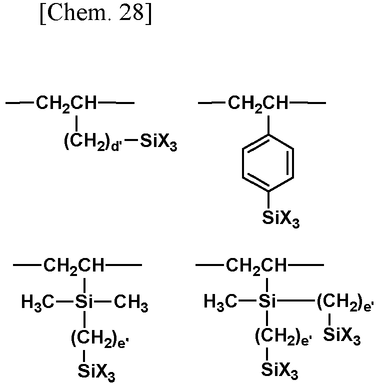 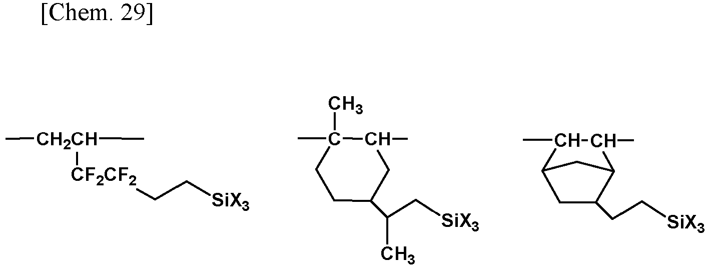 wherein X is as defined above, d' is an integer of 0 to 10, preferably an integer of 1 to 8, and e' is an integer of 2 to 10, preferably an integer of 3 to 8.

In the above formula (2), E's are each independently a divalent group having an oxyalkylene group, and a hydroxyl group or a hydrolyzable group. Specific examples include the following groups: 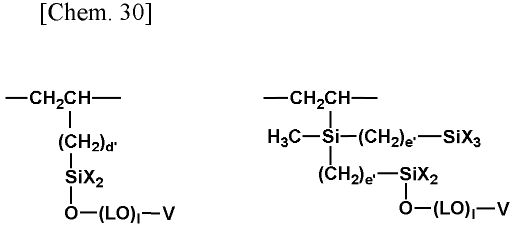 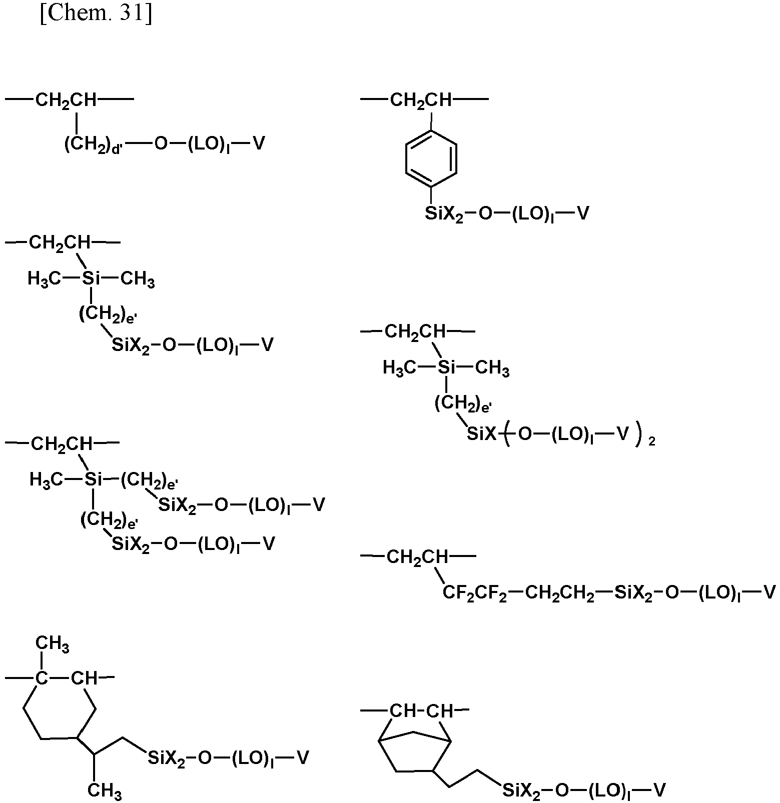 wherein X, L, 1, V, d' and e' are as defined above.

In the above formula (2), Bs are each independently a hydrogen atom, an alkyl group having 1 to 4 carbon atoms such as methyl, ethyl, propyl or butyl or a halogen atom such as fluorine, chlorine, bromine or iodine.

In the above formula (2), δ is an integer of 1 to 10, preferably an integer of 1 to 6, more preferably an integer of 1 to 4. ε is an integer of 1 to 10, preferably an integer of 1 to 4. The above G and E' are linearly linked, and these G and E' each may be arranged randomly.

As a method for preparing the fluoropolyether-group-containing polymer represented by the above formula (2) when α is 1 (that is, Rf is a monovalent fluorooxyalkylene-group-containing polymer residue) or when α is 2 (that is, Rf is a divalent fluorooxyalkylene-group-containing polymer residue), for example, the following method can be recited.

A fluoropolyether-group-containing polymer having iodine at one or both molecular chain terminals is dissolved in a solvent, for example, in a fluorine-based solvent such as 1,3-bis(trifluoromethyl)benzene, and a radical initiator such as di-t-butylperoxide is added, and then an organic silicon compound having an olefin moiety and a hydrolyzable terminal group in the molecule, such as vinyltrichlorosilane or vinyltrialkoxysilane, and a polyether compound having an intramolecular olefin moiety and a hydrolyzable terminal group are added, and mixed. At this time, by aging at a reaction temperature of 60 to 180°C, preferably 90 to 150°C, more preferably about 110°C ± 10°C for 1 to 20 hours, preferably 2 to 10 hours, more preferably about 6 hours, telomerization between the organic silicon compound having an olefin moiety and a hydrolyzable terminal group in the molecule, and the polyether compound having an intramolecular olefin moiety and a hydrolyzable terminal group is conducted, with the reaction starting from the terminal iodine atom of the fluoropolyether-group-containing polymer having iodine at one or both molecular chain terminals. Here, the organic silicon compound having an olefin moiety and a hydrolyzable terminal group in the molecule, and the polyether compound having an intramolecular olefin moiety and a hydrolyzable terminal group may be added at the same time, or either one of the compounds may be reacted previously, and then the other of the compounds may be reacted. Also, production may be conducted using only the polyether compound having an intramolecular olefin moiety and a hydrolyzable terminal group without using the organic silicon compound having an olefin moiety and a hydrolyzable terminal group in the molecule. Thereafter, terminal iodine of the telomerized fluoropolyether-group-containing polymer is reduced with a reducing agent such as metal zinc.

When an olefin-containing halogenated organic silicon compound such as vinyltrichlorosilane is used as the organic silicon compound having an olefin moiety and a hydrolyzable terminal group in the molecule, the substituent (halogen atom) on the silyl group may be converted to an alkoxy group such as a methoxy group as other hydrolyzable group afterward.

Examples of the fluoropolyether-group-containing polymer having iodine at one or both molecular chain terminals include the following: 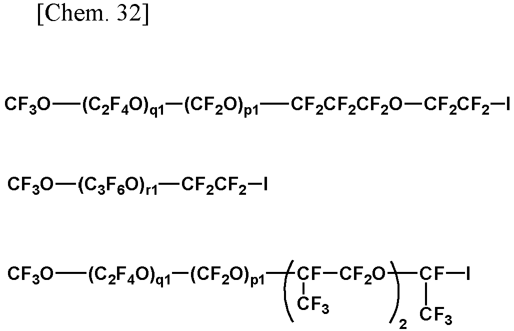 wherein p1 is an integer of 5 to 100, q1 is an integer of 5 to 100, p1 + q1 is an integer of 10 to 105 and r1 is an integer of 0 to 100.

Examples of the organic silicon compound having an olefin moiety and a hydrolyzable terminal group in the molecule include vinyltrimethoxysilane, vinyltriethoxysilane, vinyltripropoxysilane, vinyltriisopropoxysilane, vinyltributoxysilane, vinyltriisopropenoxysilane, vinyl triacetoxy silane, vinyltrichlorosilane, vinyltribromosilane, vinyltriiodosilane, allyltrimethoxysilane, allyltriethoxysilane, allyltripropoxysilane, allyltriisopropoxysilane, allyltributoxysilane, allyltriisopropenoxysilane, allyltriacetoxysilane, allyltrichlorosilane, allyltribromosilane, allyltriiodosilane and the following silanes.

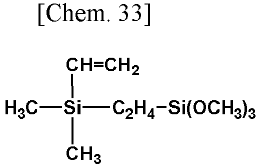

The use amount of the organic silicon compound having an olefin moiety and a hydrolyzable terminal group in the molecule can be 1 to 10 equivalents, more preferably 1.5 to 3 equivalents, further preferably about 2 equivalents per 1 equivalent of reactive terminal groups in the fluoropolyether-group-containing polymer having iodine at one or both molecular chain terminals.

Examples of the polyether compound having an intramolecular olefin moiety and a hydrolyzable terminal group include a polyalkylene oxide compound blocked with an alkenyloxy group at one molecular chain terminal, such as polyethylene oxide in which one molecular chain terminal is blocked with an allyloxy group and the other terminal is blocked with a hydrolyzable group, and a silane compound having a terminal alkenyl group and a terminal hydrolyzable group: 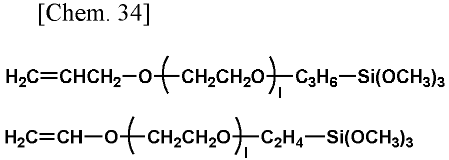 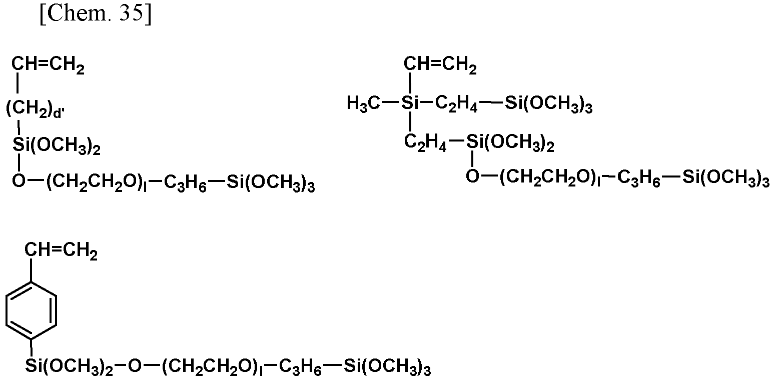 wherein d' and l are as defined above.

Specific examples of the polyether compound having an intramolecular olefin moiety and a hydrolyzable terminal group such as a polyethylene oxide compound in which one molecular chain terminal is blocked with an allyloxy group and the other terminal is blocked with a hydrolyzable group include compounds that are obtained by subjecting to alkoxysilyl group introducing reaction such as hydrosilylation to one allyloxy group terminal of a polyethylene oxide compound in which both molecular chain terminals are blocked with an allyloxy group, such as Uniox AA-480R and Uniox AA680 available from NOF Corp.

The use amount of the polyether compound having an intramolecular olefin moiety and a hydrolyzable terminal group can be 1 to 10 equivalents, more preferably 1.5 to 3 equivalents, further preferably about 2 equivalents per 1 equivalent of reactive terminal groups in the fluoropolyether-group-containing polymer having iodine at one or both molecular chain terminals.

Examples of the radical initiator include azobisisobutyronitrile (AIBN), 1,1'-azobis(cyclohexanecarbonyl)(ABCN,VAZO (registered trademark)), di-t-butylperoxide, t-butylhydroperoxide, benzoyl peroxide and methylethylketone peroxide.

The use amount of the radical initiator can be 0.1 to 5 equivalents, more preferably 0.5 to 2 equivalents, further preferably about 1 equivalent per 1 equivalent of reactive terminal groups in the fluoropolyether-group-containing polymer having iodine at one or both molecular chain terminals.

Examples of the solvent include fluorine-based solvents. Examples of the fluorine-based solvents include 1,3-bis(trifluoromethyl)benzene, trifluoromethylbenzene, hydrofluoroether (HFE) solvents (trade name: Novec series, available from 3M) such as methyl nonafluorobutyl ether, methyl nonafluoroisobutyl ether, ethyl nonafluorobutyl ether, ethyl nonafluoroisobutyl ether and 1,1,1,2,3,4,4,5,5,5-decafluoro-3-methoxy-2-(trifluoromethyl)pentane, and perfluoro solvents composed of completely fluorinated compound (trade name: Fluorinert series, available from 3M).

The use amount of the solvent can be 50 to 300 parts by weight, preferably 150 to 250 parts by weight, further preferably about 200 parts by weight per 100 parts by weight of the fluoropolyether-group-containing polymer having iodine at one or both molecular chain terminals.

Examples of the reducing agent include hydrides such as sodium borohydride and lithium aluminum hydride, and metal such as iron, zinc, nickel, aluminum and magnesium.

The use amount of the reducing agent can be 0.5 to 5 equivalents, more preferably 1 to 3 equivalents, further preferably about 1.5 equivalents per 1 equivalent of reactive terminal groups in the fluoropolyether-group-containing polymer having iodine at one or both molecular chain terminals.

Examples of the reagent that can be used in converting the substituent on the silyl group to a hydrolyzable group include alcohols having 1 to 10 carbon atoms such as methanol, ethanol, propanol, isopropanol and butanol.

The use amount can be 10 to 200 parts by weight, more preferably 40 to 100 parts by weight per 100 parts by weight of the reaction product of the fluoropolyether-group-containing polymer having iodine at one or both molecular chain terminals, the organic silicon compound having an olefin moiety and a hydrolyzable terminal group in the molecule, and the polyether compound having an intramolecular olefin moiety and a hydrolyzable terminal group.

As a structure of the fluoropolyether-group-containing polymer having a hydroxyl group or a hydrolyzable group, and a hydroxyl or hydrolyzable-group-containing polyether group represented by the above formulas (1) and (2), the following structure can be recited. By changing the combination of Rf¹, N, V, E, Q, G, E' and B of the above formulas (1) and (2), several kinds of fluoropolyether-group-containing polymers having a hydroxyl group or a hydrolyzable group, and a hydroxyl or hydrolyzable-group-containing polyether group can be obtained. In the following formulas, p1 is an integer of 5 to 100, q1 is an integer of 5 to 100, p1 + q1 is an integer of 10 to 105, r1 is an integer of 0 to 100, s1 is an integer of 0 to 100, and p1 + q1 + r1 + s1 is an integer of 10 to 200. Preferred values of p1 + q1, and p1 + q1 + r1 + s1 for each formula is shown in parentheses. 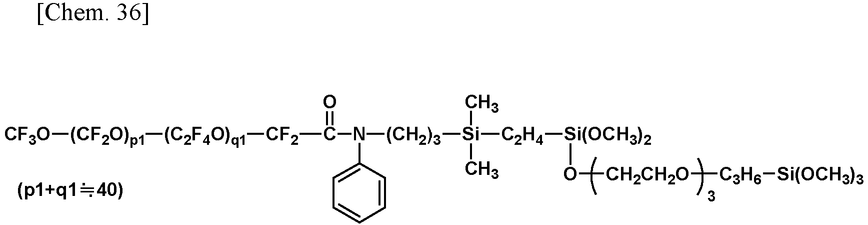 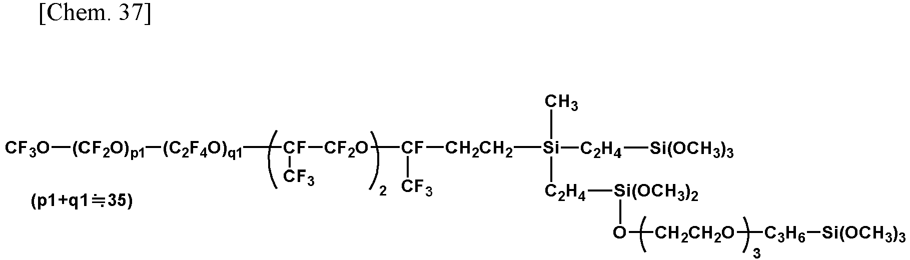 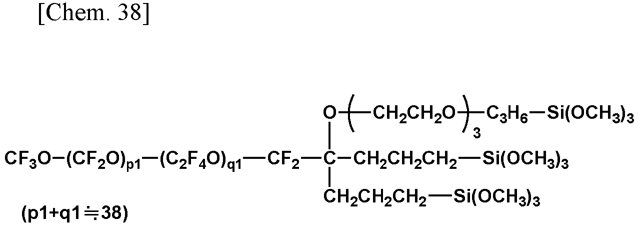 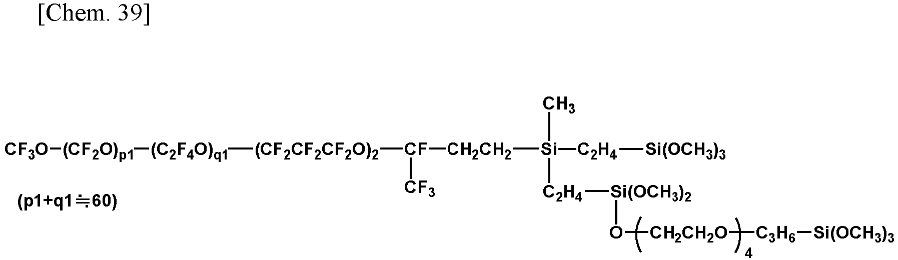 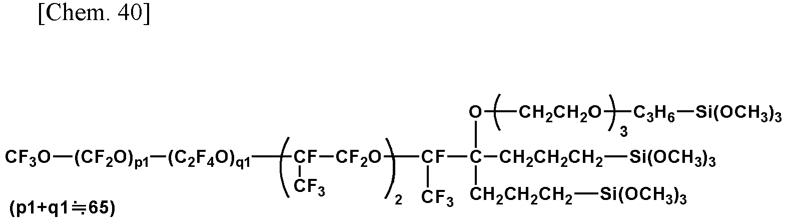 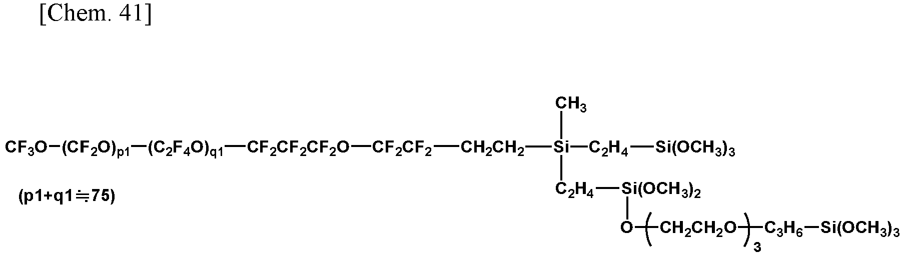 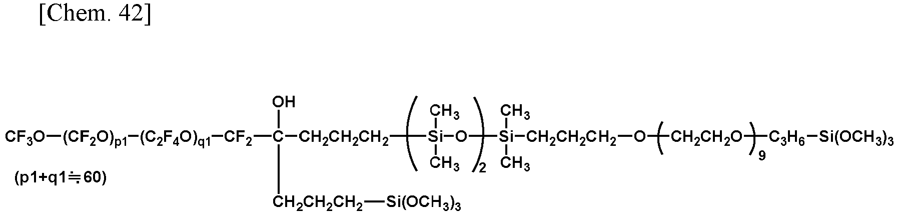 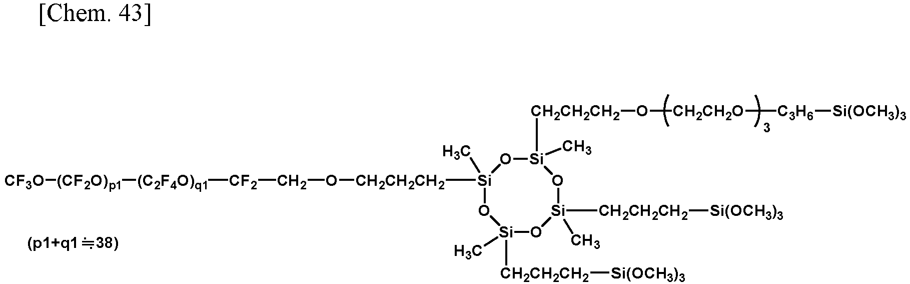 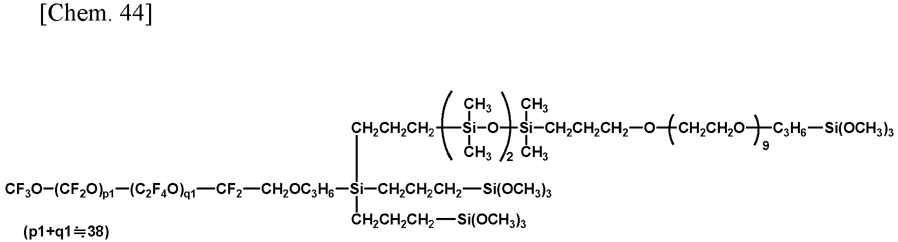 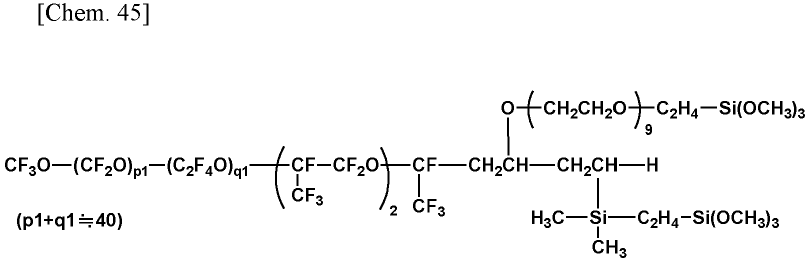 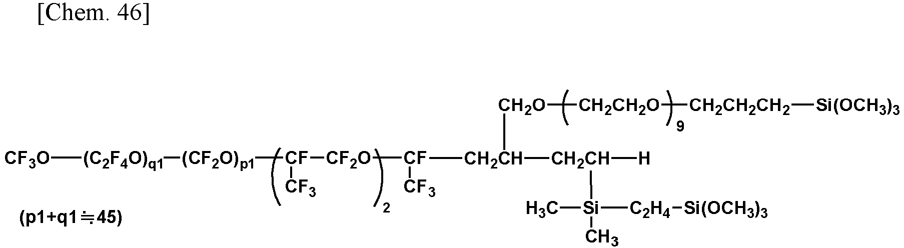 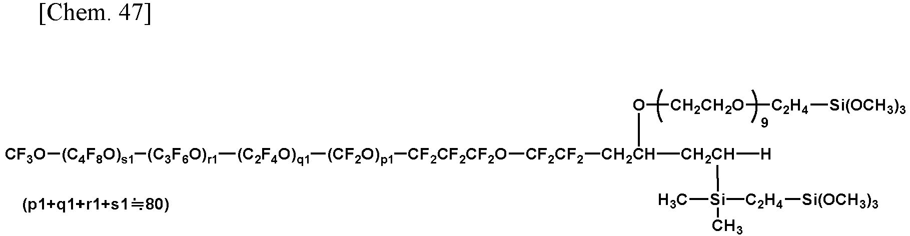 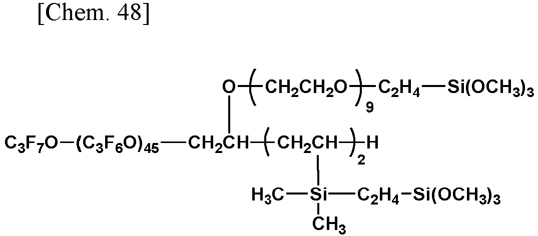 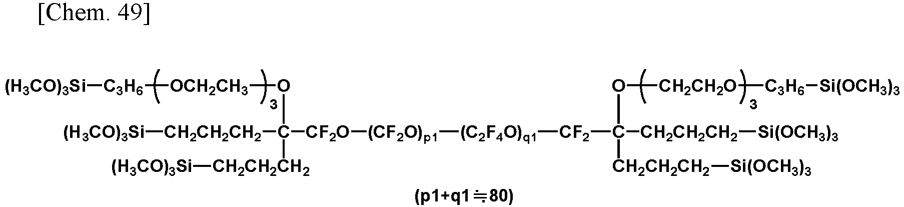 wherein individual units shown in parentheses may be randomly bonded.

Further preferably, the fluoropolyether-group-containing polymer of the present invention is indicated by the general following general formula (3): 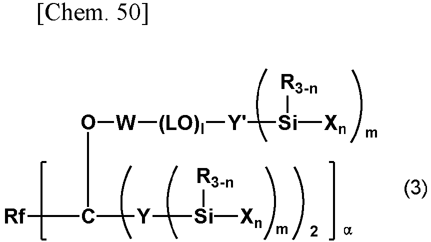 wherein Rf is a mono- or divalent fluorooxyalkylene-group-containing polymer residue, Ys are each independently a di- to hexavalent hydrocarbon group which may have a silicon atom and/or a siloxane bond, Ws are each independently a single bond, a siloxane bond or a silylene group, Ls are each independently an alkylene group having 1 to 4 carbon atoms, 1 is an integer of 1 to 20, Y' is as defined for Y, Rs are each independently an alkyl group having 1 to 4 carbon atoms, or a phenyl group, Xs are each independently a hydroxyl group or a hydrolyzable group, n is an integer of 1 to 3, m is an integer of 1 to 5, and α is 1 or 2.

Rf is preferably a monovalent fluorooxyalkylene-group-containing polymer residue represented by the following general formula (4) when α is 1: 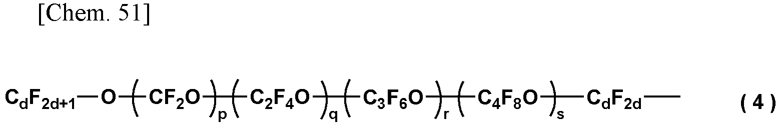 wherein p, q, r, and s each are an integer of 0 to 200, p + q + r + s = 3 to 200, each repeating unit may be linear or branched, individual repeating units may be randomly bonded, d is an integer of 1 to 3, and each unit may be linear or branched.

Rf is preferably a divalent fluorooxyalkylene-group-containing polymer residue represented by the following general formula (5) when α is 2: 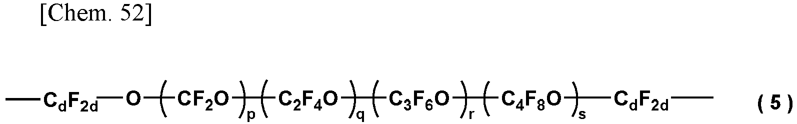 wherein p, q, r, and s each are an integer of 0 to 200, p + q + r + s = 3 to 200, each repeating unit may be linear or branched, individual repeating units may be randomly bonded, d is an integer of 1 to 3, and each unit may be linear or branched.

In the above formulas (4) and (5), p, q, r and s each are an integer of 0 to 200, and preferably, p is an integer of 5 to 100, q is an integer of 5 to 100, r is an integer of 0 to 100, s is an integer of 0 to 100, p + q + r + s = 3 to 200, preferably 10 to 105, each repeating unit may be linear or branched, and individual repeating units may be randomly bonded. More preferably, p + q is 10 to 105, especially, an integer of 15 to 60, and r = s = 0. The range is preferred because adhesion and curability are satisfactory if p + q + r + s is below the upper limit, and the characteristics of fluoropolyether group (mono- or divalent fluorooxyalkylene-group-containing polymer residue) are fully exerted if p + q + r + s is above the lower limit.

In the above formulas (4) and (5), d is an integer of 1 to 3 independently for each unit, preferably 1 or 2, and each unit may be linear or branched.

Specific examples of Rf include the following: 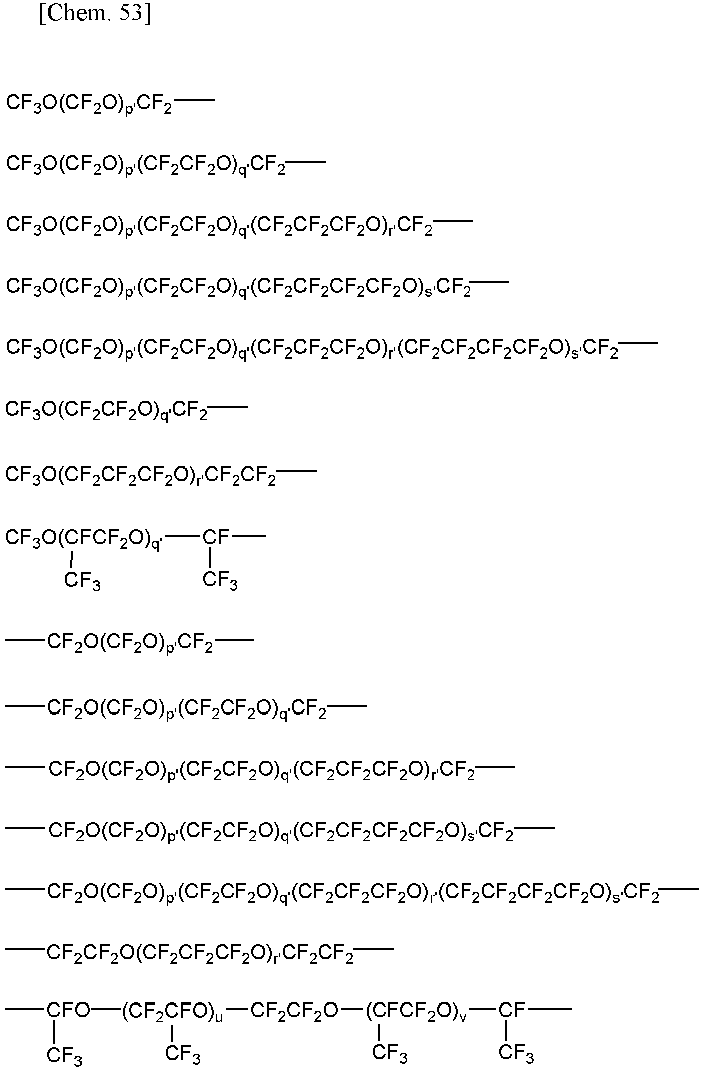 wherein p', q', r' and s' each are an integer of 1 or more, and the upper limits of p', q', r' and s' are the same as the upper limits of p, q, r and s. u is an integer of 1 to 24 and v is an integer of 1 to 24. Individual repeating units may be randomly bonded.

In the above formula (3), Y and Y' are each independently a di- to hexavalent, preferably di- to tetravalent, more preferably divalent hydrocarbon group, and may have a silicon atom and/or a siloxane bond, and absence of a linking group having low binding energy (such as ether bond) in the molecule allows provision of a coating film having excellent abrasion resistance.

Specific examples of Y and Y' include alkylene groups having 2 to 10 carbon atoms such as ethylene, propylene, butylene and hexamethylene, alkylene groups including arylene groups having 6 to 8 carbon atoms such as phenylene (e.g., alkylene-arylene groups having 8 to 16 carbon atoms), divalent groups in which alkylene groups are bonded via a silalkylene structure or a silarylene structure, and di- to hexavalent groups in which an alkylene group having 2 to 10 carbon atoms is bonded to a binding hand of a linear, branched or cyclic di- to hexavalent organopolysiloxane residue having 2 to 10, preferably 2 to 5 silicon atoms. Preferred examples of Y and Y' include alkylene groups having 3 to 10 carbon atoms, alkylene groups including phenylene, divalent groups in which alkylene groups are bonded via a silalkylene structure or a silarylene structure, di- to tetravalent groups in which an alkylene group having 2 to 10 carbon atoms is bonded to a binding hand of a linear organopolysiloxane residue having 2 to 10 silicon atoms or a branched or cyclic di- to tetravalent organopolysiloxane residue having 3 to 10 silicon atoms, and further preferred examples of Y and Y' include alkylene groups having 3 to 6 carbon atoms.

Here, examples of the silalkylene structure and the silarylene structure include the following: 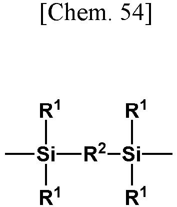 wherein R¹ is an alkyl group having 1 to 4 carbon atoms such as methyl, ethyl, propyl or butyl, or an aryl group having 6 to 10 carbon atoms such as phenyl, and R¹s may be the same or different. R² is an alkylene group having 1 to 4 carbon atoms such as methylene, ethylene or propylene (trimethylene, methylethylene) or an arylene group having 6 to 10 carbon atoms such as phenylene.

Examples of the linear, branched or cyclic di- to hexavalent organopolysiloxane residue having 2 to 10, preferably 2 to 5 silicon atoms include the following: 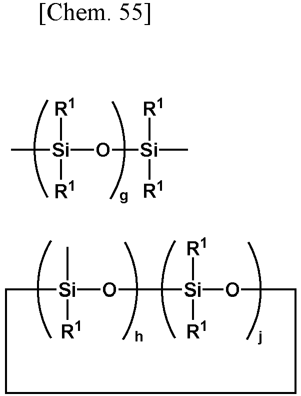 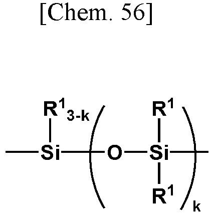 wherein, R¹ is as defined above. g is an integer of 1 to 9, preferably 1 to 4, h is an integer of 2 to 6, preferably 2 to 4, j is an integer of 0 to 8, preferably 0 or 1, h+j is an integer of 3 to 10, preferably 3 to 5 and k is an integer of 1 to 3, preferably 2 or 3.

Specific examples of Y, Y' include the following groups.

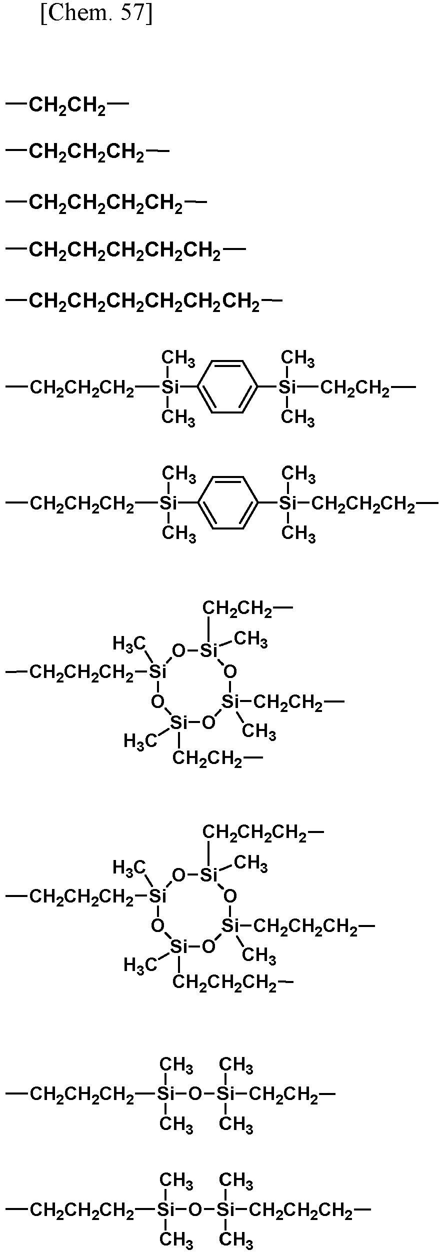

In the above formula (3), Ws are each independently a single bond, a siloxane bond or a silylene group, and is specifically a group selected from the group consisting of a single bond, a linear organopolysiloxane residue having 2 to 10 silicon atoms, a branched or cyclic di- to tetravalent organopolysiloxane residue having 3 to 10 silicon atoms, a linear silalkylene residue having 2 to 10 silicon atoms and a linear silarylene residue having 2 to 10 silicon atoms, and is preferably a single bond, a linear organopolysiloxane residue having 2 to 4 silicon atoms, a silalkylene residue or a silarylene residue, and is further preferably a single bond.

Here, as the organopolysiloxane residues having 2 to 10, preferably 2 to 4 silicon atoms, the branched or cyclic di- to tetravalent organopolysiloxane residue having 2 to 10 silicon atoms, and the silalkylene residue having 2 to 10 silicon atoms and the silarylene residue, those described above for the organopolysiloxane residue, the silalkylene structure and the silarylene structure can be exemplified.

Specific examples of the siloxane bond and the silylene group (including silalkylene and silarylene structures) of W include the following groups:

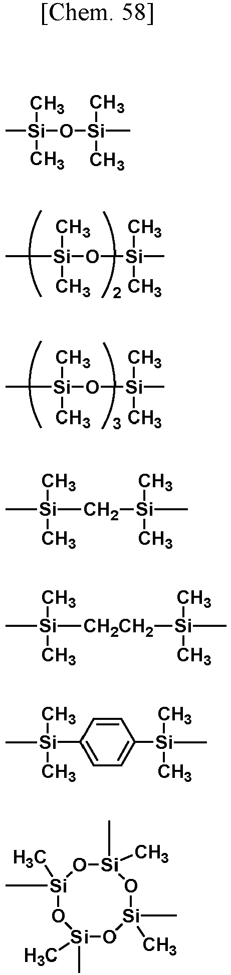

In the above formula (3), L is an alkylene group having 1 to 4 carbon atoms such as methylene, ethylene, propylene or butylene, which may be used alone or in combination. From the viewpoint of the compatibility with fluorine chains, 1 is an integer of 1 to 20, preferably an integer of 1 to 10.

In the above formula (3), Xs are each independently a hydroxyl group or a hydrolyzable group. Examples of X include a hydroxyl group, alkoxy groups having 1 to 10 carbon atoms such as methoxy, ethoxy, propoxy, isopropoxy and butoxy, alkoxyalkoxy groups having 2 to 10 carbon atoms such as methoxymethoxy and methoxyethoxy, acyloxy groups having 1 to 10 carbon atoms such as acetoxy, alkenyloxy groups having 2 to 10 carbon atoms such as isopropenoxy, halogen atoms such as chlorine, bromine and iodine, oxime groups, isocyanate groups and cyanate groups. Among these, a methoxy group, an ethoxy group, an isopropenoxy group or a chloro group is preferred.

In the above formula (3), R is an alkyl group having 1 to 4 carbon atoms, such as methyl, ethyl, propyl or butyl, or a phenyl group, and among these, a methyl group is preferred. n is independently an integer of 1 to 3, preferably 2 or 3 for each terminal silyl group, and is more preferably 3 from the viewpoint of reactivity and adhesion to a substrate.

m is independently an integer of 1 to 5, preferably an integer of 1 to 3, and especially preferably 1 because adhesion to a substrate deteriorates if m is less than 1, and an adverse effect is exerted to the performance due to high terminal alkoxy value if m is 6 or more.

Examples of the fluoropolyether-group-containing polymer represented by the above formula (3) include those represented by the following formula. In each formula, the number of repetition (or degree of polymerization) of each repeating unit constituting the fluorooxyalkyl group or the fluorooxyalkylene group (mono- or divalent fluorooxyalkylene-group-containing polymer residue) can be any number that satisfies the above formulas (4) and (5): 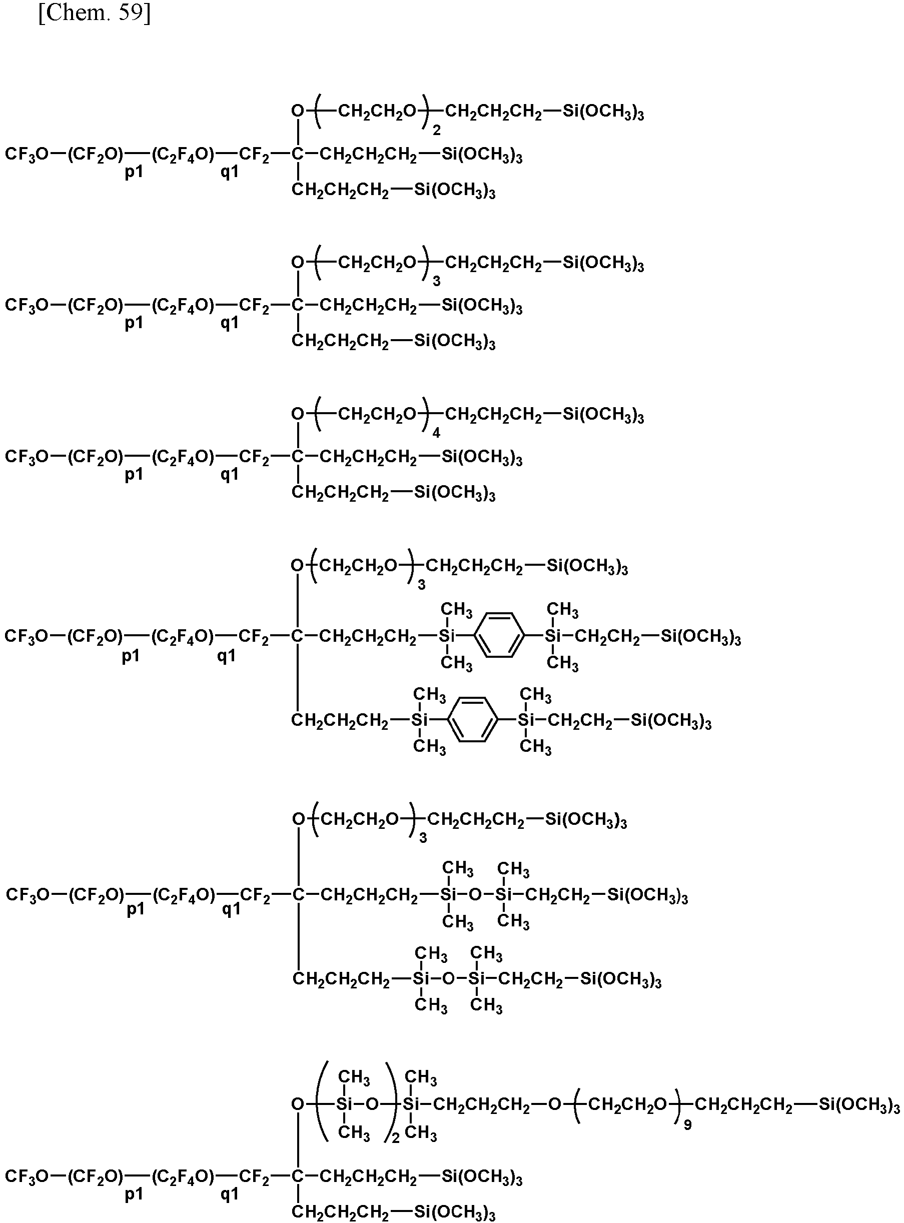 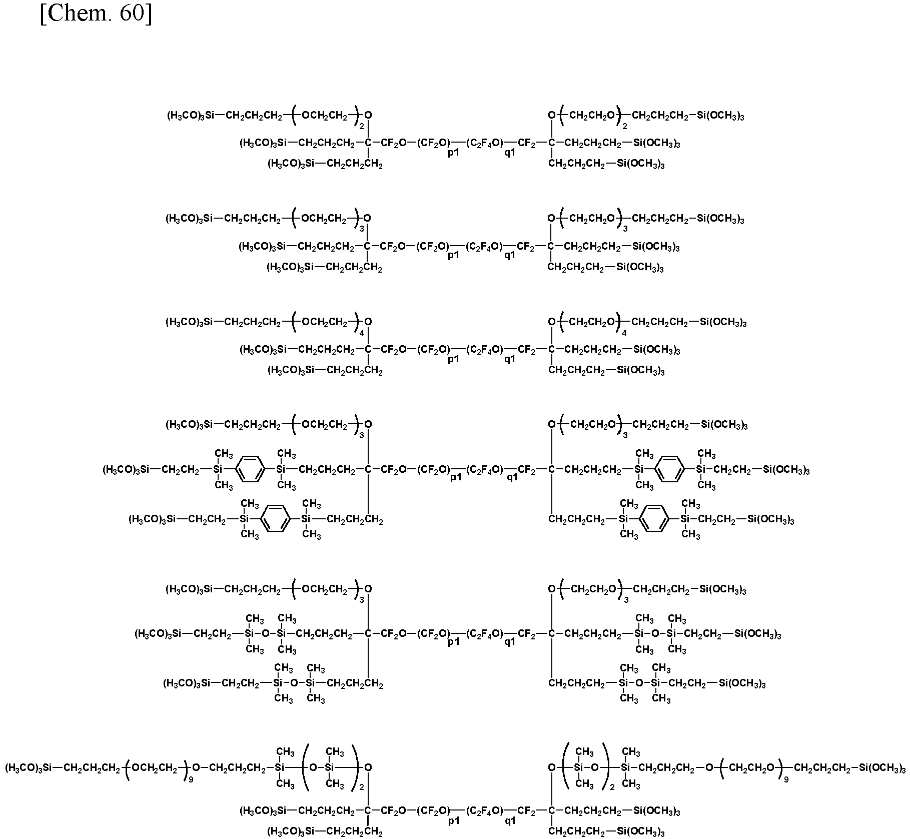 wherein p1 is an integer of 5 to 100, q1 is an integer of 5 to 100, and p1 + q1 is an integer of 10 to 105.

As a method for preparing the fluoropolyether-group-containing polymer represented by the above formula (3) when α is 1 (that is, Rf is a monovalent fluorooxyalkylene-group-containing polymer residue), for example, the following method can be recited.

A fluorooxyalkyl-group-containing polymer having, at one molecular chain terminal, an olefin moiety with a polyether group on the chain, and two olefin moieties free of a polyether group on the chain is dissolved in a solvent, for example, in a fluorine-based solvent such as 1,3-bis(trifluoromethyl)benzene, and an organic silicon compound having a SiH group and a hydrolyzable terminal group in the molecule, such as trimethoxysilane is mixed. The mixture is aged in the presence of a hydrosilylation catalyst, for example, a solution of chloroplatinic acid/vinyl siloxane complex in toluene, at a temperature of 40 to 120°C, preferably 60 to 100°C, more preferably about 80°C for 1 to 72 hours, preferably 20 to 36 hours, more preferably about 24 hours.

As another method for preparing the fluoropolyether-group-containing polymer represented by the above formula (3) when α is 1, for example, the following method can be recited.

A fluorooxyalkyl-group-containing polymer having, at one molecular chain terminal, an olefin moiety with a polyether group on the chain, and two olefin moieties free of a polyether group on the chain is dissolved in a solvent, for example, in a fluorine-based solvent such as 1,3-bis(trifluoromethyl)benzene, and an organic silicon compound having a SiH group and a hydrolyzable terminal group (halogen atom) in the molecule, such as trichlorosilane is mixed. The mixture is aged in the presence of a hydrosilylation catalyst, for example, a solution of chloroplatinic acid/vinyl siloxane complex in toluene, at a temperature of 40 to 120°C, preferably 60 to 100°C, more preferably about 80°C for 1 to 72 hours, preferably 20 to 36 hours, more preferably about 24 hours. After the aging, the substituent (halogen atom) on the silyl group may be converted, for example, to a methoxy group.

In place of the organic silicon compound having a SiH group and a hydrolyzable terminal group in the molecule, a SiH-group-containing organic silicon compound free of a hydrolyzable terminal group may be used, and as such an organic silicon compound, an organic silicon compound free of a hydrolyzable terminal group and having two or more SiH groups in the molecule is used. At this time, in the same manner as the above method, after reaction between the fluorooxyalkyl-group-containing polymer having, at one molecular chain terminal, an olefin moiety with a polyether group on the chain, and two olefin moieties free of a polyether group on the chain, and the organic silicon compound free of a hydrolyzable terminal group and having two or more SiH groups in the molecule, the reaction product having a SiH group at the polymer terminal and the organic silicon compound having an olefin moiety and a hydrolyzable terminal group in the molecule, such as allyltrimethoxysilane are mixed, and the mixture is aged in the presence of a hydrosilylation catalyst, for example, a solution of chloroplatinic acid/vinyl siloxane complex in toluene, at a temperature of 40 to 120°C, preferably 60 to 100°C, more preferably about 80°C for 1 to 72 hours, preferably 20 to 36 hours, more preferably about 24 hours.

Here, examples of the fluorooxyalkyl-group-containing polymer having, at one molecular chain terminal, an olefin moiety with a polyether group on the chain, and two olefin moieties free of a polyether group on the chain include a fluorooxyalkyl-group-containing polymer represented by the following general formula (8): 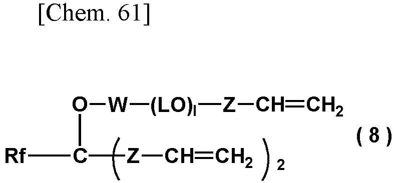 wherein Rf, W, L and 1 are as defined above, Z is a single bond or a divalent hydrocarbon group, and the hydrocarbon group may contain a silicon atom and/or siloxane bond.

In the above formula (8), Z is a single bond or a divalent hydrocarbon group, and the divalent hydrocarbon group is preferably a divalent hydrocarbon group having 1 to 8, especially 1 to 4 carbon atoms, and specific examples of Z include alkylene groups having 1 to 8 carbon atoms such as methylene, ethylene, propylene (trimethylene, methylethylene), butylene (tetramethylene, methylpropylene), hexamethylene and octamethylene, and alkylene groups including an arylene group having 6 to 8 carbon atoms such as phenylene (e.g., alkylene-arylene groups having 7 to 8 carbon atoms). Z is preferably a linear alkylene group having 1 to 4 carbon atoms.

Preferred examples of the fluorooxyalkyl-group-containing polymer represented by (8) are as follows. In each formula, the number of repetition (or degree of polymerization) of each repeating unit constituting the fluorooxyalkyl group (monovalent fluorooxyalkylene-group-containing polymer residue) can be any number that satisfies the above formula (4) in the above Rf: 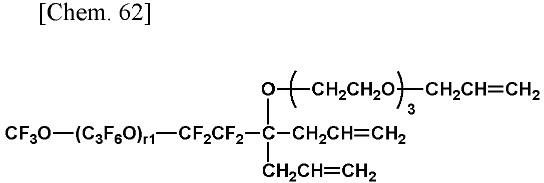 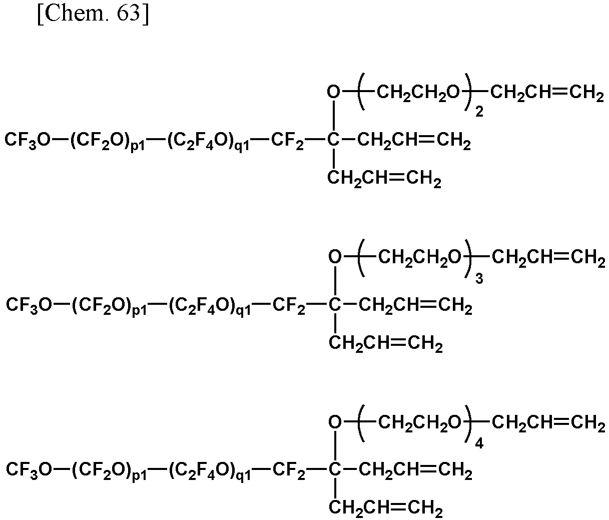 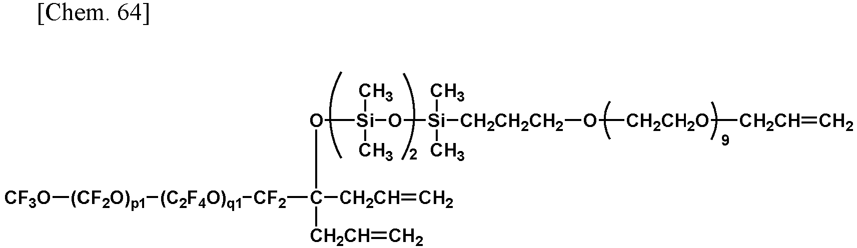 wherein r1, p1 and q1 are as defined above.

As a method for preparing the fluorooxyalkyl-group-containing polymer represented by the above formula (8), for example, a fluorooxyalkyl-group-containing polymer having, at one molecular chain terminal, a hydroxyl group, and two olefin moieties free of a polyether group on the chain, and an olefin-containing polyether group introducing agent are aged in the presence of a base, and additionally a solvent as needed at a temperature of 0 to 90°C, preferably 40 to 70°C, more preferably about 50°C ± 5°C for 1 to 48 hours, preferably 10 to 40 hours, more preferably about 15 ± 3 hours.

As another method for preparing the fluorooxyalkyl-group-containing polymer represented by the above formula (8), for example, a fluorooxyalkyl-group-containing polymer having, at one molecular chain terminal, a hydroxyl group, and two olefin moieties free of a polyether group on the chain, and an organic silicon compound free of a hydrolyzable terminal group and having two or more SiH groups in the molecule undergo dehydrogenation in the presence of a dehydrogenation catalyst by using a solvent as needed at a temperature of 0 to 60°C, preferably 15 to 35°C, more preferably about 25°C for 10 minutes to 24 hours, preferably 30 minutes to 2 hours, more preferably about 1 hour, and thus a fluorooxyalkyl-group-containing polymer having a SiH group at one molecular chain terminal is obtained.

Subsequently, the fluorooxyalkyl-group-containing polymer having a SiH group at one molecular chain terminal, and a polyether compound having two intramolecular olefin moieties (e.g., polyalkylene oxide compound blocked with an alkenyloxy group at both molecule chain terminals) are dissolved in a solvent, for example, in a fluorine-based solvent such as 1,3-bis(trifluoromethyl)benzene, and the solution is aged in the presence of a hydrosilylation catalyst, for example, a solution of chloroplatinic acid/vinyl siloxane complex in toluene, at a temperature of 40 to 120°C, preferably 60 to 100°C, more preferably about 80°C for 1 to 72 hours, preferably 20 to 36 hours, more preferably about 24 hours.

Here, specific examples of the fluorooxyalkyl-group-containing polymer having, at one molecular chain terminal, a hydroxyl group, and two olefin moieties free of a polyether group on the chain to be used in preparation of the fluorooxyalkyl-group-containing polymer represented by the formula (8) are as follows: 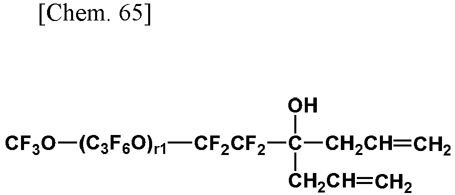 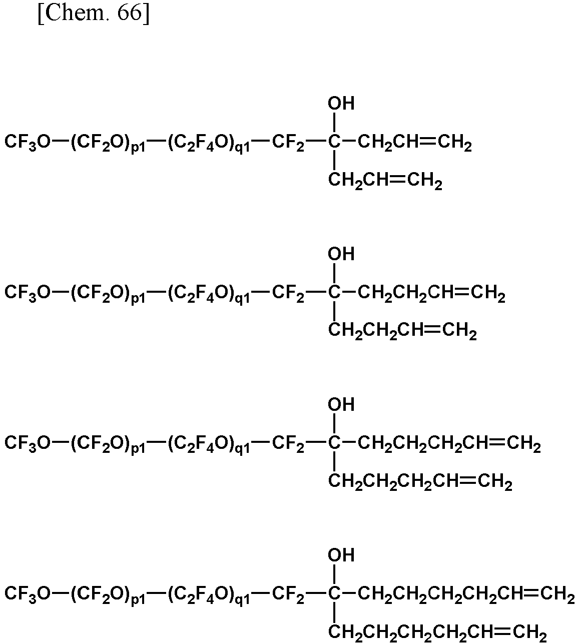 wherein r1, p1 and q1 are as defined above.

As a method for preparing the fluorooxyalkyl-group-containing polymer having, at one molecular chain terminal, a hydroxyl group, and two olefin moieties free of a polyether group on the chain, for example, a perfluorooxyalkyl-group-containing polymer having an acid fluoride group (-C(=O)-F) at one molecular chain terminal, a Grignard reagent as a nucleophilic reagent, and a solvent, for example, 1,3-bis(trifluoromethyl)benzene, tetrahydrofuran are mixed, and the mixture is aged at 0 to 80°C, preferably 50 to 70°C, more preferably about 60°C for 1 to 6 hours, preferably 3 to 5 hours, more preferably about 4 hours.

Here, in the perfluorooxyalkyl-group-containing polymer, the group at one molecular chain terminal can be acid halide, acid anhydride, ester, carboxylic acid, amid besides the aforementioned acid fluoride.

Specific examples of the perfluorooxyalkyl-group-containing polymer having such a group at one molecular chain terminal are as follows: 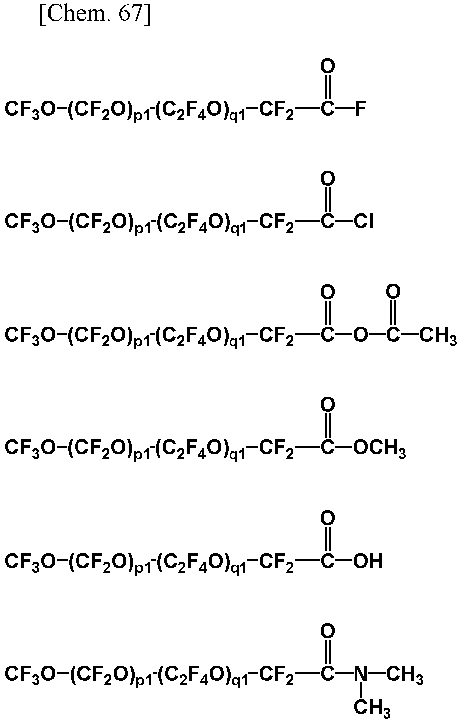 wherein p1 and q1 are as defined above.

Examples of the nucleophilic reagent to be used in preparation of the fluorooxyalkyl-group-containing polymer having, at one molecular chain terminal, a hydroxyl group, and two olefin moieties free of a polyether group on the chain include allylmagnesium halide, 3-butenylmagnesium halide, 4-pentenylmagnesium halide, and 5-hexenylmagnesium halide. Also, a corresponding lithium reagent may be used.

The use amount of the nucleophilic reagent can be 2 to 5 equivalents, more preferably 2.5 to 3.5 equivalents, further preferably about 3 equivalents per 1 equivalent of reactive terminal groups in the perfluorooxyalkyl-group-containing polymer.

Examples of the solvent to be used in preparation of the fluorooxyalkyl-group-containing polymer having, at one molecular chain terminal, a hydroxyl group, and two olefin moieties free of a polyether group on the chain include, as fluorine-based solvents, 1,3-bis(trifluoromethyl)benzene, trifluoromethylbenzene, hydrofluoroether (HFE) solvents (trade name: Novec series, available from 3M) such as methyl nonafluorobutyl ether, methyl nonafluoroisobutyl ether, ethyl nonafluorobutyl ether, ethyl nonafluoroisobutyl ether and 1,1,1,2,3,4,4,5,5,5-decafluoro-3-methoxy-2-(trifluoromethyl)pentane, and perfluoro solvents composed of completely fluorinated compound (trade name: Fluorinert series, available from 3M). Further, as the organic solvent, ether solvents such as tetrahydrofuran (THF), monoethylene glycol dimethylether, diethylene glycol dimethylether, triethylene glycol dimethylether, tetraethylene glycol dimethylether, and dioxane may be used.

The use amount of the solvent can be 10 to 300 parts by weight, preferably 100 to 200 parts by weight, further preferably about 150 parts by weight per 100 parts by weight of the perfluorooxyalkyl-group-containing polymer.

Subsequently, the reaction is suspended, and the water layer and the fluorine solvent layer are separated from each other by a separating operation. The obtained fluorine solvent layer is further washed with an organic solvent and the solvent is distilled off to obtain the fluorooxyalkyl-group-containing polymer having, at one molecular chain terminal, a hydroxyl group, and two olefin moieties free of a polyether group on the chain.

Examples of the olefin-containing polyether group introducing agent to be used in preparation of the fluorooxyalkyl-group-containing polymer represented by the formula (8) include olefin-containing polyether halides, and specific examples of the olefin-containing polyether halides are as follows: 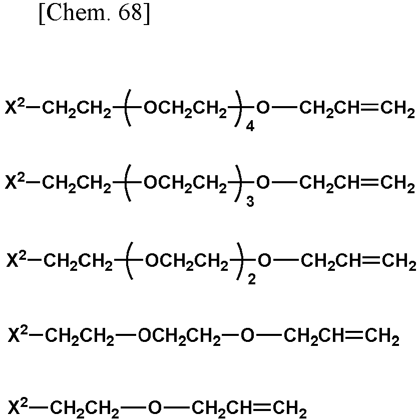 wherein X² is an eliminable functional group such as a halogen atom including chlorine, bromine and iodine, and a sulfonyl ester group including methanesulfonyl ester and p-toluenesulfonyl ester.

The use amount of the olefin-containing polyether group introducing agent can be 1 to 15 equivalents, more preferably 3 to 9 equivalents, further preferably about 7 equivalents per 1 equivalent of reactive terminal groups in the fluorooxyalkyl-group-containing polymer having, at one molecular chain terminal, a hydroxyl group, and two olefin moieties free of a polyether group on the chain.

Examples of the base to be used in preparation of the fluorooxyalkyl-group-containing polymer represented by the formula (8) include amines and alkali metal bases, and specific examples of amines include triethylamine, diisopropylethylamine, pyridine, DBU, and imidazole. Examples of the alkali metal bases include sodium hydroxide, potassium hydroxide, sodium hydride, potassium hydride, alkyllithium, t-butoxypotassium, lithium diisopropylamide, lithium bis(trimethylsilyl)amide, sodium bis(trimethylsilyl)amide, and potassium bis(trimethylsilyl)amide.

The use amount of the base can be 1 to 20 equivalents, more preferably 10 to 18 equivalents, further preferably about 13 equivalents per 1 equivalent of reactive terminal groups in the fluorooxyalkyl-group-containing polymer having, at one molecular chain terminal, a hydroxyl group, and two olefin moieties free of a polyether group on the chain.

**In** preparation of the fluorooxyalkyl-group-containing polymer represented by the formula (8), tetrabutylammonium halide, alkali metal halide or the like may be used as an additive for improving the reactivity. Specific examples of the additive include tetrabutylammonium chloride, tetrabutylammonium bromide, tetrabutylammonium iodide, tetrabutylammonium, tetrabutylammonium hydrogen sulfate, sodium iodide, potassium iodide, cesium iodide, and crown ether. These additives improve the reactivity by catalytic halogen exchange with the olefin-containing polyether introducing agent in the reaction system, and the crown ether improves the reactivity by coordinating with metal.

The use amount of the additive can be 0.005 to 0.1 equivalents, more preferably 0.01 to 0.05 equivalents, further preferably about 0.02 equivalents per 1 equivalent of reactive terminal groups in the fluorooxyalkyl-group-containing polymer having, at one molecular chain terminal, a hydroxyl group, and two olefin moieties free of a polyether group on the chain.

**In** preparation of the fluorooxyalkyl-group-containing polymer represented by the formula (8), a solvent may be used. Although the solvent is not necessarily used, examples of the solvent to be used include, as fluorine-based solvents, fluorine-containing aromatic hydrocarbon solvents such as 1,3-bis(trifluoromethyl)benzene and trifluoromethylbenzene, hydrofluoroether (HFE) solvents (trade name: Novec series, available from 3M) such as 1,1,1,2,3,4,4,5,5,5-decafluoro-3-methoxy-2-(trifluoromethyl)pentane, and perfluoro solvents composed of completely fluorinated compound (trade name: Fluorinert series, available from 3M). Further, as an organic solvent, dimethylformamide, dimethylacetamide, dimethylsulfoxide, acetnitrile, THF and so on may be used.

The use amount of the solvent can be 10 to 300 parts by weight, preferably 30 to 150 parts by weight, further preferably about 50 parts by weight per 100 parts by weight of the fluorooxyalkyl-group-containing polymer having, at one molecular chain terminal, a hydroxyl group, and two olefin moieties free of a polyether group on the chain.

As the organic silicon compound free of a hydrolyzable terminal group and having two or more SiH groups in the molecule, to be used in preparation of the fluorooxyalkyl-group-containing polymer represented by the formula (8) in reaction between the fluorooxyalkyl-group-containing polymer having, at one molecular chain terminal, a hydroxyl group, and two olefin moieties free of a polyether group on the chain, and the organic silicon compound free of a hydrolyzable terminal group and having two or more SiH groups in the molecule, compounds represented by the following general formulas (9) to (11) are preferred: 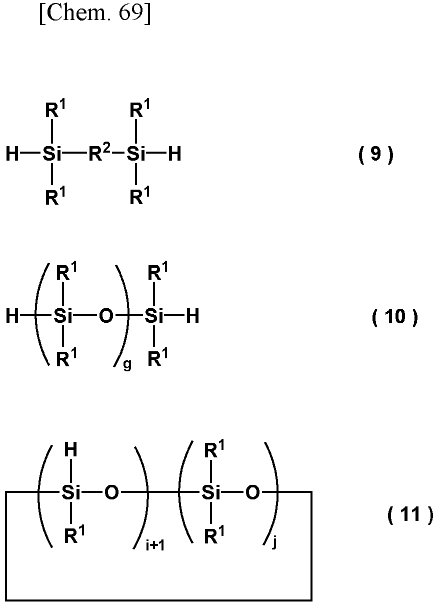 wherein R¹, R², g and j are as defined above. i is an integer of 2 to 9, preferably an integer of 2 to 4, and i + j is an integer of 2 to 9.

Examples of such an organic silicon compound free of a hydrolyzable terminal group and having two or more SiH groups in the molecule are as follows:

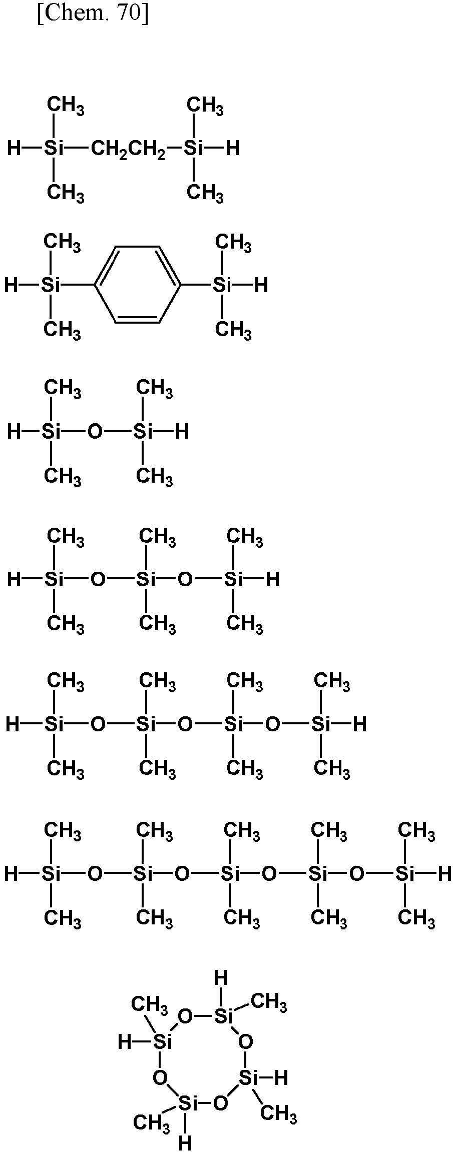

In preparation of the fluorooxyalkyl-group-containing polymer represented by the formula (8), the use amount of the organic silicon compound free of a hydrolyzable terminal group and having two or more SiH groups in the molecule in reaction between the fluorooxyalkyl-group-containing polymer having, at one molecular chain terminal, a hydroxyl group, and two olefin moieties free of a polyether group on the chain, and the organic silicon compound free of a hydrolyzable terminal group and having two or more SiH groups in the molecule can be 7 to 30 equivalents, more preferably 5 to 20 equivalents, further preferably about 10 equivalents per 1 equivalent of reactive terminal groups in the fluorooxyalkyl-group-containing polymer having, at one molecular chain terminal, a hydroxyl group, and two olefin moieties free of a polyether group on the chain.

Examples of the dehydrogenation catalyst to be used in preparation of the fluorooxyalkyl-group-containing polymer represented by the formula (8) include platinum group metal catalysts such as rhodium, palladium, and ruthenium, and boron catalysts, and specific examples include platinum group metal catalysts such as tetrakis(triphenylphosphine) palladium, and chlorotris(triphenylphosphine)rhodium, and boron catalysts such as tris(pentafluorophenyl)boran.

The use amount of the dehydrogenation catalyst can be 0.01 to 0.0005 equivalents, more preferably 0.007 to 0.001 equivalents, further preferably about 0.005 equivalents per 1 equivalent of reactive terminal groups in the fluorooxyalkyl-group-containing polymer having, at one molecular chain terminal, a hydroxyl group, and two olefin moieties free of a polyether group on the chain.

Subsequently, the reaction is suspended, and the water layer and the fluorine solvent layer are separated from each other by a separating operation. The obtained fluorine solvent layer is further washed with an organic solvent and the solvent is distilled off to obtain the fluorooxyalkyl-group-containing polymer having a SiH group at one molecular chain terminal.

In preparation of the fluorooxyalkyl-group-containing polymer represented by the formula (8), as the polyether compound having two intramolecular olefin moieties in reaction between the fluorooxyalkyl-group-containing polymer having a SiH group at one molecular chain terminal, and the polyether compound having two intramolecular olefin moieties, for example, a polyalkylene oxide compound blocked with an alkenyloxy group at both molecule chain terminals, such as polyethylene oxide blocked with an allyloxy group at both molecular chain terminals shown below can be recited. 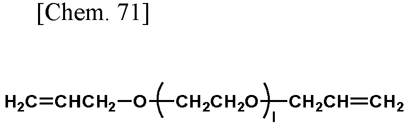 wherein 1 is as defined above.

Specific examples of the polyether compound having an intramolecular olefin moiety, such as a polyalkylene oxide compound blocked with an alkenyloxy group at both molecule chain terminals include polyethylene oxide compounds that are blocked with an allyloxy group at both molecular chain terminals, such as Uniox AA-480R and Uniox AA680 available from NOF Corp.

The use amount of the polyether compound having an intramolecular olefin moiety can be 1 to 20 equivalents, more preferably 8 to 15 equivalents, further preferably about 10 equivalents per 1 equivalent of reactive terminal groups in the fluorooxyalkyl-group-containing polymer having a SiH group at one molecular chain terminal.

In preparation of the fluorooxyalkyl-group-containing polymer represented by the formula (8), as the hydrosilylation catalyst in reaction between the fluorooxyalkyl-group-containing polymer having a SiH group at one molecular chain terminal, and the polyether compound having two intramolecular olefin moieties, for example, platinum group metal based catalysts including platinum black, chloroplatinic acid, alcohol-modified chloroplatinic acid, complexes of chloroplatinic acid with olefin, aldehyde, vinyl siloxane, and acetylene alcohol, tetrakis(triphenylphosphine)palladium, and chlorotris(triphenylphosphine)rhodium can be recited. Preferably are platinum-based compounds such as vinyl siloxane coordination compounds.

The use amount of the hydrosilylation catalyst can be 0.1 to 100 ppm, more preferably 1 to 50 ppm in terms of transition metal (weight) per weight of the fluorooxyalkyl-group-containing polymer having a SiH group at one molecular chain terminal.

As the solvent to be used in preparation of the fluoropolyether group (monovalent fluorooxyalkylene-group-containing polymer residue)-containing polymer represented by the above formula (3) when α is 1, fluorine-based solvents are preferred, and examples of the fluorine-based solvents include 1,3-bis(trifluoromethyl)benzene, trifluoromethylbenzene, hydrofluoroether (HFE) solvents (trade name: Novec series, available from 3M) such as methyl nonafluorobutyl ether, methyl nonafluoroisobutyl ether, ethyl nonafluorobutyl ether, ethyl nonafluoroisobutyl ether and 1,1,1,2,3,4,4,5,5,5-decafluoro-3-methoxy-2-(trifluoromethyl)pentane, and perfluoro solvents composed of completely fluorinated compound (trade name: Fluorinert series, available from 3M).

The use amount of the solvent can be 10 to 300 parts by weight, preferably 50 to 150 parts by weight, further preferably about 100 parts by weight per 100 parts by weight of the fluorooxyalkyl-group-containing polymer having, at one molecular chain terminal, an olefin moiety with a polyether group on the chain, and two olefin moieties free of a polyether group on the chain.

Also, in preparation of the fluoropolyether-group-containing polymer represented by formula (3) when α is 1, as the organic silicon compound having a SiH group and a hydrolyzable terminal group in the molecule, compounds represented by the following general formulas (12) to (15) are preferred: 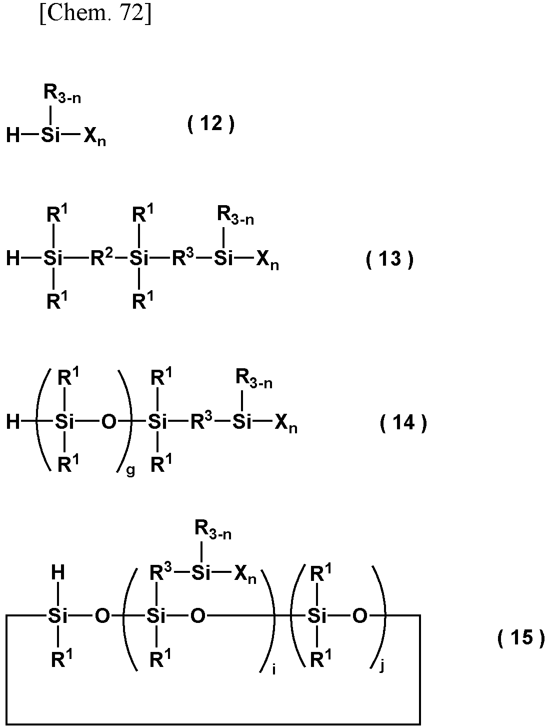 wherein R, X, n, R¹, R², g, i, j and i +j are as defined above. R³ is a divalent hydrocarbon group having 2 to 8 carbon atoms.

Here, examples of the divalent hydrocarbon group having 2 to 8 carbon atoms, preferably 2 to 3 carbon atoms of R³ include alkylene groups such as methylene, ethylene, propylene (trimethylene, methylethylene), butylene (tetramethylene, methylpropylene), hexamethylene and octamethylene, arylene groups such as phenylene, or combinations of two or more of these groups (e.g., alkylene-arylene groups), and further, among these, an ethylene group and a trimethylene group are preferred.

Examples of the organic silicon compound having a SiH group and a hydrolyzable terminal group in the molecule include trimethoxysilane, triethoxysilane, tripropoxysilane, triisopropoxysilane, tributoxysilane, triisopropenoxysilane, triacetoxysilane, trichlorosilane, tribromosilane, triiodosilane, and the following silanes.

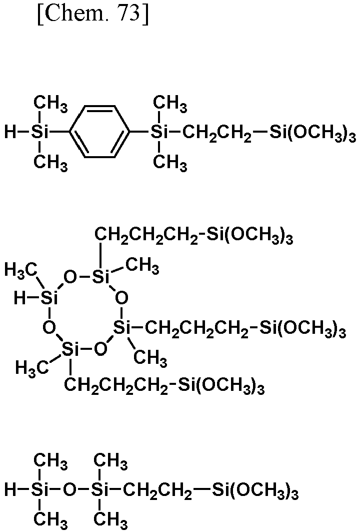

In preparation of the fluoropolyether-group-containing polymer represented by the formula (3) when α is 1, the use amount of the organic silicon compound having a SiH group and a hydrolyzable terminal group in the molecule in reaction between the fluorooxyalkyl-group-containing polymer having, at one molecular chain terminal, an olefin moiety with a polyether group on the chain, and two olefin moieties free of a polyether group on the chain, and the organic silicon compound having a SiH group and a hydrolyzable terminal group in the molecule can be 3 to 12 equivalents, more preferably 5 to 7 equivalents, further preferably about 6 equivalents, per 1 equivalent of reactive terminal groups of the fluorooxyalkyl-group-containing polymer having, at one molecular chain terminal, an olefin moiety with a polyether group on the chain, and two olefin moieties free of a polyether group on the chain.

Also, in preparation of the fluoropolyether-group-containing polymer represented by formula (3) when α is 1, as the organic silicon compound free of a hydrolyzable terminal group and having two or more SiH groups in the molecule, compounds represented by the following general formulas (9) to (11) are preferred: 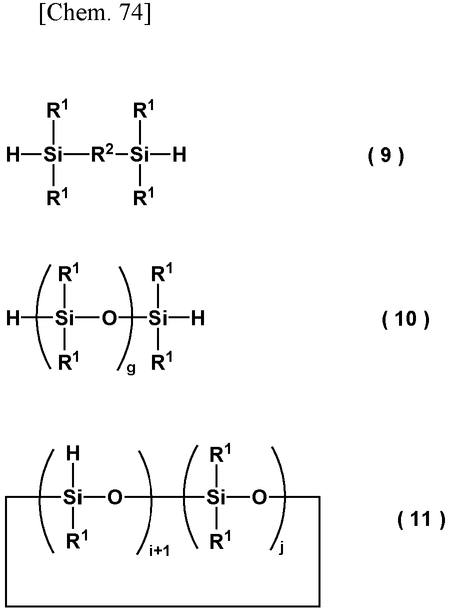 wherein R¹, R², g, j, i and i + j are as defined above.

Examples of such an organic silicon compound free of a hydrolyzable terminal group and having two or more SiH groups in the molecule are as follows:

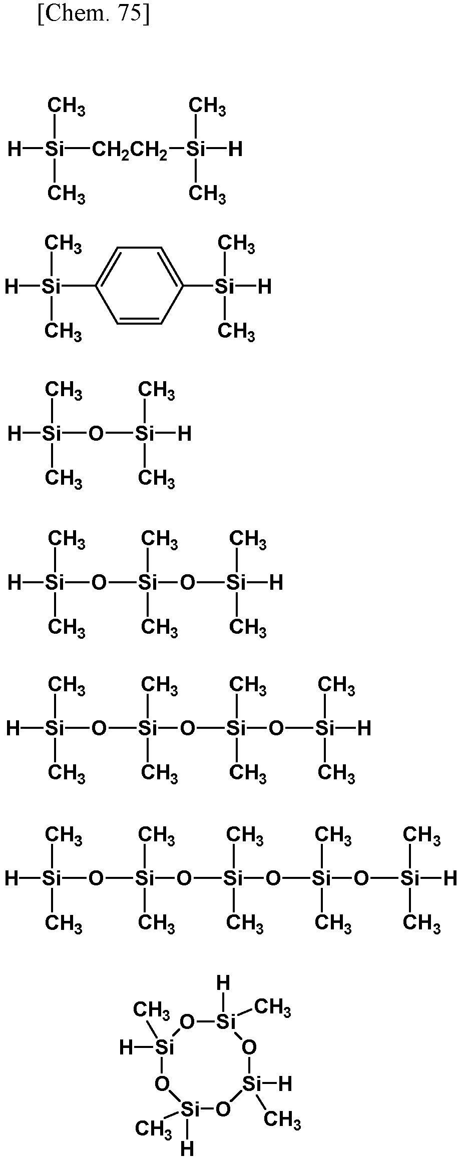

In preparation of the fluoropolyether-group-containing polymer represented by the formula (3) when α is 1, the use amount of the organic silicon compound free of a hydrolyzable terminal group and having two or more SiH groups in the molecule in reaction between the fluorooxyalkyl-group-containing polymer having, at one molecular chain terminal, an olefin moiety with a polyether group on the chain, and two olefin moieties free of a polyether group on the chain, and the organic silicon compound free of a hydrolyzable terminal group and having two or more SiH groups in the molecule can be 7 to 30 equivalents, more preferably 10 to 20 equivalents, further preferably about 15 equivalents per 1 equivalent of reactive terminal groups in the fluorooxyalkyl-group-containing polymer having, at one molecular chain terminal, an olefin moiety with a polyether group on the chain, and two olefin moieties free of a polyether group on the chain.

Also, in preparation of the fluoropolyether-group-containing polymer represented by formula (3) when α is 1, as the organic silicon compound having an olefin moiety and a hydrolyzable terminal group in the molecule, compounds represented by the following general formula (16) are preferred: 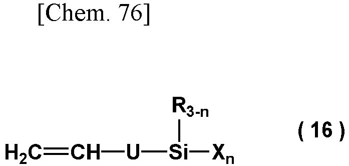 wherein R, X and n are as defined above. U is a single bond, or a divalent hydrocarbon group having 1 to 6 carbon atoms.

In the above formula (16), U is a single bond or a divalent hydrocarbon group having 1 to 6 carbon atoms, and specific examples of the divalent hydrocarbon group having 1 to 6 carbon atoms include alkylene groups such as methylene, ethylene, propylene (trimethylene, methylethylene), butylene (tetramethylene, methylpropylene) and hexamethylene, and a phenylene group. U is preferably a single bond or a methylene group.

In preparation of the fluoropolyether-group-containing polymer represented by the formula (3) when α is 1, the use amount of the organic silicon compound having an olefin moiety and a hydrolyzable terminal group in the molecule in reaction between the reaction product of the fluorooxyalkyl-group-containing polymer having, at one molecular chain terminal, an olefin moiety with a polyether group on the chain, and two olefin moieties free of a polyether group on the chain, and the organic silicon compound free of a hydrolyzable terminal group and having two or more SiH groups in the molecule, and the organic silicon compound having an olefin moiety and a hydrolyzable terminal group in the molecule can be 3 to 10 equivalents, more preferably 5 to 7 equivalents, further preferably about 6 equivalents per 1 equivalent of reactive terminal groups in the reaction product between the fluorooxyalkyl-group-containing polymer having, at one molecular chain terminal, an olefin moiety with a polyether group on the chain, and two olefin moieties free of a polyether group on the chain, and the organic silicon compound free of a hydrolyzable terminal group and having two or more SiH groups in the molecule.

In preparation of the fluoropolyether-group-containing polymer represented by the formula (3) when α is 1, as the hydrosilylation catalyst, platinum group metal based catalysts including platinum black, chloroplatinic acid, alcohol-modified chloroplatinic acid, complexes of chloroplatinic acid with olefin, aldehyde, vinyl siloxane, and acetylene alcohol, tetrakis(triphenylphosphine)palladium, and chlorotris(triphenylphosphine)rhodium can be recited. Preferably are platinum-based compounds such as vinyl siloxane coordination compounds.

The use amount of the hydrosilylation catalyst can be 0.1 to 100 ppm, more preferably 1 to 50 ppm in terms of transition metal (weight) per weight of the fluorooxyalkyl-group-containing polymer having, at one molecular chain terminal, an olefin moiety with a polyether group on the chain, and two olefin moieties free of a polyether group on the chain, or the weight of the reaction product of this polymer and the organic silicon compound free of a hydrolyzable terminal group and having two or more SiH groups in the molecule.

Thereafter, the solvent and the unreacted material are distilled off under reduced pressure to obtain an objective compound.

For example, when a compound represented by the following formula: 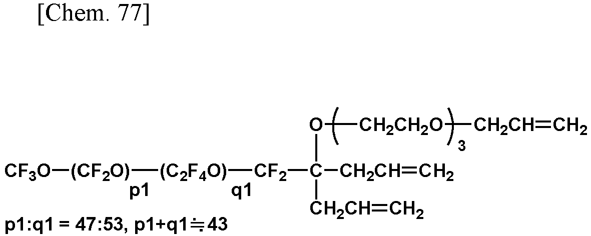 is used as the fluorooxyalkyl-group-containing polymer having, at one molecular chain terminal, an olefin moiety with a polyether group on the chain, and two olefin moieties free of a polyether group on the chain, and trimethoxysilane is used as the organic silicon compound having a SiH group in the molecule and a hydrolyzable terminal group, the compound represented by the following formula is obtained:

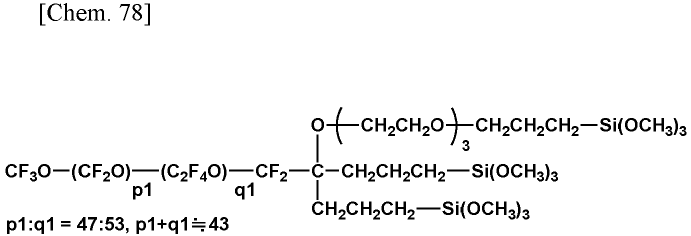

As a method for preparing the fluoropolyether-group-containing polymer represented by the above formula (3) when α is 2 (that is, Rf is a divalent fluorooxyalkylene-group-containing polymer residue), for example, the following method can be recited.

A fluorooxyalkylene-group-containing polymer having, at both molecular chain terminals, an olefin moiety with a polyether group on the chain, and two olefin moieties free of a polyether group on the chain is dissolved in a solvent, for example, in a fluorine-based solvent such as 1,3-bis(trifluoromethyl)benzene, and an organic silicon compound having a SiH group and a hydrolyzable terminal group in the molecule, such as trimethoxysilane is mixed. The mixture is aged in the presence of a hydrosilylation catalyst, for example, a solution of chloroplatinic acid/vinyl siloxane complex in toluene, at a temperature of 40 to 120°C, preferably 60 to 100°C, more preferably about 80°C for 1 to 72 hours, preferably 20 to 36 hours, more preferably about 24 hours.

As another method for preparing the fluoropolyether-group-containing polymer represented by the above formula (3) when α is 2, for example, the following method can be recited.

A fluorooxyalkylene-group-containing polymer having, at both molecular chain terminals, an olefin moiety with a polyether group on the chain, and two olefin moieties free of a polyether group on the chain is dissolved in a solvent, for example, in a fluorine-based solvent such as 1,3-bis(trifluoromethyl)benzene, and an organic silicon compound having a SiH group and a hydrolyzable terminal group (halogen atom) in the molecule, such as trichlorosilane is mixed. The mixture is aged in the presence of a hydrosilylation catalyst, for example, a solution of chloroplatinic acid/vinyl siloxane complex in toluene, at a temperature of 40 to 120°C, preferably 60 to 100°C, more preferably about 80°C for 1 to 72 hours, preferably 20 to 36 hours, more preferably about 24 hours. After the aging, the substituent (halogen atom) on the silyl group may be converted, for example, to a methoxy group.

**In** place of the organic silicon compound having a SiH group and a hydrolyzable terminal group in the molecule, a SiH-group-containing organic silicon compound free of a hydrolyzable terminal group may be used, and as such an organic silicon compound, an organic silicon compound free of a hydrolyzable terminal group and having two or more SiH groups in the molecule is used. At this time, in the same manner as the above method, after reaction between the fluorooxyalkylene-group-containing polymer having, at both molecular chain terminals, an olefin moiety with a polyether group on the chain, and two olefin moieties free of a polyether group on the chain, and the organic silicon compound free of a hydrolyzable terminal group and having two or more SiH groups in the molecule, the reaction product having the SiH groups at the polymer terminals and the organic silicon compound having an olefin moiety and a hydrolyzable terminal group in the molecule such as allyltrimethoxysilane are mixed, and the mixture is aged in the presence of a hydrosilylation catalyst, for example, a solution of chloroplatinic acid/vinyl siloxane complex in toluene, at a temperature of 40 to 120°C, preferably 60 to 100°C, more preferably about 80°C for 1 to 72 hours, preferably 20 to 36 hours, more preferably about 24 hours.

Here, examples of the fluorooxyalkylene-group-containing polymer having, at both molecular chain terminals, an olefin moiety with a polyether group on the chain, and two olefin moieties free of a polyether group on the chain include a fluorooxyalkylene-group-containing polymer represented by the following general formula (17): 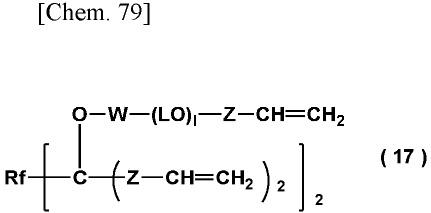 wherein Rf, W, L, l and Z are as defined above.

Preferred examples of the fluorooxyalkylene-group-containing polymer represented by (17) are as follows. In each formula, the number of repetition (or degree of polymerization) of each repeating unit constituting the fluorooxyalkylene group (divalent fluorooxyalkylene-group-containing polymer residue) can be any number that satisfies the above formula (5) in the above Rf: 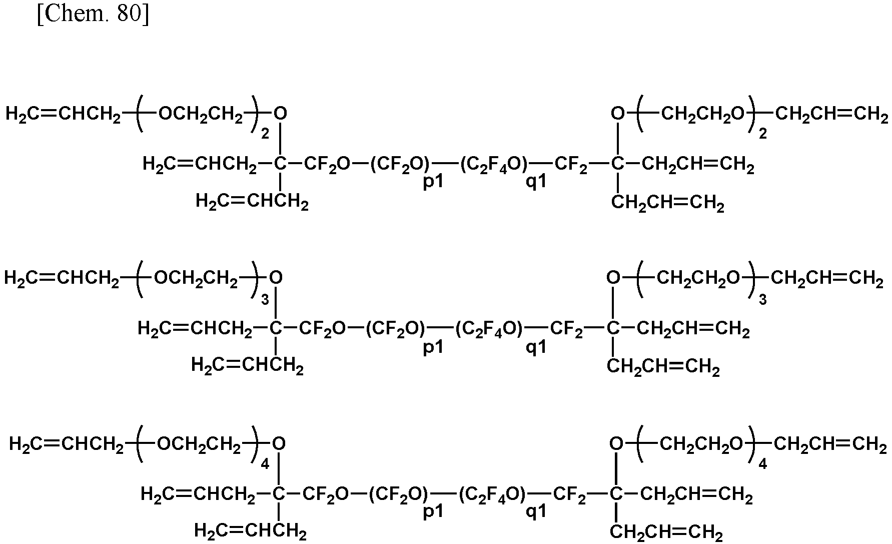 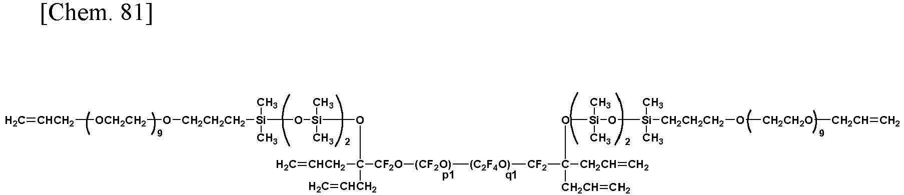 wherein p1 and q1 are as defined above.

As a method for preparing the fluorooxyalkylene-group-containing polymer represented by the above formula (17), for example, a fluorooxyalkylene-group-containing polymer having, at both molecular chain terminals, a hydroxyl group, and two olefin moieties free of a polyether group on the chain, and an olefin-containing polyether group introducing agent are aged in the presence of a base, and additionally a solvent as needed at a temperature of 0 to 90°C, preferably 40 to 70°C, more preferably about 50°C ± 5°C for 1 to 48 hours, preferably 10 to 40 hours, more preferably about 15 ± 3 hours.

As another method for preparing the fluorooxyalkylene-group-containing polymer represented by the above formula (17), for example, a fluorooxyalkylene-group-containing polymer having, at both molecular chain terminals, a hydroxyl group, and two olefin moieties free of a polyether group on the chain, and an organic silicon compound free of a hydrolyzable terminal group and having two or more SiH groups in the molecule undergo dehydrogenation in the presence of a dehydrogenation catalyst by using a solvent as needed at a temperature of 0 to 60°C, preferably 15 to 35°C, more preferably about 25°C for 10 minutes to 24 hours, preferably 30 minutes to 2 hours, more preferably about 1 hour, and thus a fluorooxyalkylene-group-containing polymer having a SiH group at both molecular chain terminals is obtained.

Subsequently, the fluorooxyalkylene-group-containing polymer having a SiH group at both molecular chain terminals, and a polyether compound having two intramolecular olefin moieties (e.g., polyalkylene oxide compound blocked with an alkenyloxy group at both molecule chain terminals) are dissolved in a solvent, for example, in a fluorine-based solvent such as 1,3-bis(trifluoromethyl)benzene, and the solution is aged in the presence of a hydrosilylation catalyst, for example, a solution of chloroplatinic acid/vinyl siloxane complex in toluene, at a temperature of 40 to 120°C, preferably 60 to 100°C, more preferably about 80°C for 1 to 72 hours, preferably 20 to 36 hours, more preferably about 24 hours.

Here, specific examples of the fluorooxyalkylene-group-containing polymer having, at both molecular chain terminals, a hydroxyl group, and two olefin moieties free of a polyether group on the chain to be used in preparation of the fluorooxyalkylene-group-containing polymer represented by the formula (17) are as follows: 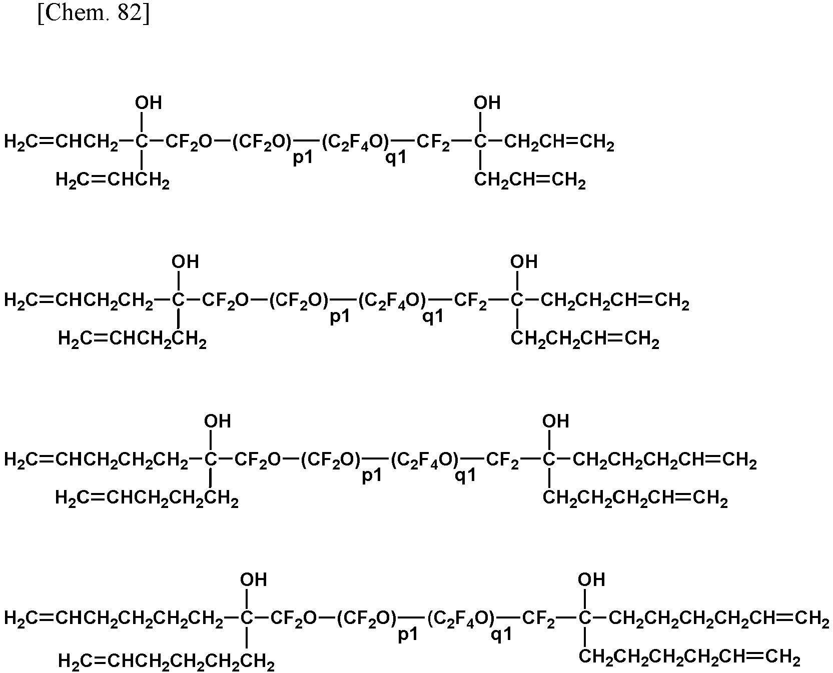 wherein p1 and q1 are as defined above.

As a method for preparing the fluorooxyalkylene-group-containing polymer having, at both molecular chain terminals, a hydroxyl group, and two olefin moieties free of a polyether group on the chain, for example, a perfluorooxyalkylene-group-containing polymer having an acid fluoride group (-C(=O)-F) at both molecular chain terminals, a Grignard reagent as a nucleophilic reagent, and a solvent, for example, 1,3-bis(trifluoromethyl)benzene, tetrahydrofuran are mixed, and the mixture is aged at 0 to 80°C, preferably 50 to 70°C, more preferably about 60°C for 1 to 6 hours, preferably 3 to 5 hours, more preferably about 4 hours.

Here, in the perfluorooxyalkylene-group-containing polymer, the group at both molecular chain terminals can be acid halide, acid anhydride, ester, carboxylic acid, amid besides the aforementioned acid fluoride.

Specific examples of the perfluorooxyalkylene-group-containing polymer having such a group at both molecular chain terminals are as follows: 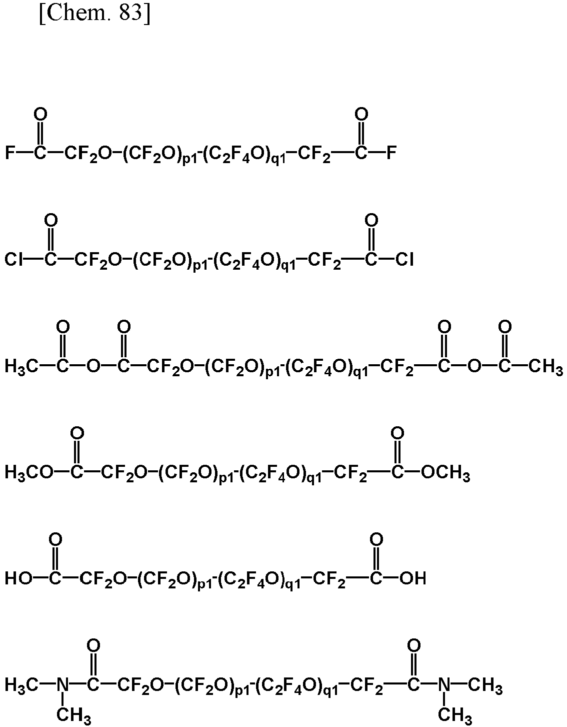 wherein p1 and q1 are as defined above.

Examples of the nucleophilic reagent to be used in preparation of the fluorooxyalkylene-group-containing polymer having, at both molecular chain terminals, a hydroxyl group, and two olefin moieties free of a polyether group on the chain include allylmagnesium halide, 3-butenylmagnesium halide, 4-pentenylmagnesium halide, and 5-hexenylmagnesium halide. Also, a corresponding lithium reagent may be used.

The use amount of the nucleophilic reagent can be 2 to 5 equivalents, more preferably 2.5 to 3.5 equivalents, further preferably about 3 equivalents per 1 equivalent of reactive terminal groups in the perfluorooxyalkylene-group-containing polymer.

Examples of the solvent to be used in preparation of the fluorooxyalkylene-group-containing polymer having, at both molecular chain terminals, a hydroxyl group, and two olefin moieties free of a polyether group on the chain include, as fluorine-based solvents, 1,3-bis(trifluoromethyl)benzene, trifluoromethylbenzene, hydrofluoroether (HFE) solvents (trade name: Novec series, available from 3M) such as methyl nonafluorobutyl ether, methyl nonafluoroisobutyl ether, ethyl nonafluorobutyl ether, ethyl nonafluoroisobutyl ether and 1,1,1,2,3,4,4,5,5,5-decafluoro-3-methoxy-2-(trifluoromethyl)pentane, and perfluoro solvents composed of completely fluorinated compound (trade name: Fluorinert series, available from 3M). Further, as the organic solvent, ether solvents such as tetrahydrofuran (THF), monoethylene glycol dimethylether, diethylene glycol dimethylether, triethylene glycol dimethylether, tetraethylene glycol dimethylether, and dioxane may be used.

The use amount of the solvent can be 10 to 300 parts by weight, preferably 100 to 200 parts by weight, further preferably about 150 parts by weight per 100 parts by weight of the perfluorooxyalkylene-group-containing polymer.

Subsequently, the reaction is suspended, and the water layer and the fluorine solvent layer are separated from each other by a separating operation. The obtained fluorine solvent layer is further washed with an organic solvent and the solvent is distilled off to obtain the fluorooxyalkylene-group-containing polymer having, at both molecular chain terminals, a hydroxyl group, and two olefin moieties free of a polyether group on the chain.

Examples of the olefin-containing polyether group introducing agent to be used in preparation of the fluorooxyalkyl-group-containing polymer represented by the formula (17) include olefin-containing polyether halides, and specific examples of the olefin-containing polyether halides are as follows: 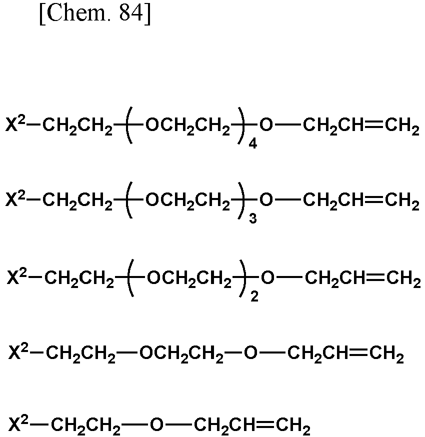 wherein X² is as defined above.

The use amount of the olefin-containing polyether group introducing agent can be 1 to 15 equivalents, more preferably 3 to 9 equivalents, further preferably about 7 equivalents per 1 equivalent of reactive terminal groups in the fluorooxyalkylene-group-containing polymer having, at both molecular chain terminals, a hydroxyl group, and two olefin moieties free of a polyether group on the chain.

Examples of the base to be used in preparation of the fluorooxyalkylene-group-containing polymer represented by the formula (17) include amines and alkali metal bases, and specific examples of amines include triethylamine, diisopropylethylamine, pyridine, DBU, and imidazole. Examples of the alkali metal bases include sodium hydroxide, potassium hydroxide, sodium hydride, potassium hydride, alkyllithium, t-butoxypotassium, lithium diisopropylamide, lithium bis(trimethylsilyl)amide, sodium bis(trimethylsilyl)amide, and potassium bis(trimethylsilyl)amide.

The use amount of the base can be 1 to 20 equivalents, more preferably 10 to 18 equivalents, further preferably about 13 equivalents per 1 equivalent of reactive terminal groups in the fluorooxyalkylene-group-containing polymer having, at both molecular chain terminals, a hydroxyl group, and two olefin moieties free of a polyether group on the chain.

In preparation of the fluorooxyalkylene-group-containing polymer represented by the formula (17), tetrabutylammonium halide, alkali metal halide or the like may be used as an additive for improving the reactivity. Specific examples of the additive include tetrabutylammonium chloride, tetrabutylammonium bromide, tetrabutylammonium iodide, tetrabutylammonium, tetrabutylammonium hydrogen sulfate, sodium iodide, potassium iodide, cesium iodide, and crown ether. These additives improve the reactivity by catalytic halogen exchange with the olefin-containing polyether introducing agent in the reaction system, and the crown ether improves the reactivity by coordinating with metal.

The use amount of the additive can be 0.005 to 0.1 equivalents, more preferably 0.01 to 0.05 equivalents, further preferably about 0.02 equivalents per 1 equivalent of reactive terminal groups in the fluorooxyalkylene-group-containing polymer having, at both molecular chain terminals, a hydroxyl group, and two olefin moieties free of a polyether group on the chain.

In preparation of the fluorooxyalkylene-group-containing polymer represented by the formula (17), a solvent may be used. Although the solvent is not necessarily used, examples of the solvent to be used include, as fluorine-based solvents, fluorine-containing aromatic hydrocarbon solvents such as 1,3-bis(trifluoromethyl)benzene and trifluoromethylbenzene, hydrofluoroether (HFE) solvents (trade name: Novec series, available from 3M) such as 1,1,1,2,3,4,4,5,5,5-decafluoro-3-methoxy-2-(trifluoromethyl)pentane and perfluoro solvents composed of completely fluorinated compound (trade name: Fluorinert series, available from 3M). Further, as an organic solvent, dimethylformamide, dimethylacetamide, dimethylsulfoxide, acetnitrile, THF and so on may be used.

The use amount of the solvent can be 10 to 300 parts by weight, preferably 30 to 150 parts by weight, further preferably about 50 parts by weight per 100 parts by weight of the fluorooxyalkylene-group-containing polymer having, at both molecular chain terminals, a hydroxyl group, and two olefin moieties free of a polyether group on the chain.

As the organic silicon compound free of a hydrolyzable terminal group and having two or more SiH groups in the molecule, to be used in preparation of the fluorooxyalkylene-group-containing polymer represented by the formula (17) in reaction between the fluorooxyalkylene-group-containing polymer having, at both molecular chain terminals, a hydroxyl group, and two olefin moieties free of a polyether group on the chain, and the organic silicon compound free of a hydrolyzable terminal group and having two or more SiH groups in the molecule, compounds represented by the following general formulas (9) to (11) are preferred: 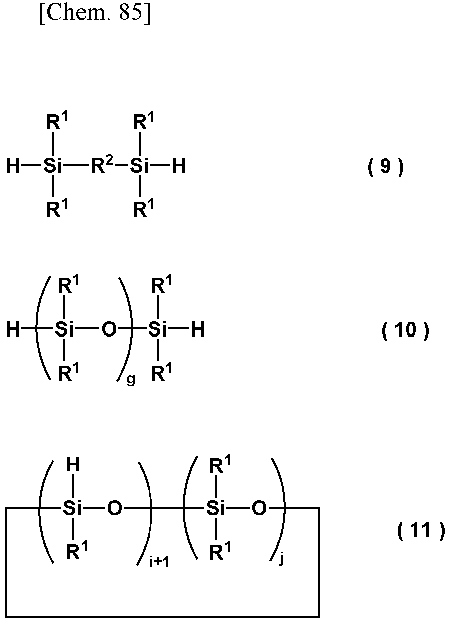 wherein R¹, R², g, j, i and i + j are as defined above.

Examples of such an organic silicon compound free of a hydrolyzable terminal group and having two or more SiH groups in the molecule are as follows:

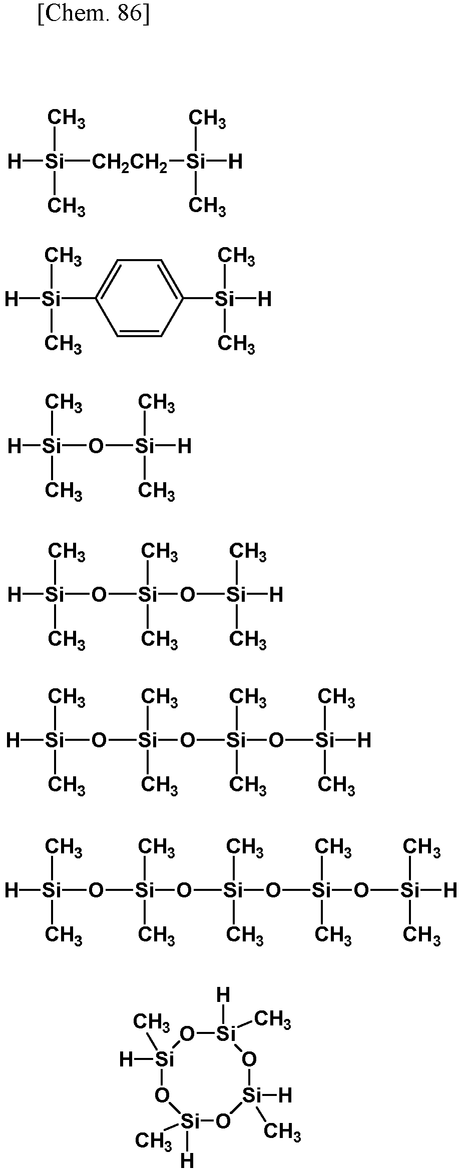

In preparation of the fluorooxyalkylene-group-containing polymer represented by the formula (17), the use amount of the organic silicon compound free of a hydrolyzable terminal group and having two or more SiH groups in the molecule in reaction between the fluorooxyalkylene-group-containing polymer having, at both molecular chain terminals, a hydroxyl group, and two olefin moieties free of a polyether group on the chain, and the organic silicon compound free of a hydrolyzable terminal group and having two or more SiH groups in the molecule can be 7 to 30 equivalents, more preferably 5 to 20 equivalents, further preferably about 10 equivalents per 1 equivalent of reactive terminal groups in the fluorooxyalkylene-group-containing polymer having, at both molecular chain terminals, a hydroxyl group, and two olefin moieties free of a polyether group on the chain.

Examples of the dehydrogenation catalyst to be used in preparation of the fluorooxyalkylene-group-containing polymer represented by the formula (17) include platinum group metal catalysts such as rhodium, palladium, and ruthenium, and boron catalysts, and specific examples include platinum group metal catalysts such as tetrakis(triphenylphosphine) palladium, and chlorotris(triphenylphosphine)rhodium, and boron catalysts such as tris(pentafluorophenyl)boran.

The use amount of the dehydrogenation catalyst can be 0.01 to 0.0005 equivalents, more preferably 0.007 to 0.001 equivalents, further preferably about 0.005 equivalents per 1 equivalent of reactive terminal groups in the fluorooxyalkylene-group-containing polymer having, at both molecular chain terminals, a hydroxyl group, and two olefin moieties free of a polyether group on the chain.

Subsequently, the reaction is suspended, and the water layer and the fluorine solvent layer are separated from each other by a separating operation. The obtained fluorine solvent layer is further washed with an organic solvent and the solvent is distilled off to obtain the fluorooxyalkylene-group-containing polymer having a SiH group at both molecular chain terminals.

**In** preparation of the fluorooxyalkylene-group-containing polymer represented by the formula (17), as the polyether compound having two intramolecular olefin moieties in reaction between the fluorooxyalkylene-group-containing polymer having a SiH group at both molecular chain terminals, and the polyether compound having two intramolecular olefin moieties, for example, a polyalkylene oxide compound blocked with an alkenyloxy group at both molecule chain terminals, such as polyethylene oxide blocked with an allyloxy group at both molecular chain terminals shown below can be recited: 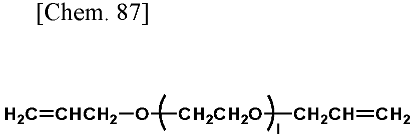 wherein l is as defined above.

Specific examples of the polyether compound having an intramolecular olefin moiety, such as a polyalkylene oxide compound blocked with an alkenyloxy group at both molecule chain terminals include polyethylene oxide compounds that are blocked with an allyloxy group at both molecular chain terminals, such as Uniox AA-480R and Uniox AA680 available from NOF Corp.

The use amount of the polyether compound having an intramolecular olefin moiety can be 1 to 20 equivalents, more preferably 8 to 15 equivalents, further preferably about 10 equivalents per 1 equivalent of reactive terminal groups in the fluorooxyalkylene-group-containing polymer having a SiH group at both molecular chain terminals.

**In** preparation of the fluorooxyalkylene-group-containing polymer represented by the formula (17), as the hydrosilylation catalyst in reaction between the fluorooxyalkylene-group-containing polymer having a SiH group at both molecular chain terminals, and the polyether compound having two intramolecular olefin moieties, for example, platinum group metal based catalysts including platinum black, chloroplatinic acid, alcohol-modified chloroplatinic acid, complexes of chloroplatinic acid with olefin, aldehyde, vinyl siloxane, and acetylene alcohol, tetrakis(triphenylphosphine)palladium, and chlorotris(triphenylphosphine)rhodium can be recited. Preferably are platinum-based compounds such as vinyl siloxane coordination compounds.

The use amount of the hydrosilylation catalyst can be 0.1 to 100 ppm, more preferably 1 to 50 ppm in terms of transition metal (weight) per weight of the fluorooxyalkylene-group-containing polymer having a SiH group at both molecular chain terminals.

As the solvent to be used in preparation of the fluoropolyether group (divalent fluorooxyalkylene-group-containing polymer residue)-containing polymer represented by the above formula (3) when α is 2, fluorine-based solvents are preferred, and examples of the fluorine-based solvents include 1,3-bis(trifluoromethyl)benzene, trifluoromethylbenzene, hydrofluoroether (HFE) solvents (trade name: Novec series, available from 3M) such as methyl nonafluorobutyl ether, methyl nonafluoroisobutyl ether, ethyl nonafluorobutyl ether, ethyl nonafluoroisobutyl ether and 1,1,1,2,3,4,4,5,5,5-decafluoro-3-methoxy-2-(trifluoromethyl)pentane, and perfluoro solvents composed of completely fluorinated compound (trade name: Fluorinert series, available from 3M).

The use amount of the solvent can be 10 to 300 parts by weight, preferably 50 to 150 parts by weight, further preferably about 100 parts by weight per 100 parts by weight of the fluorooxyalkylene-group-containing polymer having, at both molecular chain terminals, an olefin moiety with a polyether group on the chain, and two olefin moieties free of a polyether group on the chain.

Also, in preparation of the fluoropolyether-group-containing polymer represented by formula (3) when α is 2, as the organic silicon compound having a SiH group and a hydrolyzable terminal group in the molecule, compounds represented by the following general formulas (12) to (15) are preferred: 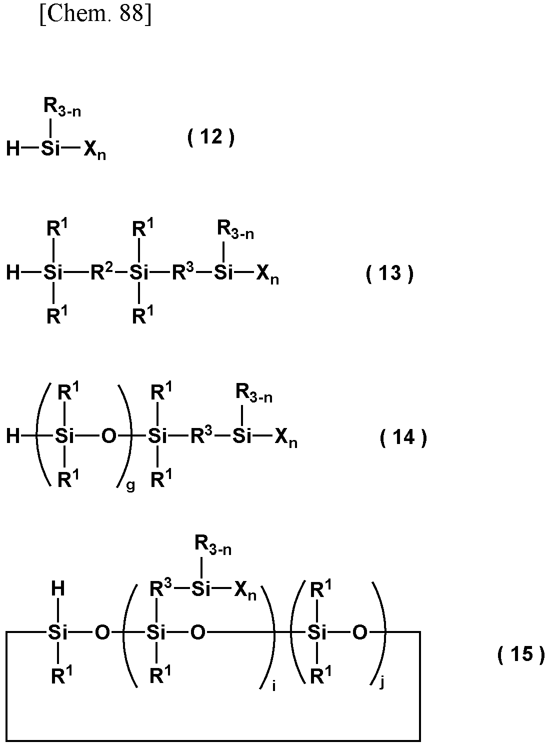 wherein R, X, n, R¹, R², R³, g, i, j and i + j are as defined above.

Examples of the organic silicon compound having a SiH group and a hydrolyzable terminal group in the molecule include trimethoxysilane, triethoxysilane, tripropoxysilane, triisopropoxysilane, tributoxysilane, triisopropenoxysilane, triacetoxysilane, trichlorosilane, tribromosilane, triiodosilane, and the following silanes.

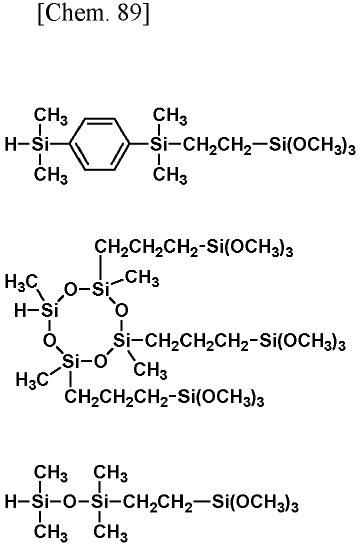

In preparation of the fluoropolyether-group-containing polymer represented by the formula (3) when α is 2, the use amount of the organic silicon compound having a SiH group and a hydrolyzable terminal group in the molecule in reaction between the fluorooxyalkylene-group-containing polymer having, at both molecular chain terminals, an olefin moiety with a polyether group on the chain, and two olefin moieties free of a polyether group on the chain, and the organic silicon compound having a SiH group and a hydrolyzable terminal group in the molecule can be 3 to 12 equivalents, more preferably 5 to 7 equivalents, further preferably about 6 equivalents, per 1 equivalent of reactive terminal groups of the fluorooxyalkylene-group-containing polymer having, at both molecular chain terminals, an olefin moiety with a polyether group on the chain, and two olefin moieties free of a polyether group on the chain.

Also, in preparation of the fluoropolyether-group-containing polymer represented by formula (3) when α is 2, as the organic silicon compound free of a hydrolyzable terminal group and having two or more SiH groups in the molecule, compounds represented by the following general formulas (9) to (11) are preferred: 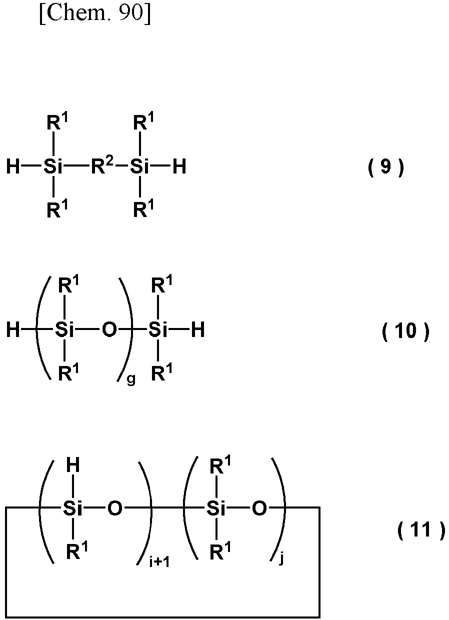 wherein R¹, R², g, j, i and i + j are as defined above.

Examples of such an organic silicon compound free of a hydrolyzable terminal group and having two or more SiH groups in the molecule are as follows:

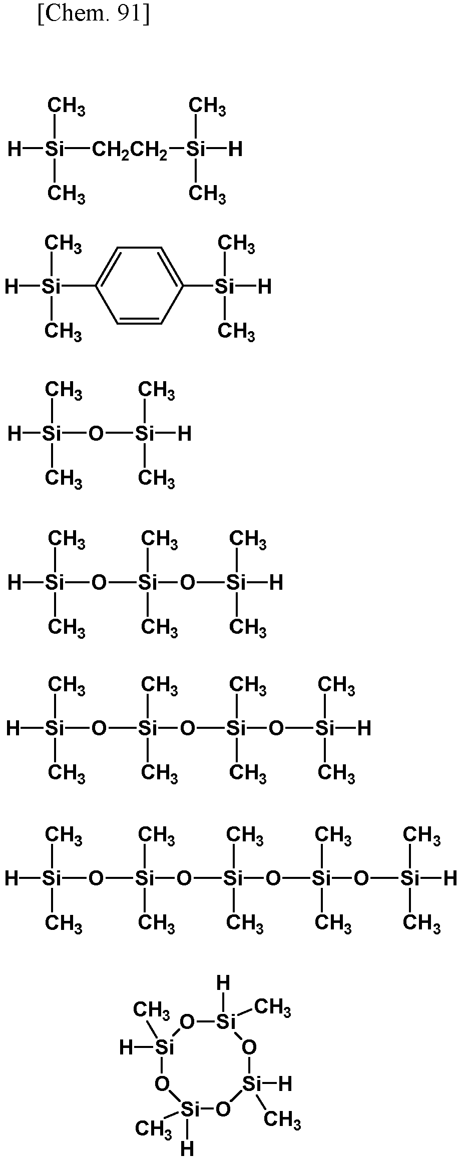

In preparation of the fluoropolyether-group-containing polymer represented by the formula (3) when α is 2, the use amount of the organic silicon compound free of a hydrolyzable terminal group and having two or more SiH groups in the molecule in reaction between the fluorooxyalkylene-group-containing polymer having, at both molecular chain terminals, an olefin moiety with a polyether group on the chain, and two olefin moieties free of a polyether group on the chain, and the organic silicon compound free of a hydrolyzable terminal group and having two or more SiH groups in the molecule can be 7 to 30 equivalents, more preferably 10 to 20 equivalents, further preferably about 15 equivalents per 1 equivalent of reactive terminal groups in the fluorooxyalkylene-group-containing polymer having, at both molecular chain terminals, an olefin moiety with a polyether group on the chain, and two olefin moieties free of a polyether group on the chain.

Also, in preparation of the fluoropolyether-group-containing polymer represented by formula (3) when α is 2, as the organic silicon compound having an olefin moiety and a hydrolyzable terminal group in the molecule, compounds represented by the following general formula (16) are preferred: 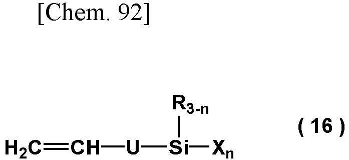 wherein R, X, n and U are as defined above.

In preparation of the fluoropolyether-group-containing polymer represented by the formula (3) when α is 2, the use amount of the organic silicon compound having an olefin moiety and a hydrolyzable terminal group in the molecule in reaction between the reaction product of the fluorooxyalkylene-group-containing polymer having, at both molecular chain terminals, an olefin moiety with a polyether group on the chain, and two olefin moieties free of a polyether group on the chain, and the organic silicon compound free of a hydrolyzable terminal group and having two or more SiH groups in the molecule, and the organic silicon compound having an olefin moiety and a hydrolyzable terminal group in the molecule can be 3 to 10 equivalents, more preferably 5 to 7 equivalents, further preferably about 6 equivalents per 1 equivalent of reactive terminal groups in the reaction product between the fluorooxyalkylene-group-containing polymer having, at both molecular chain terminals, an olefin moiety with a polyether group on the chain, and two olefin moieties free of a polyether group on the chain, and the organic silicon compound free of a hydrolyzable terminal group and having two or more SiH groups in the molecule.

In preparation of the fluoropolyether-group-containing polymer represented by the formula (3) when α is 2, as the hydrosilylation catalyst, platinum group metal based catalysts including platinum black, chloroplatinic acid, alcohol-modified chloroplatinic acid, complexes of chloroplatinic acid with olefin, aldehyde, vinyl siloxane, and acetylene alcohol, tetrakis(triphenylphosphine)palladium, and chlorotris(triphenylphosphine)rhodium can be recited. Preferably are platinum-based compounds such as vinyl siloxane coordination compounds.

The use amount of the hydrosilylation catalyst can be 0.1 to 100 ppm, more preferably 1 to 50 ppm in terms of transition metal (weight) per weight of the fluorooxyalkylene-group-containing polymer having, at both molecular chain terminals, an olefin moiety with a polyether group on the chain, and two olefin moieties free of a polyether group on the chain, or the weight of the reaction product of this polymer and the organic silicon compound free of a hydrolyzable terminal group and having two or more SiH groups in the molecule.

Thereafter, the solvent and the unreacted material are distilled off under reduced pressure to obtain an objective compound.

For example, when a compound represented by the following formula: 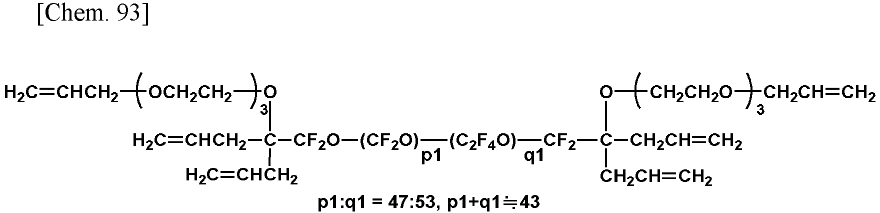 is used as the fluorooxyalkylene-group-containing polymer having, at both molecular chain terminals, an olefin moiety with a polyether group on the chain, and two olefin moieties free of a polyether group on the chain, and trimethoxysilane is used as the organic silicon compound having a SiH group and a hydrolyzable terminal group in the molecule, the compound represented by the following formula is obtained:

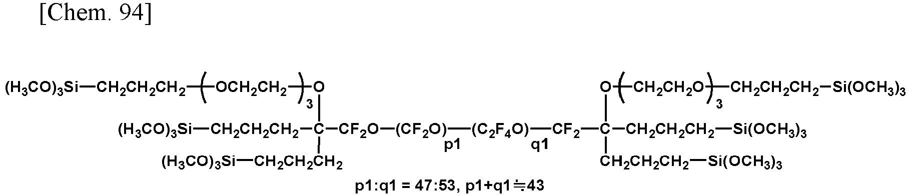

The present invention further provides a surface treatment agent containing a fluoropolyether-group-containing polymer having a hydroxyl group or a hydrolyzable group, and a hydroxyl or hydrolyzable-group-containing polyether group according to the invention, preferably a polymer in which a polyether group in the polymer is a monovalent oxyalkylene-group-containing polymer residue situated at a molecular chain terminal, in particular, the aforementioned fluoropolyether-group-containing polymer. The surface treatment agent may contain a partial (hydrolytic) condensate obtained by condensing a hydroxyl group of the fluoropolyether-group-containing polymer, or by condensing a hydroxyl group obtained by partially hydrolyzing a terminal hydrolyzable group of the fluoropolyether-group-containing polymer in advance by a known method.

To the surface treatment agent, a hydrolytic condensation catalyst, for example, an organic tin compound (dibutyltin dimethoxide, dibutyltin dilaurate, etc.), an organic titanium compound (tetra n-butyltitanate, etc.), organic acid (acetic acid, methanesulfonic acid, fluorine-modified carboxylic acid, etc.), inorganic acid (hydrochloric acid, sulfuric acid, etc,) may be added as necessary. Among these, acetic acid, tetra n-butyltitanate, dibutyltin dilaurate, fluorine-modified carboxylic acid and so on are particularly desired.

The adding amount of the hydrolytic condensation catalyst is a catalytic amount, and is typically 0.01 to 5 parts by weight, especially 0.1 to 1 parts by weight per 100 parts by weight of the fluoropolyether-group-containing polymer and/or its partial (hydrolytic) condensate.

The surface treatment agent may contain an appropriate solvent. Examples of the solvent include fluorine-modified aliphatic hydrocarbon solvents (perfluoroheptane, perfluorooctane, etc.), fluorine-modified aromatic hydrocarbon solvents (1,3-bis(trifluoromethyl)benzene, etc.), fluorine-modified ether solvents (methylperfluorobutyl ether, ethylperfluorobutyl ether, perfluoro(2-butyltetrahydrofuran) etc.), fluorine-modified alkylamine solvents (perfluorotributylamine, perfluorotripentylamine, etc.), hydrocarbon solvents (petroleum benzine, toluene, xylene, etc.), and ketone solvents (acetone, methylethylketoene, methylisobutylketone, etc.). Among these, fluorine-modified solvents are desired in terms of the solubility and wettability, and in particular, 1,3-bis(trifluoromethyl)benzene, perfluoro(2-butyltetrahydrofuran), and perfluorotributylamine, ethylperfluorobutylether are preferred.

Two or more of the above solvents may be mixed, and it is preferred that the fluoropolyether-group-containing polymer and its partial (hydrolytic) condensate are uniformly dissolved. The optimum concentration of the fluoropolyether-group-containing polymer and its partial (hydrolytic) condensate to be dissolved in the solvent differs depending on the treatment method, and can be such an amount that is easy to be weighed. In the case of direct coating, the optimum concentration is preferably 0.01 to 10 parts by weight, especially 0.05 to 5 parts by weight per 100 parts by weight of the total of the solvent and the fluoropolyether-group-containing polymer (and its partial (hydrolytic) condensate), and in the case of evaporation, the optimum concentration is preferably 1 to 100 parts by weight, especially 3 to 30 parts by weight per 100 parts by weight of the total of the solvent and the fluoropolyether-group-containing polymer (and its partial (hydrolytic) condensate).

The surface treatment agent of the present invention may be applied to a substrate by any well-known techniques such as brush coating, dipping, spraying and evaporation. In the case of evaporation, the heating mode may be either resistance heating or electron beam heating and is not particularly limited. The curing temperature varies with a particular curing technique. For example, in the case of direct coating (brush coating, dipping or spraying), suitable curing conditions include a temperature of 25 to 200°C, especially 25 to 80°C for 30 minutes to 36 hours, especially 1 to 24 hours. When the coating technique is evaporation, the curing temperature is desirably in a range of 20 to 200°C. Humid curing conditions are also useful. The cured coating typically has a thickness of 0.1 to 100 nm, especially 1 to 20 nm although the thickness is appropriately selected depending on the type of substrate. Also, in the case of spray coating, for example, curing after coating is rapid when the agent is diluted with a fluorine-based solvent to which water is previously added, and hydrolysis is caused, or Si-OH is generated, and then the solution is coated by spraying.

The substrate to be treated with the surface treatment agent of the present invention is not particularly limited, and may be made of any materials including paper, fabric, metals, metal oxides, glass, plastics, ceramics and quartz. The surface treatment agent of the present invention can provide the substrate with water/oil-repellent property. In particular, the surface treatment agent can be advantageously used as the surface treatment agent for a SiO₂-treated glass or film.

Preferred articles which may be treated with the surface treatment agent of the present invention include car navigation systems, mobile phones, smart phones, digital cameras, digital video cameras, PDA, portable audio players, car audio players, game consoles, eyeglass lenses, camera lenses, lens filters, sunglasses, medical instruments such as gastroscopes, copiers, personal computers, liquid crystal displays, organic EL displays, plasma displays, touch panel displays, protective film, antireflective film and other optical articles. The surface treatment agent of the invention is effective for preventing fingerprints and sebum from adhering to the articles and also for imparting scratch resistance. Therefore, it is particularly useful as a water/oil-repellent layer on touch panel displays and antireflective films.

The surface treatment agent of the present invention is used for anti-staining coatings on sanitary ware such as bathtubs and washbowls; anti-staining coatings on glazing or strengthened glass and head lamp covers in transport vehicles such as automobiles, trains and aircraft; water/oil repellent coatings on building exteriors; coatings for preventing oil stains on kitchen ware; anti-staining, anti-sticking, anti-graffiti coatings in telephone booths; anti-fingerprint coatings on artistic objects; anti-fingerprint coatings on compact discs and DVDs; mold releasing agents; paint additives; and resin modifiers. The agent is also effective for modifying the flow and dispersion of inorganic fillers, and for improving the lubricity of tape and film.

### EXAMPLES

Hereinafter, the present invention is described more specifically by Examples and Comparative Examples, however, the present invention is not limited by the following Examples.

### [Example 1]

In a reactor, 200 g (4.7×10⁻² mol (molar number of terminal -OH functional group)) of the compound represented by the following formula (A), 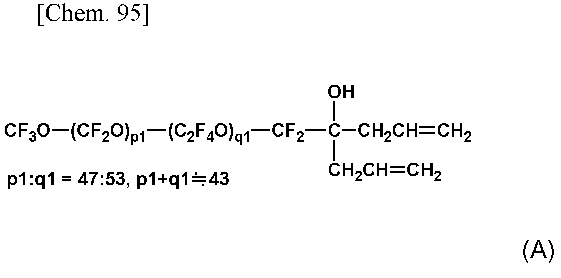 101 g (3.4×10⁻¹ mol) of the compound represented by the following formula (B), and 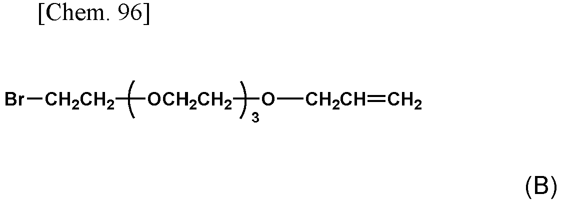 0.34 g (9.4× 10⁻⁴ mol) of tetrabutylammonium iodide were mixed. Then, after adding 33 g (5.9×10⁻¹mol) of potassium hydroxide, the reaction was heated at 50°C for 16 hours. After end of the heating, the reaction was cooled to room temperature, and aqueous hydrochloric acid was added dropwise. The fluorine compound layer which is a lower layer was collected by a separating operation, and then washed with acetone. The fluorine compound layer which is a lower layer after washing was collected again, and the remaining solvent was distilled off under reduced pressure to give 197 g of the fluoropolyether-group-containing polymer represented by the following formula (C).

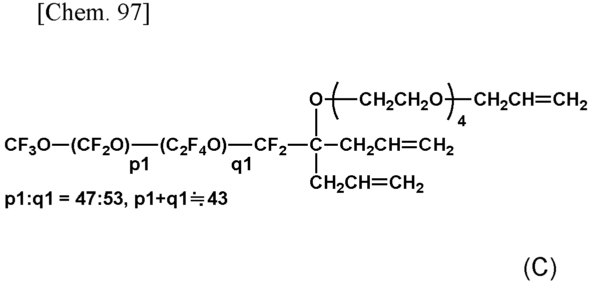

¹H-NMR
δ 2.2-2.4 (C-CH₂CH=CH₂) 4H
δ 3.3-3.6 (-O-(CH₂CH₂O)₃ -O-) 16H
δ 3.7-3.8 (-O-CH₂CH=CH₂) 2H
δ 4.8-5.1 (-CH₂CH=CH₂, -O-CH₂CH=CH₂) 6H
δ 5.6-5.8 (-CH₂CH=CH₂, -O-CH₂CH=CH₂) 3H

In a reactor, 13.6 g (9.2× 10⁻³ mol (molar number of terminal allyl functional group)) of the compound represented by the following formula (C) obtained in the above, 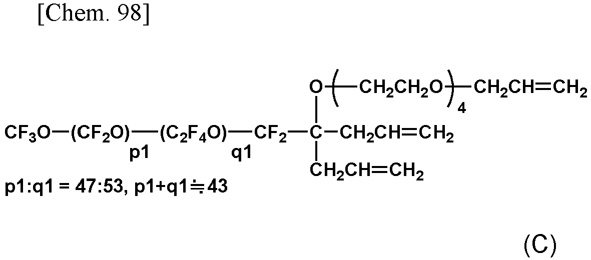 20 g of 1,3-bis(trifluoromethyl)benzene, 6.7 g (5.5×10⁻² mol) of trimethoxysilane, and 2.6×10² g (containing 7.9×10⁻⁸ mol as Pt simple substance) of a solution of chloroplatinic acid/vinyl siloxane complex in toluene were mixed, and the mixture was aged at 80°C for 24 hours. Then, the solvent and the unreacted material were distilled off under reduced pressure to obtain 41 g of a liquid product.

The obtained compound was confirmed to have a structure represented by the following formula (D) by ¹H-NMR.

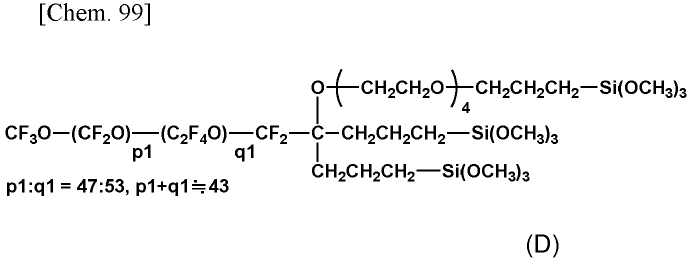

¹H-NMR
δ 0.3-0.5 (-CH₂CH₂CH₂-Si) 6H
δ 1.3-1.5 (-CH₂CH₂CH₂-Si) 6H
δ 1.6-1.7 (C-CH₂CH₂CH₂-Si) 4H
δ 3.1-3.2 (-O-CH₂CH₂CH₂-Si) 2H
δ 3.3-3.5 (-O-(CH₂CH₂O)₃ -O-CH₃, -Si(OCH₃)₃) 43H

### [Example 2]

In a reactor, 100 g (2.4×10⁻² mol (molar number of terminal -OH functional group)) of the compound represented by the following formula (A), 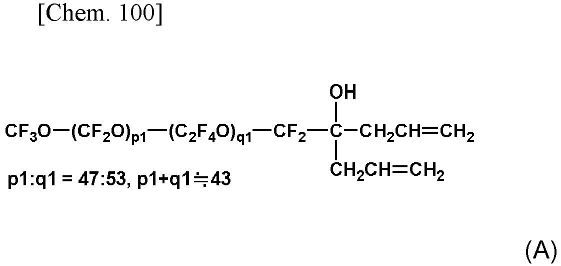 44 g (1.7×10⁻¹ mol) of the compound represented by the following formula (E), 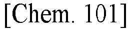 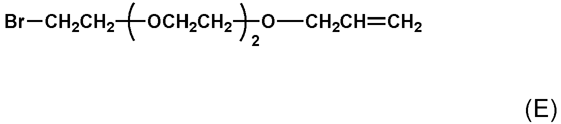 and 0.17 g (4.7×10⁻⁴ mol) of tetrabutylammonium iodide were mixed. Subsequently, after adding 17 g (3.0×10⁻¹ mol) of potassium hydroxide, the reaction was heated at 50°C for 14 hours. After end of the heating, the reaction was cooled to room temperature, and aqueous hydrochloric acid was added dropwise. The fluorine compound layer which is a lower layer was collected by a separating operation, and then washed with acetone. The fluorine compound layer which is a lower layer after washing was collected again, and the remaining solvent was distilled off under reduced pressure to give 98 g of the fluoropolyether-group-containing polymer represented by the following formula (F).

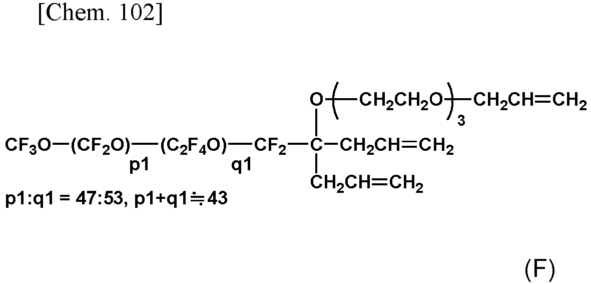

¹H-NMR
δ 2.2-2.4 (C-CH₂CH=CH₂) 4H
δ 3.2-3.6 (-O-(CH₂CH₂O)₃ -O-) 12H
δ 3.7-3.8 (-O-CH₂CH=CH₂) 2H
δ 4.8-5.0 (-CH₂CH=CH₂, -O-CH₂CH=CH₂) 6H
δ 5.6-5.8 (-CH₂CH=CH₂, -O-CH₂CH=CH₂) 3H

In a reactor, 6.7 g (4.6×10⁻³ mol (molar number of terminal allyl functional group)) of the compound represented by the following formula (F) obtained in the above, 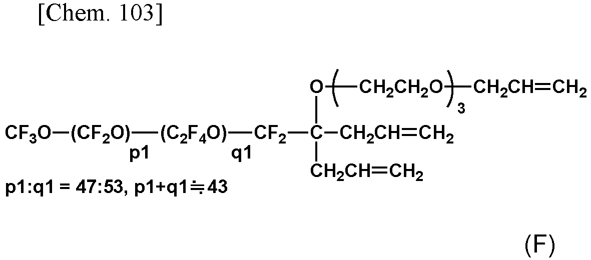 10 g of 1,3-bis(trifluoromethyl)benzene, 3.4 g (2.8×10⁻² mol) of trimethoxysilane, and 1.3×10⁻² g (containing 4.0×10⁻⁸ mol as Pt simple substance) of a solution of chloroplatinic acid/vinyl siloxane complex in toluene were mixed, and the mixture was aged at 80°C for 24 hours. Then, the solvent and the unreacted material were distilled off under reduced pressure to obtain 18 g of a liquid product.

The obtained compound was confirmed to have a structure represented by the following formula (G) by ¹H-NMR.

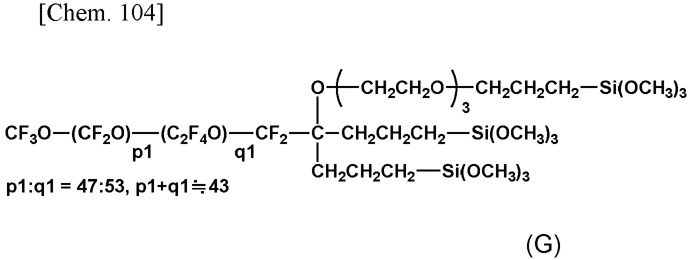

¹H-NMR
δ 0.2-0.5 (-CH₂CH₂CH₂-Si) 6H
δ 1.3-1.5 (-CH₂CH₂CH₂-Si) 6H
δ 1.6-1.8 (C-CH₂CH₂CH₂-Si) 4H
δ 3.1-3.2 (-O-CH₂CH₂CH₂-Si) 2H
δ 3.2-3.5 (-O-(CH₂CH₂O)₃ -O-CH₃, -Si(OCH₃)₃) 39H

### [Example 3]

In a reactor, 50 g of 1,3-bis(trifluoromethyl)benzene, 0.013 g (2.4×10⁻⁵ mol) of tris(pentafluorophenyl)boran, and 50 g (1.2×10⁻² mol (molar number of terminal-OH functional group)) of the compound represented by the following formula (A): 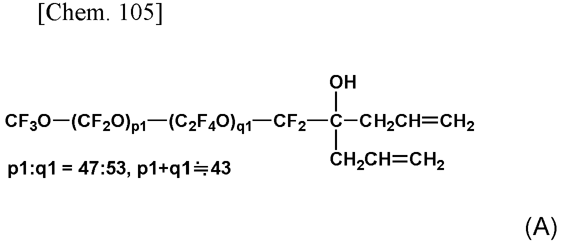 are mixed, and 25 g (1.2×10⁻¹ mol) of siloxane represented by the following formula (H): 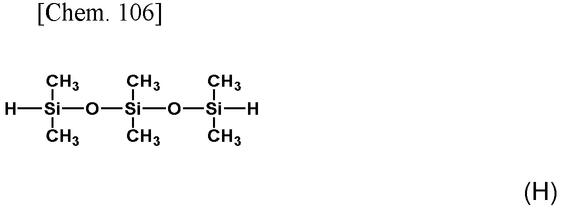 was slowly added dropwise, and then the reaction was heated at 25°C for 1 hour. Then, water was added dropwise, and the fluorine compound layer which is a lower layer was collected by a separating operation, and then washed with acetone. The fluorine compound layer which is a lower layer after washing was collected again, and the remaining solvent was distilled off under reduced pressure to give 48 g of a fluoropolyether-group-containing polymer represented by the following formula (I).

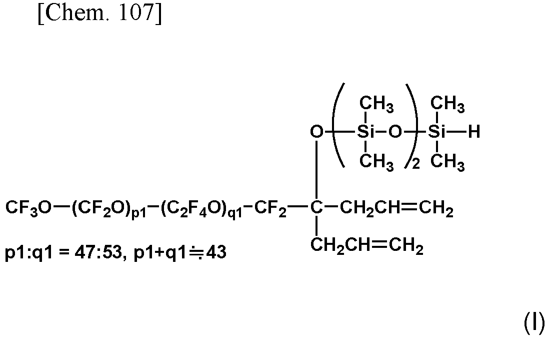

¹H-NMR
δ 0-0.2 (-Si-(CH₃)₂-) 18H
δ 2.4-2.6 (-CH₂CH=CH₂) 4H
δ 4.7-4.8 (-Si-H) 1H
δ 5.0-5.1 (-CH₂CH=CH₂) 4H
δ 5.8-5.9 (-CH₂CH=CH₂) 2H

In a reactor, 20 g (4.5×10⁻³ mol (molar number of terminal SiH functional group)) of the compound represented by the following formula (I) obtained in the above, 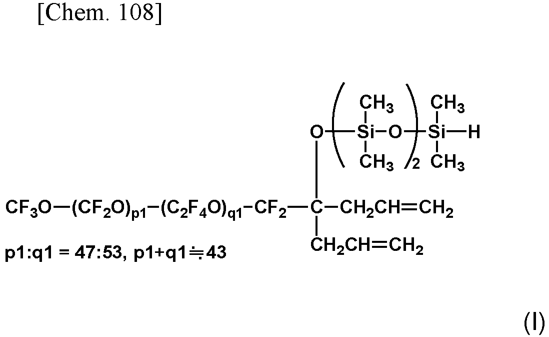 20 g of 1,3-bis(trifluoromethyl)benzene, 22 g (4.5×10⁻² mol, polyethylene oxide in which both molecular chain terminals are blocked with an allyloxy group and the other terminal is blocked with a methoxy group, represented by the formula (J), available from NOF Corp.) of Uniox AA-480R, 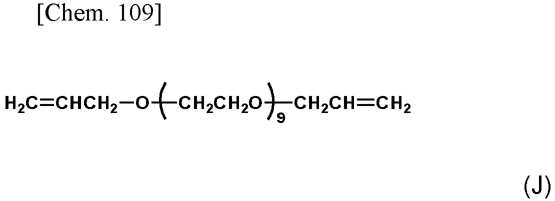 and 1.3×10⁻² g (containing 4.0×10⁻⁸ mol as Pt simple substance) of a solution of chloroplatinic acid/vinyl siloxane complex in toluene were mixed, and the mixture was aged at 80°C for 24 hours. Then, the solvent and the unreacted material were distilled off under reduced pressure. Subsequently, washing with 20 g acetone, followed by a separating operation twice, and distilling off under reduced pressure were conducted to obtain 25 g of a liquid product.

The obtained compound was confirmed to have a structure represented by the following formula (K) by ¹H-NMR.

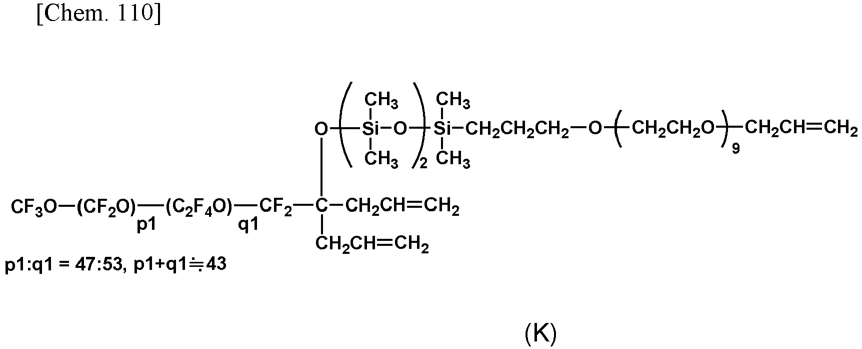

¹H-NMR
δ 0-0.3 (-Si-(CH₃)₂-) 18H
δ 0.5-0.7 (Si-CH₂CH₂CH₂-O-) 2H
δ 1.5-1.7 (Si-CH₂CH₂CH₂-O-) 2H
δ 2.5-2.7 (-CH₂CH=CH₂) 4H
δ 3.2-3.6 (Si-CH₂CH₂CH₂-O-, -O-(CH₂CH₂O)₉-O-CH₂CH=CH₂) 40H
δ 5.0-5.3 (-CH₂CH=CH₂) 4H
δ 5.7-6.0 (-CH₂CH=CH₂) 2H

In a reactor, 6.7 g (4.1×10⁻³ mol (molar number of terminal allyl functional group)) of the compound represented by the following formula (K) obtained in the above, 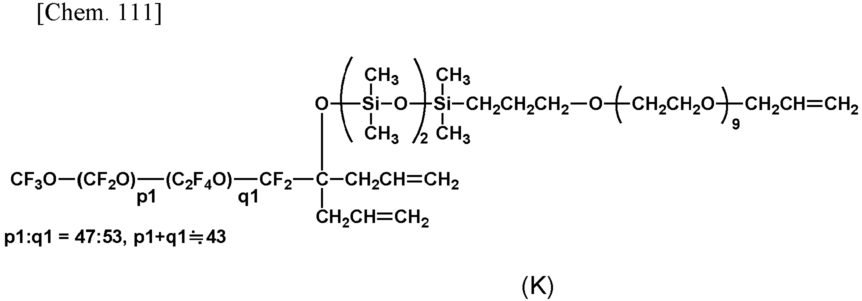 10 g of 1,3-bis(trifluoromethyl)benzene, 3.0 g (2.5×10⁻² mol) of trimethoxysilane and 1.2×10⁻² g (containing 3.6×10⁻⁸ mol as Pt simple substance) of a solution of chloroplatinic acid/vinyl siloxane complex in toluene were mixed, and the mixture was aged at 80°C for 24 hours. Then, the solvent and the unreacted material were distilled off under reduced pressure to obtain 18 g of a liquid product.

The obtained compound was confirmed to have a structure represented by the following formula (L) by ¹H-NMR.

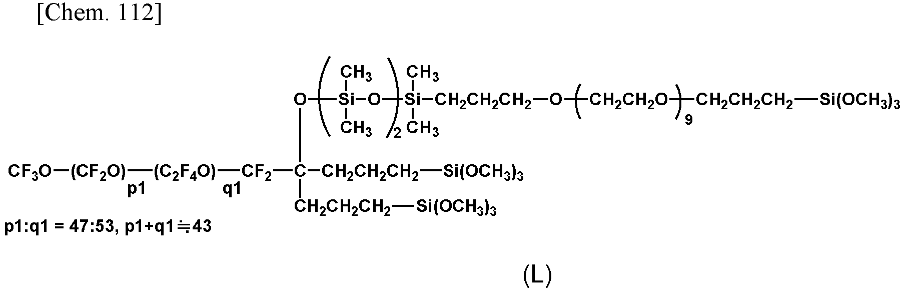

¹H-NMR
δ 0-0.4 (-Si-(CH₃)₂-) 18H
δ 0.5-0.8 (-Si-CH₂CH₂CH₂-O-, -CH₂CH₂CH₂-Si) 8H
δ 1.5-2.0 (-Si-CH₂CH₂CH₂-O-, -CH₂CH₂CH₂-Si, -O-CH₂CH₂CH₂-Si) 12H
δ 3.1-3.7 (-Si-CH₂CH₂CH₂-O-, -O-(CH₂CH₂O)₉-O-CH₂CH₂CH₂-Si(OCH₃)₃, -Si(OCH₃)₃) 67H

### [Example 4]

In a reactor, 50 g (2.4×10⁻² mol (molar number of terminal -OH functional group)) of the compound represented by the following formula (M), 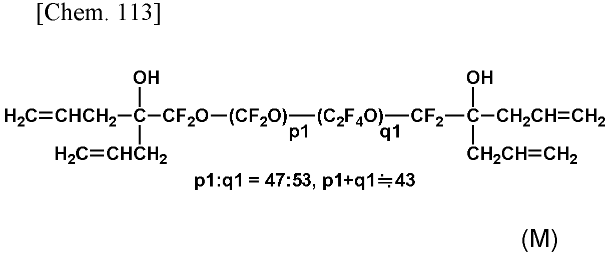 51 g (1.7×10⁻¹ mol) of the compound represented by the following formula (B), and 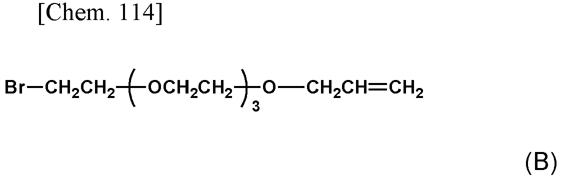 0.17 g (4.7×10⁻⁴ mol) of tetrabutylammonium iodide were mixed. Subsequently, after adding 17 g (3.0×10⁻¹ mol) of potassium hydroxide, the solution was heated at 50°C for 16 hours. After end of the heating, the reaction was cooled to room temperature, and aqueous hydrochloric acid was added dropwise. The fluorine compound layer which is a lower layer was collected by a separating operation, and then washed with acetone. The fluorine compound layer which is a lower layer after washing was collected again, and the remaining solvent was distilled off under reduced pressure to give 47 g of the fluoropolyether-group-containing polymer represented by the following formula (N).

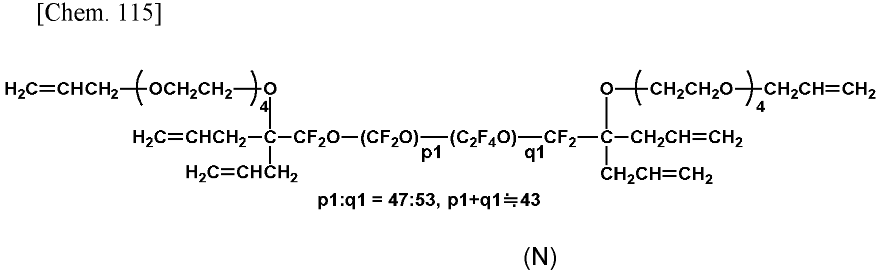

¹H-NMR
δ 2.2-2.4 (C-CH₂CH=CH₂) 8H
δ 3.2-3.6 (-O-(CH₂CH₂O)₃ -O-) 24H
δ 3.7-3.8 (-O-CH₂CH=CH₂) 4H
δ 4.8-5.0 (-CH₂CH=CH₂, -O-CH₂CH=CH₂) 12H
δ 5.6-5.8 (-CH₂CH=CH₂, -O-CH₂CH=CH₂) 6H

In a reactor, 7.0 g (8.8×10⁻³ mol (molar number of terminal allyl functional group)) of the compound represented by the following formula (N) obtained in the above, 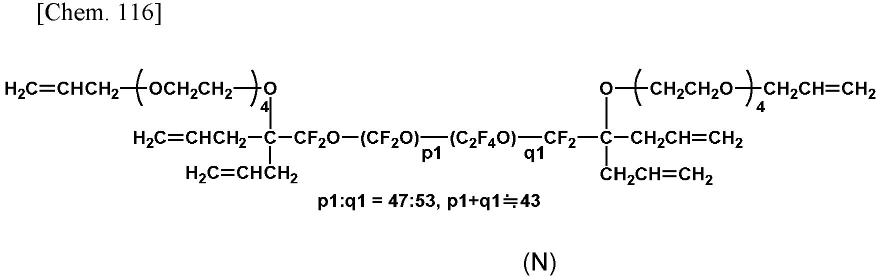 20 g of 1,3-bis(trifluoromethyl)benzene, 6.7 g (5.3×10⁻² mol) of trimethoxysilane, and 2.6×10⁻² g (containing 7.7×10⁻⁸ mol as Pt simple substance) of a solution of chloroplatinic acid/vinyl siloxane complex in toluene were mixed, and the mixture was aged at 80°C for 24 hours. Then, the solvent and the unreacted material were distilled off under reduced pressure to obtain 16 g of a liquid product.

The obtained compound was confirmed to have a structure represented by the following formula (O) by ¹H-NMR.

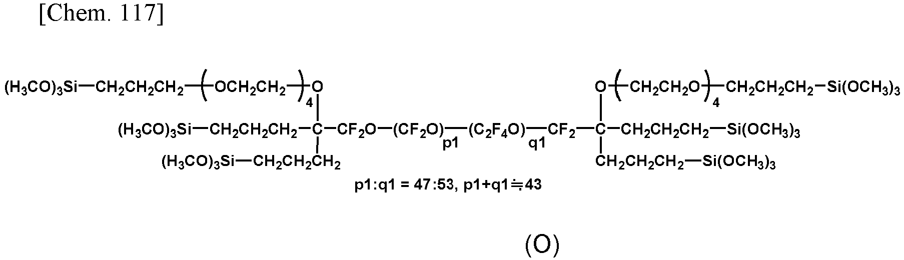

¹H-NMR
δ 0.2-0.5 (-CH₂CH₂CH₂-Si) 12H
δ 1.3-1.5 (-CH₂CH₂CH₂-Si) 12H
δ 1.6-1.8 (C-CH₂CH₂CH₂-Si) 8H
δ 3.1-3.2 (-O-CH₂CH₂CH₂-Si) 4H
δ 3.2-3.5 (-O-(CH₂CH₂O)₃ -O-CH₃, -Si(OCH₃)₃) 78H

### [Example 5]

In a reactor, 25 g (5.4×10⁻³ mol (molar number of terminal -I functional group)) of the compound represented by the following formula (P), 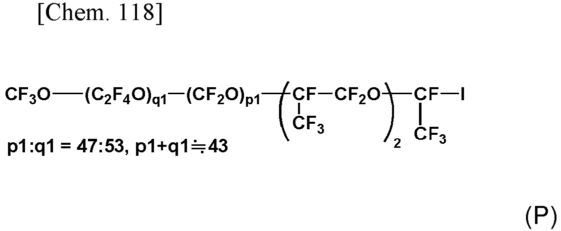 25 g of 1,3-bis(trifluoromethyl) benzene, 6.7 g (1.1×10⁻² mol) of the compound represented by the following formula (Q), and 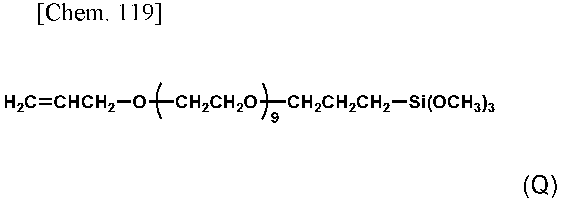 2.6 g (1.1×10⁻² mol) of vinylsilane represented by the following formula (R): 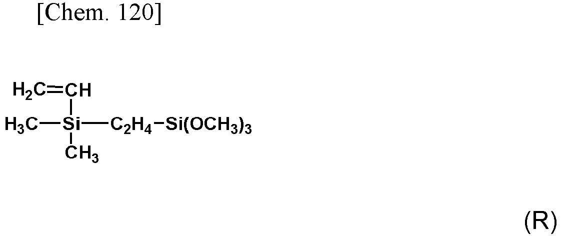 were mixed, and 0.79 g (5.4×10⁻³ mol) of di-t-butylperoxide was added, and heated at 110°C for 6 hours. After end of the heating, the reaction was cooled to room temperature. Then, 0.54 g (8.3×10⁻³ mol) of zinc powder and 25 g of methanol were added, and allowed to react at 60°C for 12 hours under vigorous stirring. The reaction solution was filtered through a filter to remove the solids, and the solvent and the unreacted material were distilled off under reduced pressure, and then washing with 12.5 g of methanol was conducted three times to obtain 22 g of a product.

The obtained compound was confirmed to have a structure represented by the following formula (S) by ¹H-NMR.

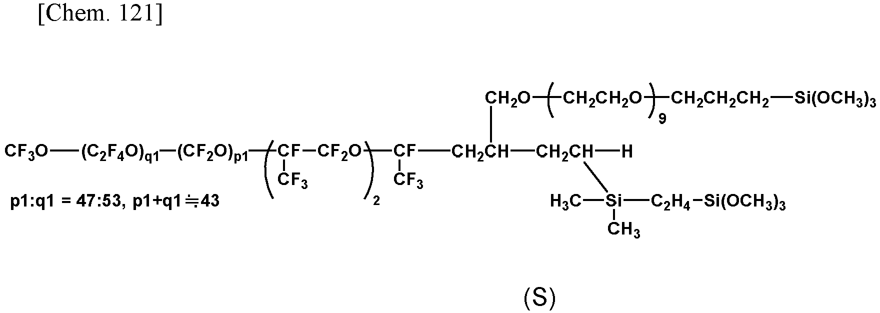

¹H-NMR
δ 0-0.3 (-Si-(CH₃)₂-) 6H
δ 0.4-0.7 (-CH-CH₂CH₂-Si, -Si-CH₂CH₂-Si, -O-CH₂CH₂CH₂-Si) 8H
δ 1.5-2.2 (-CF-CH₂-CH-CH₂CH₂-Si, -O-CH₂CH₂CH₂-Si) 7H
δ 3.2-3.6 (-CH₂-O-(CH₂CH₂O)₉-O-CH₂CH₂CH₂-Si(OCH₃)₃, -Si(OCH₃)₃) 58H

As Comparative Examples, the following polymers were used.

### [Comparative Example 1]

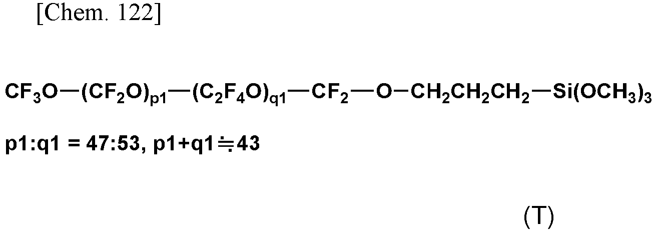

### [Comparative Example 2]

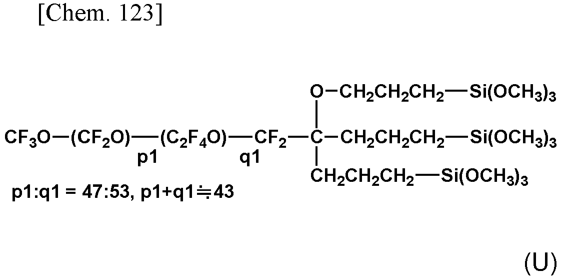

### [Comparative Example 3]

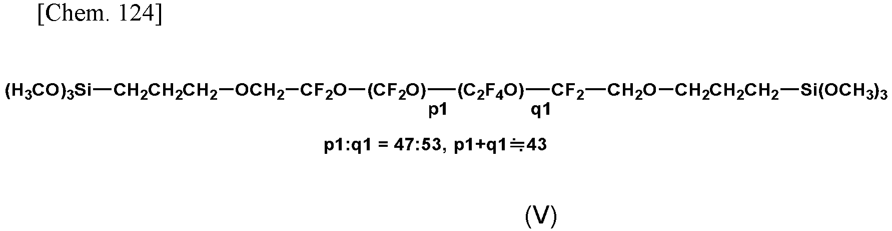

### Preparation of surface treatment agent and formation of cured coating

Surface treatment agents were prepared by dissolving the fluoropolyether group containing polymers obtained in Examples 1 to 5 and the polymers of Comparative Examples 1 to 3 in solvent Novec 7200 (ethyl perfluorobutyl ether by 3M) so as to be in a concentration of 20 % by weight. Onto glass having an outermost surface treated with SiO₂ of 10 nm (Gorilla by Coming), 4 µL of each surface treatment agent was deposited by vacuum evaporation under conditions including pressure 2.0×10⁻² Pa and heating temperature 700°C. The deposit was cured in an atmosphere of 25°C and humidity 50% for 12 hours, to form a cured coating of 8 nm thick.

### Evaluation of water/oil-repellent property

### [Evaluation of initial water/oil-repellent property]

For the above glass on which the cured coating was formed, a contact angle with water (water repellency) of the cured coating was measured using a contact angle meter Drop Master (Kyowa Interface Science Co., Ltd.) (droplet: 2 µL, temperature: 25°C, humidity: 40%). The results (initial contact angle with water) are shown in Table 1.

At the initial, excellent water repellency was observed in all of Examples and Comparative Examples.

### [Evaluation of abrasion resistance]

### Steel wool abrasion resistance

For the above glass on which the cured coating was formed, the cured coating was rubbed 7,000 cycles under the conditions shown below using a rubbing tester (Shinto Scientific Co., Ltd.), and a contact angle with water (water repellency) was measured as an index of abrasion resistance in the same manner as described above. The test environmental conditions included temperature 25°C and humidity 40%. The results (contact angle with water after abrasion) are shown in Table 1.
Steel wool: Bonstar #0000
Contact area: 10 mm²
Moving distance (one-way): 30 mm
Moving sped: 3,600 mm/min.
Load: 1 kg/10 mm²

### Eraser abrasion resistance

For the above glass on which the cured coating was formed, the cured coating was rubbed 3,000 cycles under the conditions shown below using a rubbing tester (Shinto Scientific Co., Ltd.), and a contact angle with water (water repellency) was measured as an index of abrasion resistance in the same manner as described above. The test environmental conditions included temperature 25°C and humidity 40%. The results (contact angle with water after abrasion) are shown in Table 1.
Eraser: available from Minoan
Contact area: 6 mmϕ
Moving distance (one-way): 30 mm
Moving sped: 3,600 mm/min.
Load: 1 kg/6 mmϕ

**[Table 1]**

| | Initial Contact angle with water (°) | After steel wool abrasion Contact angle with water (°) | After eraser abrasion Contact angle with water (°) |
|---|---|---|---|
| Example 1 | 117 | 112 | 111 |
| Example 2 | 117 | 111 | 112 |
| Example 3 | 116 | 111 | 109 |
| Example 4 | 112 | 104 | 102 |
| Example 5 | 114 | 109 | 104 |
| Comparative Example 1 | 115 | 88 | 78 |
| Comparative Example 2 | 110 | 113 | 93 |
| Comparative Example 3 | 109 | 90 | 85 |

Since the polymers of Examples 1 to 5, and Comparative Example 2 have three functional groups, the substrate adhesion improves, and sufficient steel wool abrasion resistance can be exerted. Further, Examples 1 to 5 have improved wettability owing to the existence of an intramolecular polyether group. Therefore, the cured coating of the surface treatment agent using a polymer of Examples 1 to 5 exerted excellent abrasion resistance compared with the cured coating of the surface treatment agent using a polymer of Comparative Examples 1 to 3 as is evidenced from the contact angle of 100° or more kept even after 3,000 times of abrasion with eraser. As described above, Examples 1 to 5 can achieve both steel wool abrasion resistance and eraser abrasion resistance.

## Claims

1. A fluoropolyether-group-containing polymer having a hydroxyl group or a hydrolyzable group, and a hydroxyl or hydrolyzable-group-containing polyether group, the fluoropolyether-group-containing polymer being represented by the following general formula (1) or (2):
Rf¹-[N(V)_{β}(E)_{γ}]_{α} (1)
wherein Rf¹ is a mono- or divalent fluorooxyalkylene-group-containing polymer residue, Ns are each independently a carbon atom, a silicon atom, a nitrogen atom or a tri- to octavalent organic group which may be substituted with fluorine, Vs are each independently a monovalent organic group having a plurality of hydroxyl groups or hydrolyzable groups at the terminal, wherein V does not include an oxyalkylene group, Es are each independently a monovalent group having an oxyalkylene group, and a hydroxyl group or a hydrolyzable group, wherein E is represented by W'(-(LO)₁-V)_{f'}
wherein W' is an oxygen atom, or a divalent or trivalent group that is a combination of X' and an oxygen atom, X' is a divalent or trivalent groups having 2 to 20 carbon atoms, which may have a silicon atom, a siloxane bond, a silalkylene bond or a silarylene bond, and X' may have a hydroxyl group or hydrolyzable group on the silicon atom, Ls are each independently an alkylene group having 1 to 4 carbon atoms, which may be used alone or in combination, l is an integer of 1 to 20, V is as defined above, and f' is 1 or 2,
α is 1 or 2, β is an integer of 1 to 6, γ is an integer of 1 to 6, and β + γ is an integer of 2 to 7,
Rf¹-[Q-(G)_{δ}-(E')_{ε}-B]_{α} (2)
wherein Rf¹ and α are as defined above, Qs are each independently a single bond or a divalent organic group, Gs are each independently a divalent group having a hydroxyl group or a hydrolyzable group, E's are each independently a divalent group having an oxyalkylene group and a hydroxyl group or a hydrolyzable group, G and E' are linearly connected, and G and E' may be randomly arranged, Bs are each independently hydrogen, an alkyl group having 1 to 4 carbon atoms, or halogen, δ is an integer of 1 to 10, and ε is an integer of 1 to 10.

2. The fluoropolyether-group-containing polymer according to claim 1, wherein in the formula (1), when α is 1, Rf¹ is a monovalent fluorooxyalkylene-group-containing polymer residue represented by A-Rf'-
wherein "A" is a fluorine atom, a hydrogen atom, or a monovalent fluorine-containing group terminated with -CF₃, -CF₂H or -CH₂F group, and Rf' is a divalent fluorooxyalkylene-group-containing polymer residue represented by the formula (6): 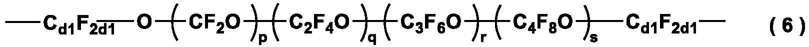
wherein p, q, r, and s each are an integer of 0 to 200, p + q + r + s = 3 to 200, each repeating unit may be linear or branched, individual repeating units may be randomly bonded, d1 is an integer of 0 to 3, and each unit may be linear or branched, and
when α is 2, Rf¹ is a divalent fluorooxyalkylene-group-containing polymer residue represented by the above -Rf'-.

3. The fluoropolyether-group-containing polymer according to claim 1 or 2, wherein in the formula (1), Vs are each independently a monovalent organic group represented by any one of the formulas (7a) to (7f): 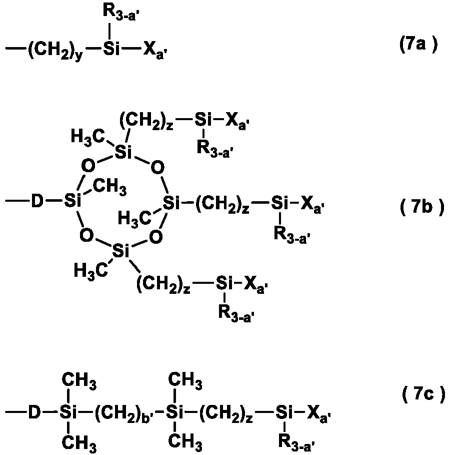 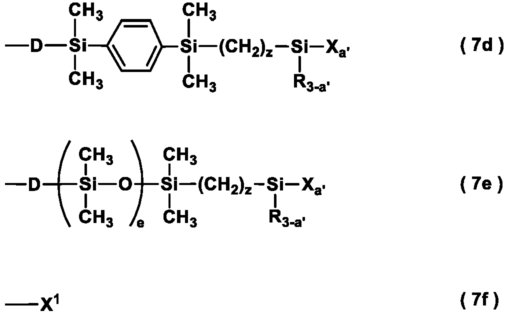 wherein Rs are each independently an alkyl group having 1 to 4 carbon atoms or a phenyl group, Xs are each independently a hydroxyl group or a hydrolyzable group, X¹ is a hydrolyzable group, a' is 2 or 3, y is an integer of 0 to 10, zs are each independently an integer of 1 to 10, D is a single bond or a divalent organic group having 1 to 20 carbon atoms, which may be substituted with fluorine, b' is an integer of 2 to 6, and e is an integer of 1 to 50.

4. The fluoropolyether-group-containing polymer according to any one of claims 1 to 3, wherein in the formula (1), l is an integer of 2 to 20.

5. The fluoropolyether-group-containing polymer according to claim 1, represented by the following general formula (3): 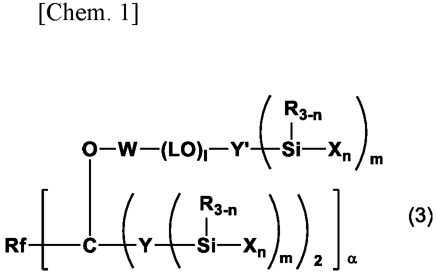 wherein Rf is a mono- or divalent fluorooxyalkylene-group-containing polymer residue, Ys are each independently a di- to a hexavalent hydrocarbon group which may have silicon and/or a siloxane bond, Ws are each independently a single bond, a siloxane bond or a silylene group, Ls are each independently an alkylene group having 1 to 4 carbon atoms, l is an integer of 1 to 20, Y' is as defined in Y, Rs are each independently an alkyl group having 1 to 4 carbon atoms, or a phenyl group, Xs are each independently a hydroxyl group or a hydrolyzable group, n is an integer of 1 to 3, m is an integer of 1 to 5, and α is 1 or 2.

6. The fluoropolyether-group-containing polymer according to claim 5, wherein in the formula (3), α is 1, and Rf is a group represented by the following general formula (4): 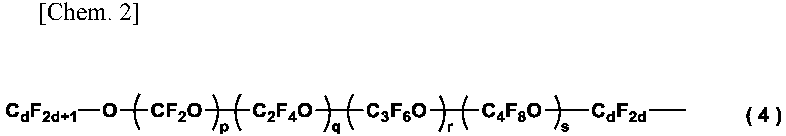 wherein p, q, r, and s each are an integer of 0 to 200, p + q + r + s = 3 to 200, each repeating unit may be linear or branched, individual repeating units may be randomly bonded, d is an integer of 1 to 3, and each unit may be linear or branched.

7. The fluoropolyether-group-containing polymer according to claim 5, wherein in the formula (3), α is 2, and Rf is a group represented by the following general formula (5): 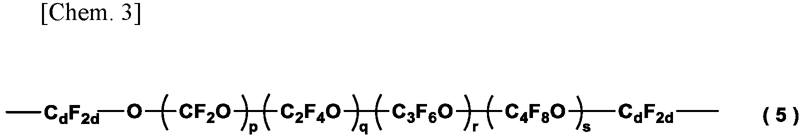 wherein p, q, r, and s each are an integer of 0 to 200, p + q + r + s = 3 to 200, each repeating unit may be linear or branched, individual repeating units may be randomly bonded, d is an integer of 1 to 3, and each unit may be linear or branched.

8. The fluoropolyether-group-containing polymer according to any one of claims 5 to 7, wherein in the formula (3), Y and Y' each are a group selected from the group consisting of an alkylene group having 2 to 10 carbon atoms, an alkylene group including an arylene groups having 6 to 8 carbon atoms, a divalent group in which alkylene groups are mutually bonded via a silalkylene structure or a silarylene structure, and a di- to tetravalent group in which an alkylene group having 2 to 10 carbon atoms is bonded to a bonding hand of a dito tetravalent organopolysiloxane residue that is a linear residue having 2 to 10 silicon atoms or a branched or cyclic residue having 3 to 10 silicon atoms.

9. The fluoropolyether-group-containing polymer according to any one of claims 5 to 8, wherein in the formula (3), W is a group selected from the group consisting of a single bond, a di- to tetravalent organopolysiloxane residue that is a linear residue having 2 to 10 silicon atoms or a branched or cyclic residue having 3 to 10 silicon atoms, a linear silalkylene residue having 2 to 10 silicon atoms, and a linear silarylene residue having 2 to 10 silicon atoms.

10. The fluoropolyether-group-containing polymer according to any one of claims 5 to 9, wherein in the formula (3), each X is selected from the group consisting of a hydroxyl group, an alkoxy group having 1 to 10 carbon atoms, an alkoxyalkoxy group having 2 to 10 carbon atoms, an acyloxy group having 1 to 10 carbon atoms, an alkenyloxy group having 2 to 10 carbon atoms, halogen, an oxime group, an isocyanate group and a cyanate group.

11. A fluoropolyether-group-containing polymer according to claim 5 represented by either of the following formulas: 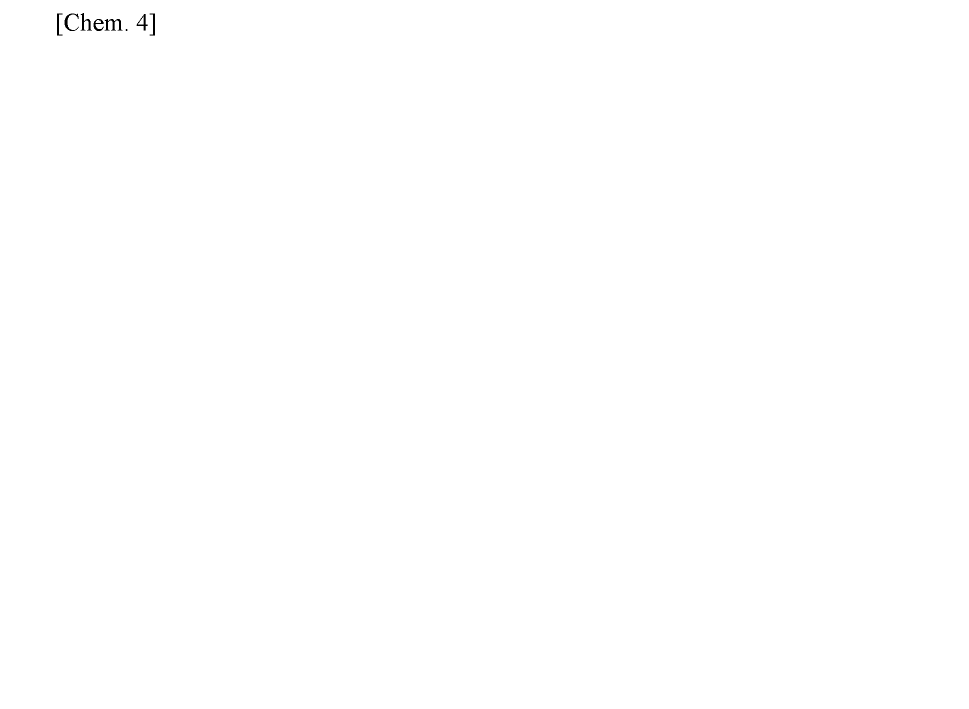 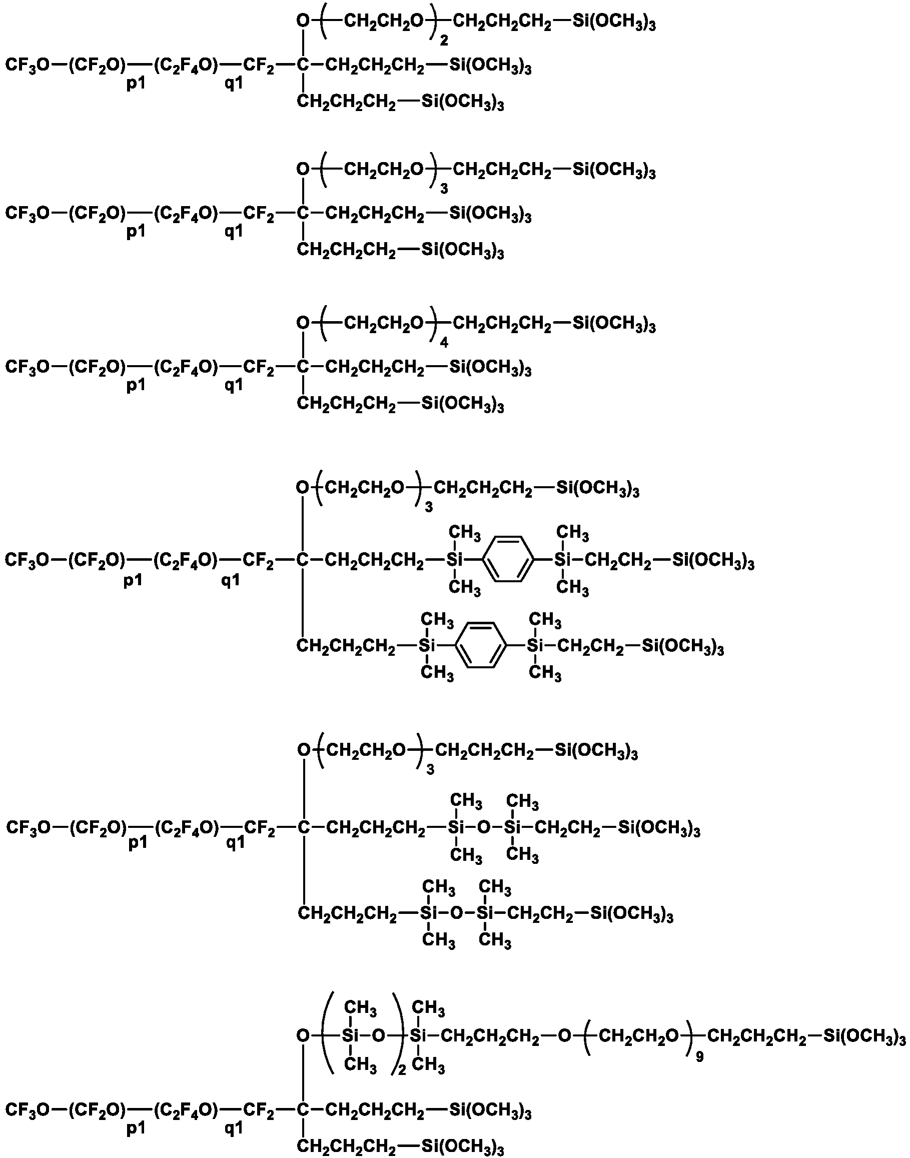 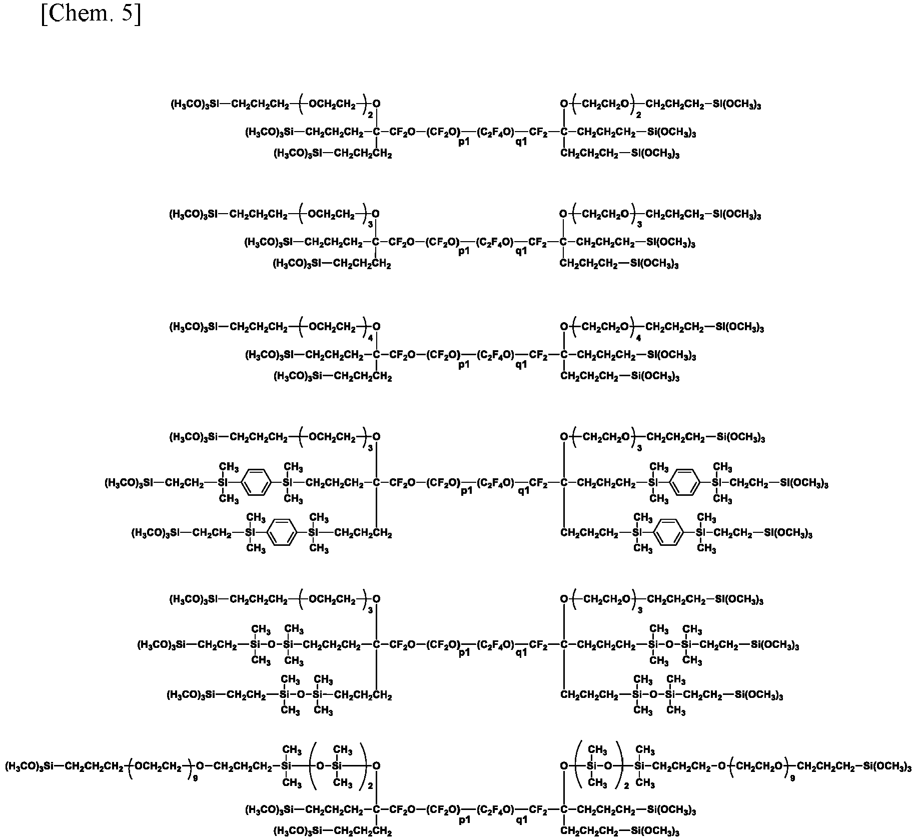 wherein p1 is an integer of 5 to 100, q1 is an integer of 5 to 100, and p1 + q1 is an integer of 10 to 105.

12. A surface treatment agent comprising a fluoropolyether-group-containing polymer having a hydroxyl group or a hydrolyzable group, and a hydroxyl or hydrolyzable-group-containing polyether group of any one of claims 1 to 11, and/or a partial (hydrolytic) condensate thereof.

13. The surface treatment agent according to claim 12, wherein a polyether group in the fluoropolyether-group-containing polymer having a hydroxyl group or a hydrolyzable group, and a hydroxyl or hydrolyzable-group-containing polyether group is a group containing a monovalent oxyalkylene group positioned at a molecular chain terminal.

14. The surface treatment agent according to claim 12, wherein the fluoropolyether-group-containing polymer having a hydroxyl group or a hydrolyzable group, and a hydroxyl or hydrolyzable-group-containing polyether group is the fluoropolyether-group-containing polymer according to any one of claims 1 to 11.

15. An article that is surface-treated with the surface treatment agent according to any one of claims 12 to 14.

## Patentansprüche

1. Fluorpolyethergruppenhaltiges Polymer mit einer Hydroxylgruppe oder einer hydrolysierbaren Gruppe und einer Hydroxyl- oder hydrolysierbaren Gruppen-haltigen Polyethergruppe, wobei das fluorpolyethergruppenhaltige Polymer durch die folgende allgemeine Formel (1) oder (2) dargestellt wird:
Rf¹-[N(V)_{β}(E)_{γ}]_{α} (1)
wobei Rf¹ ein ein- oder zweiwertiger fluoroxyalkylengruppenhaltiger Polymerrest ist, die Ns jeweils unabhängig voneinander ein Kohlenstoffatom, ein Siliciumatom, ein Stickstoffatom oder eine drei- bis achtwertige organische Gruppe sind, die mit Fluor substituiert sein kann, die Vs jeweils unabhängig voneinander eine einwertige organische Gruppe mit einer Vielzahl von Hydroxylgruppen oder hydrolysierbaren Gruppen am Ende sind, wobei V keine Oxyalkylengruppe enthält, die Es jeweils unabhängig voneinander eine einwertige Gruppe mit einer Oxyalkylengruppe und einer Hydroxylgruppe oder einer hydrolysierbaren Gruppe sind, wobei E durch W'(-(LO)₁-V)_{f'} dargestellt wird,
wobei W' ein Sauerstoffatom oder eine zweiwertige oder dreiwertige Gruppe ist, die eine Kombination aus X' und einem Sauerstoffatom ist, X' eine zweiwertige oder dreiwertige Gruppe mit 2 bis 20 Kohlenstoffatomen ist, die ein Siliciumatom, eine Siloxanbindung, eine Silalkylenbindung oder eine Silarylenbindung aufweisen kann, und X' eine Hydroxylgruppe oder eine hydrolysierbare Gruppe am Siliciumatom aufweisen kann, die Ls jeweils unabhängig voneinander eine Alkylengruppe mit 1 bis 4 Kohlenstoffatomen sind, die allein oder in Kombination verwendet werden können, l eine ganze Zahl von 1 bis 20 ist, V wie oben definiert ist, und f' 1 oder 2 ist,
α 1 oder 2 ist, β eine ganze Zahl von 1 bis 6 ist, γ eine ganze Zahl von 1 bis 6 ist, und β + γ eine ganze Zahl von 2 bis 7 ist,
Rf¹-[Q-(G)_{δ}-(E')_{ε}-B]_{α} (2)
wobei Rf¹ und α wie oben definiert sind, die Qs jeweils unabhängig voneinander eine Einfachbindung oder eine zweiwertige organische Gruppe sind, die Gs jeweils unabhängig voneinander eine zweiwertige Gruppe mit einer Hydroxylgruppe oder einer hydrolysierbare Gruppe sind, die E's jeweils unabhängig voneinander eine zweiwertige Gruppe mit einer Oxyalkylengruppe und einer Hydroxylgruppe oder einer hydrolysierbaren Gruppe sind, G und E' linear verbunden sind und G und E' zufällig angeordnet sein können, die Bs jeweils unabhängig voneinander Wasserstoff, eine Alkylgruppe mit 1 bis 4 Kohlenstoffatomen oder Halogen sind, δ eine ganze Zahl von 1 bis 10 ist und ε eine ganze Zahl von 1 bis 10 ist.

2. Fluorpolyethergruppenhaltiges Polymer gemäß Anspruch 1, wobei in der Formel (1), wenn α 1 ist, Rf¹ ein einwertiger fluoroxyalkylengruppenhaltiger Polymerrest ist, dargestellt durch A-Rf'-
wobei "A" ein Fluoratom, ein Wasserstoffatom oder eine einwertige fluorhaltige Gruppe ist, die mit einer -CF₃, -CF₂H oder -CH₂F-Gruppe endet, und Rf' ein zweiwertiger fluoroxyalkylengruppenhaltiger Polymerrest ist, der durch die Formel (6) dargestellt wird: 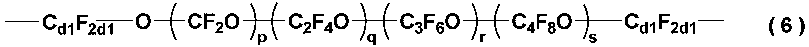
wobei p, q, r und s jeweils eine ganze Zahl von 0 bis 200 sind, p + q + r + s = 3 bis 200, jede Wiederholungseinheit linear oder verzweigt sein kann, einzelne Wiederholungseinheiten zufällig gebunden sein können, d1 eine ganze Zahl von 0 bis 3 ist und jede Einheit linear oder verzweigt sein kann, und
wenn α 2 ist, Rf¹ ein zweiwertiger fluorooxyalkylengruppenhaltiger Polymerrest ist, der durch das obige -Rf'- dargestellt wird.

3. Fluorpolyethergruppenhaltiges Polymer gemäß Anspruch 1 oder 2, wobei in der Formel (1) die Vs jeweils unabhängig voneinander eine einwertige organische Gruppe sind, die durch eine der Formeln (7a) bis (7f) dargestellt wird: 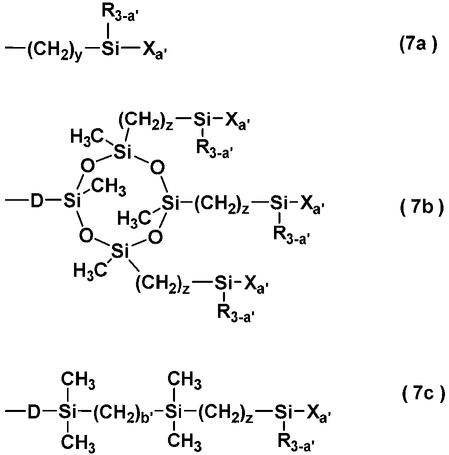 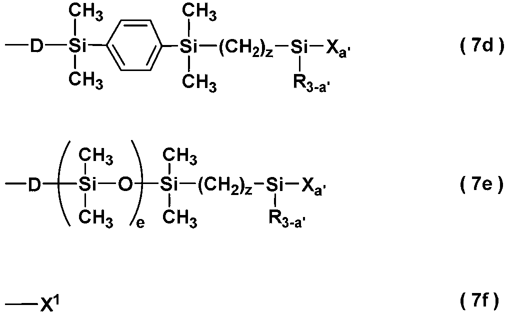 wobei die Rs jeweils unabhängig voneinander eine Alkylgruppe mit 1 bis 4 Kohlenstoffatomen oder eine Phenylgruppe sind, die Xs jeweils unabhängig voneinander eine Hydroxylgruppe oder eine hydrolysierbare Gruppe sind, X¹ eine hydrolysierbare Gruppe ist, a' 2 oder 3 ist, y eine ganze Zahl von 0 bis 10 ist, die zs jeweils unabhängig voneinander eine ganze Zahl von 1 bis 10 sind, D eine Einfachbindung oder eine zweiwertige organische Gruppe mit 1 bis 20 Kohlenstoffatomen ist, die mit Fluor substituiert sein kann, b' eine ganze Zahl von 2 bis 6 ist und e eine ganze Zahl von 1 bis 50 ist.

4. Fluorpolyethergruppenhaltiges Polymer gemäß einem der Ansprüche 1 bis 3, wobei in der Formel (1) l eine ganze Zahl von 2 bis 20 ist.

5. Fluorpolyethergruppenhaltiges Polymer gemäß Anspruch 1, dargestellt durch die folgende allgemeine Formel (3): 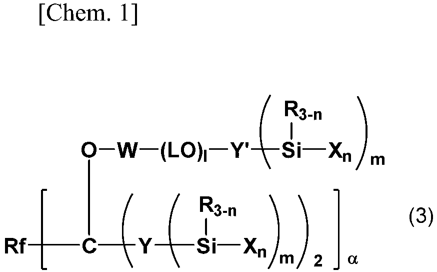 wobei Rf ein ein- oder zweiwertiger fluoroxyalkylengruppenhaltiger Polymerrest ist, die Ys jeweils unabhängig voneinander eine zwei- bis sechswertige Kohlenwasserstoffgruppe sind, die Silicium und/oder eine Siloxanbindung aufweisen kann, die Ws jeweils unabhängig voneinander eine Einfachbindung, eine Siloxanbindung oder eine Silylengruppe sind, die Ls jeweils unabhängig voneinander eine Alkylengruppe mit 1 bis 4 Kohlenstoffatomen sind, l eine ganze Zahl von 1 bis 20 ist, Y' wie in Y definiert ist, die Rs jeweils unabhängig voneinander eine Alkylgruppe mit 1 bis 4 Kohlenstoffatomen oder eine Phenylgruppe sind, die Xs jeweils unabhängig voneinander eine Hydroxylgruppe oder eine hydrolysierbare Gruppe sind, n eine ganze Zahl von 1 bis 3 ist, m eine ganze Zahl von 1 bis 5 ist und α 1 oder 2 ist.

6. Fluorpolyethergruppenhaltiges Polymer gemäß Anspruch 5, wobei in der Formel (3) α 1 ist und Rf eine Gruppe ist, die durch die folgende allgemeine Formel (4) dargestellt wird: 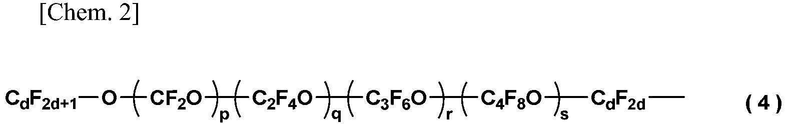 wobei p, q, r und s jeweils eine ganze Zahl von 0 bis 200 sind, p + q + r + s = 3 bis 200, jede Wiederholungseinheit linear oder verzweigt sein kann, einzelne Wiederholungseinheiten zufällig gebunden sein können, d eine ganze Zahl von 1 bis 3 ist und jede Einheit linear oder verzweigt sein kann.

7. Fluorpolyethergruppenhaltiges Polymer gemäß Anspruch 5, wobei in der Formel (3) α 2 ist und Rf eine Gruppe ist, die durch die folgende allgemeine Formel (5) dargestellt wird: 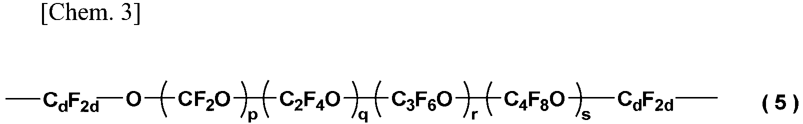 wobei p, q, r und s jeweils eine ganze Zahl von 0 bis 200 sind, p + q + r + s = 3 bis 200, jede Wiederholungseinheit linear oder verzweigt sein kann, einzelne Wiederholungseinheiten zufällig gebunden sein können, d eine ganze Zahl von 1 bis 3 ist und jede Einheit linear oder verzweigt sein kann.

8. Fluorpolyethergruppenhaltiges Polymer gemäß einem der Ansprüche 5 bis 7, wobei in der Formel (3) Y und Y' jeweils eine Gruppe sind, ausgewählt aus der Gruppe bestehend aus einer Alkylengruppe mit 2 bis 10 Kohlenstoffatomen, einer Alkylengruppe, die eine Arylengruppe mit 6 bis 8 Kohlenstoffatomen enthält, einer zweiwertigen Gruppe, in der Alkylengruppen über eine Silalkylenstruktur oder eine Silarylenstruktur miteinander verbunden sind, und einer zwei- bis vierwertigen Gruppe, in der eine Alkylengruppe mit 2 bis 10 Kohlenstoffatomen an eine Bindungsstelle eines zwei- bis vierwertigen Organopolysiloxanrestes gebunden ist, der ein linearer Rest mit 2 bis 10 Siliciumatomen oder ein verzweigter oder cyclischer Rest mit 3 bis 10 Siliciumatomen ist.

9. Fluorpolyethergruppenhaltiges Polymer gemäß einem der Ansprüche 5 bis 8, wobei in der Formel (3) W eine Gruppe ist, ausgewählt aus der Gruppe bestehend aus einer Einfachbindung, einem zwei- bis vierwertigen Organopolysiloxanrest, der ein linearer Rest mit 2 bis 10 Siliciumatomen oder ein verzweigter oder cyclischer Rest mit 3 bis 10 Siliciumatomen ist, einem linearen Silalkylenrest mit 2 bis 10 Siliciumatomen und einem linearen Silarylenrest mit 2 bis 10 Siliciumatomen.

10. Fluorpolyethergruppenhaltiges Polymer gemäß einem der Ansprüche 5 bis 9, wobei in der Formel (3) jedes X ausgewählt ist aus der Gruppe bestehend aus einer Hydroxylgruppe, einer Alkoxygruppe mit 1 bis 10 Kohlenstoffatomen, einer Alkoxyalkoxygruppe mit 2 bis 10 Kohlenstoffatomen, einer Acyloxygruppe mit 1 bis 10 Kohlenstoffatomen, einer Alkenyloxygruppe mit 2 bis 10 Kohlenstoffatomen, Halogen, einer Oximgruppe, einer Isocyanatgruppe und einer Cyanatgruppe.

11. Fluorpolyethergruppenhaltiges Polymer gemäß Anspruch 5, dargestellt durch eine der folgenden Formeln: 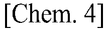 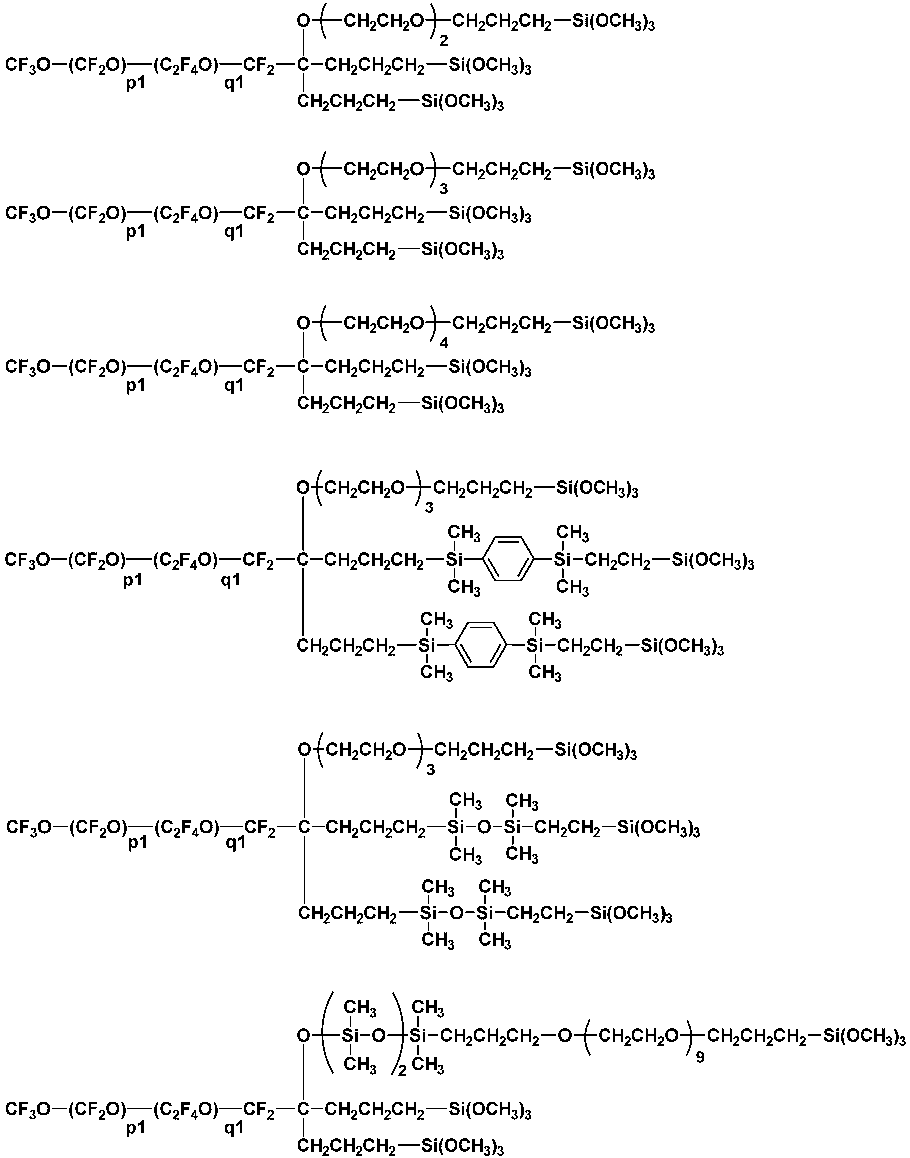 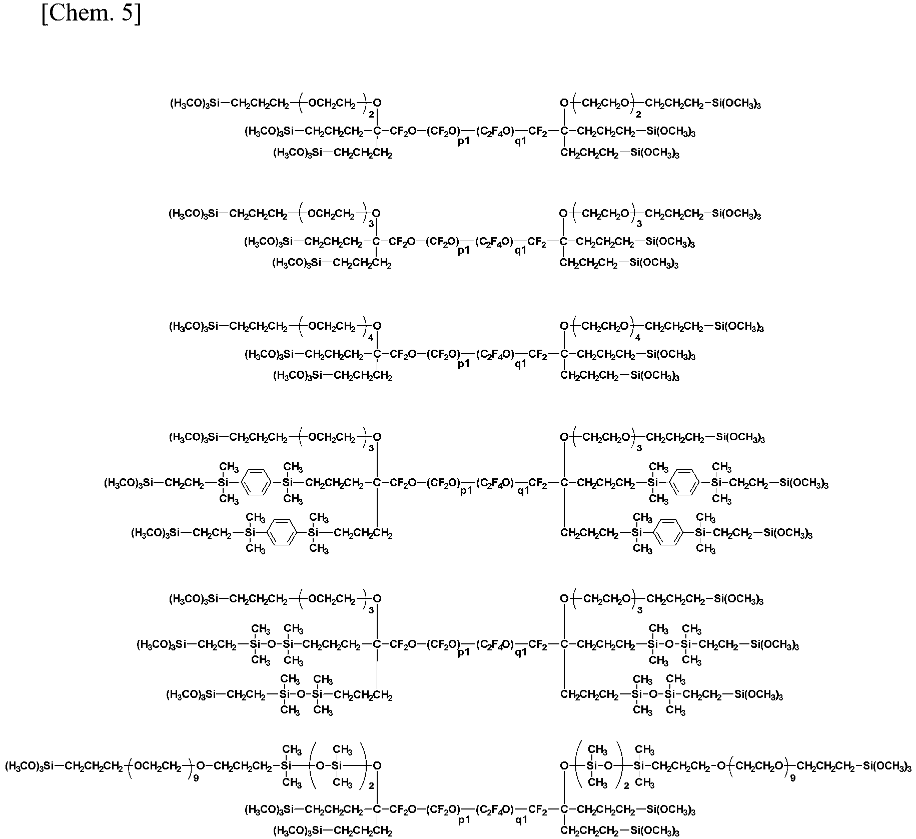 wobei p1 eine ganze Zahl von 5 bis 100 ist, q1 eine ganze Zahl von 5 bis 100 ist und p1 + q1 eine ganze Zahl von 10 bis 105 ist.

12. Oberflächenbehandlungsmittel, umfassend ein fluorpolyethergruppenhaltiges Polymer mit einer Hydroxylgruppe oder einer hydrolysierbaren Gruppe und einer Hydroxyl- oder hydrolysierbaren Gruppen-haltigen Polyethergruppe gemäß einem der Ansprüche 1 bis 11 und/oder ein partielles (hydrolytisches) Kondensat davon.

13. Oberflächenbehandlungsmittel gemäß Anspruch 12, wobei eine Polyethergruppe in dem fluorpolyethergruppenhaltigen Polymer mit einer Hydroxylgruppe oder einer hydrolysierbaren Gruppe und einer Hydroxyl- oder hydrolysierbaren Gruppen-haltigen Polyethergruppe eine Gruppe ist, die eine einwertige Oxyalkylengruppe enthält, die an einem Molekülkettenende positioniert ist.

14. Oberflächenbehandlungsmittel gemäß Anspruch 12, wobei das fluorpolyethergruppenhaltige Polymer mit einer Hydroxylgruppe oder einer hydrolysierbaren Gruppe und einer Hydroxyl- oder hydrolysierbaren Gruppen-haltigen Polyethergruppe das fluorpolyethergruppenhaltige Polymer gemäß einem der Ansprüche 1 bis 11 ist.

15. Gegenstand, der mit dem Oberflächenbehandlungsmittel gemäß einem der Ansprüche 12 bis 14 oberflächenbehandelt ist.

## Revendications

1. Polymère contenant un groupe fluoropolyéther ayant un groupe hydroxyle ou un groupe hydrolysable, et un groupe polyéther contenant un groupe hydroxyle ou un groupe hydrolysable, le polymère contenant un groupe fluoropolyéther étant représenté par la formule générale (1) ou (2) suivante :
Rf¹-[N(V)_{β}(E)_{γ}]_{α} (1)
dans laquelle Rf¹ est un résidu de polymère contenant un groupe fluoro-oxyalkylène mono- ou divalent, les éléments N sont chacun, indépendamment les uns des autres, un atome de carbone, un atome de silicium, un atome d'azote ou un groupe organique tri- à octavalent qui peut être substitué par un fluor, les éléments V sont chacun, indépendamment les uns des autres, un groupe organique monovalent ayant une pluralité de groupes hydroxyle ou de groupes hydrolysables au niveau de la terminaison, dans laquelle V n'inclut pas un groupe oxyalkylène, les éléments E sont chacun, indépendamment les uns des autres, un groupe monovalent ayant un groupe oxyalkylène, et un groupe hydroxyle ou un groupe hydrolysable, dans laquelle E est représenté par W'(-(LO)ₗ-V)_{f'}
dans laquelle W' est un atome d'oxygène, ou un groupe divalent ou trivalent qui est une combinaison de X' et d'un atome d'oxygène, X' est un groupe divalent ou trivalent possédant 2 à 20 atomes de carbone, qui peut avoir un atome de silicium, une liaison siloxane, une liaison silalkylène ou une liaison silarylène, et X' peut avoir un groupe hydroxyle ou un groupe hydrolysable sur l'atome de silicium, les éléments L sont chacun, indépendamment les uns des autres, un groupe alkylène possédant 1 à 4 atomes de carbone, qui peut être utilisé seul ou en combinaison, l est un entier de 1 à 20, V est tel que défini ci-dessus et f' vaut 1 ou 2,
α vaut 1 ou 2, β est un entier de 1 à 6, γ est un entier de 1 à 6, et β + γ est un entier de 2 à 7,
Rf¹-[Q-(G)_{δ}-(E')_{ε}-B]_{α} (2)
dans laquelle RF¹ et α sont tel que défini ci-dessus, les élément Q sont chacun, indépendamment les uns des autres, une liaison simple ou un groupe organique divalent, les éléments G sont chacun, indépendamment les uns des autres, un groupe divalent ayant un groupe hydroxyle ou un groupe hydrolysable, les éléments E sont chacun, indépendamment les uns des autres, un groupe divalent ayant un groupe oxyalkylène et un groupe hydroxyle ou un groupe hydrolysable, G et E' sont liés linéairement, et G et E' peuvent être disposés de façon aléatoire, les éléments B sont chacun, indépendamment les uns des autres, l'hydrogène, un groupe alkyle possédant 1 à 4 atomes de carbone, ou un halogène, δ est un entier de 1 à 10, et ε est un entier de 1 à 10.

2. Polymère contenant un groupe fluoropolyéther selon la revendication 1, dans lequel, dans la formule (1), lorsque α vaut 1, Rf¹ est un résidu de polymère monovalent contenant un groupe fluoro-oxyalkylène représenté par A-Rf'-
dans lequel "A" est un atome de fluor, un atome d'hydrogène ou un groupe monovalent contenant un fluor terminé par un groupe -CF₃, -CF₂H ou -CH₂F, et Rf est un résidu de polymère divalent contenant un groupe fluoro-oxyalkylène représenté par la formule (6) : 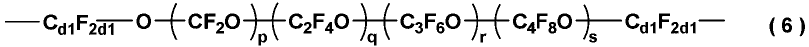
dans laquelle p, q, R et s sont chacun un entier de 0 à 200, p + q + R + s = 3 à 200, chaque motif répétitive peut être linéaire ou ramifié, des motifs répétitifs individuels peuvent être liés de façon aléatoire, d1 est un entier de 0 à 3, et chaque motif peut être linéaire ou ramifié, et
lorsque α vaut 2, Rf¹ est un résidu de polymère divalent contenant un groupe fluoro-oxyalkylène représenté par l'élément -Rf' - ci-dessus.

3. Polymère contenant un groupe fluoropolyéther selon la revendication 1 ou 2, dans lequel, dans la formule (1), les éléments V représentent chacun , indépendamment les uns des autres, un groupe organique monovalent représenté par l'une quelconque des formules (7a) à (7f) : 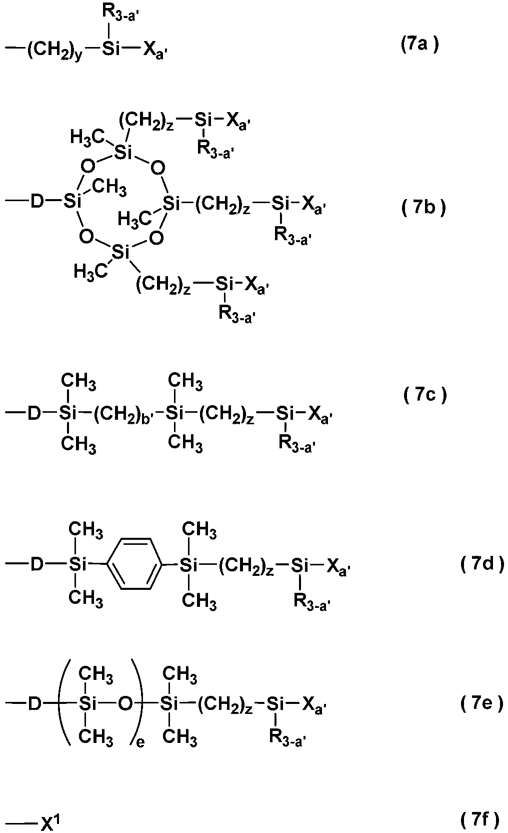 dans lesquelles les éléments R représentent chacun, indépendamment les uns des autres, un groupe alkyle possédant 1 à 4 atomes de carbone ou un groupe phényle, les éléments X représentent chacun, indépendamment les uns des autres, un groupe hydroxyle ou un groupe hydrolysable, X¹ est un groupe hydrolysable, a' vaut 2 ou 3, y est un entier de 0 à 10, les éléments z sont chacun, indépendamment les uns des autres, un entier de 1 à 10, D est une liaison simple ou un groupe organique divalent possédant 1 à 20 atomes de carbone, qui peut être substitué par un fluor, b' est un entier de 2 à 6, et e est un entier de 1 à 50.

4. Polymère contenant un groupe fluoropolyéther selon l'une quelconque des revendications 1 à 3, dans lequel, dans la formule (1), 1 est un entier de 2 à 20.

5. Polymère contenant un groupe fluoropolyéther selon la revendication 1, représenté par la formule générale (3) suivante : 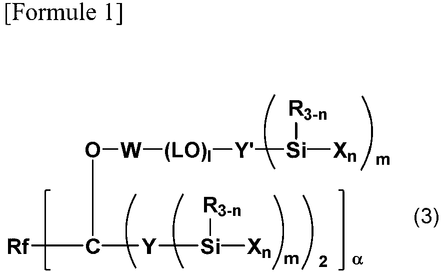 dans laquelle Rf est un résidu de polymère contenant un groupe fluoro-oxyalkylène mono- ou divalent, les éléments Y sont chacun, indépendamment les uns des autres, un groupe hydrocarbure di- à hexavalent qui peut avoir une liaison silicium et/ou siloxane, les éléments W sont chacun, indépendamment les uns des autres, une liaison simple, une liaison siloxane ou un groupe silylène, les éléments L sont chacun, indépendamment les uns des autres, un groupe alkylène possédant 1 à 4 atomes de carbone, 1 est un entier de 1 à 20, y' est tel que défini dans Y, les éléments R sont chacun, indépendamment les uns des autres, un groupe alkyle possédant 1 à 4 atomes de carbone, ou un groupe phényle, les éléments X sont chacun, indépendamment les uns des autres, un groupe hydroxyle ou un groupe hydrolysable, n est un entier de 1 à 3, m est un entier de 1 à 5, et α vaut 1 ou 2.

6. Polymère contenant un groupe fluoropolyéther selon la revendication 5, dans lequel, dans la formule (3), α vaut 1, et Rf est un groupe représenté par la formule générale (4) suivante : 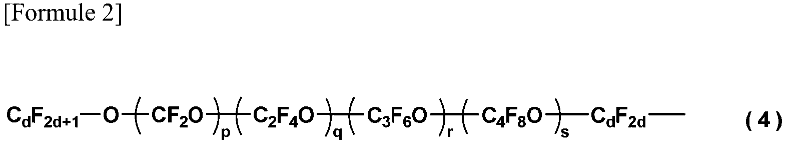 dans laquelle p, q, r et s sont chacun un entier de 0 à 200, p + q + r + s = 3 à 200, chaque motif répété peut être linéaire ou ramifié, des motifs répétés individuels peuvent être liés de façon aléatoire, d est un entier de 1 à 3, et chaque motif peut être linéaire ou ramifié.

7. Polymère contenant un groupe fluoropolyéther selon la revendication 5, dans lequel, dans la formule (3), α vaut 2, et Rf est un groupe représenté par la formule générale (5) suivante : 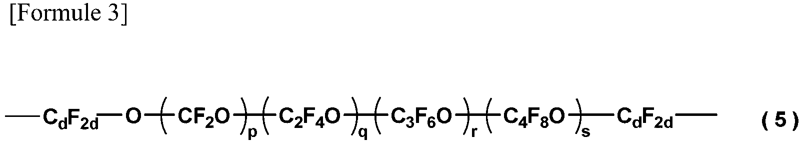 dans laquelle p, q, r et s sont chacun un entier de 0 à 200, p + q + r + s = 3 à 200, chaque motif répété peut être linéaire ou ramifié, des motifs répétés individuels peuvent être liés de façon aléatoire, d est un entier de 1 à 3, et chaque motif peut être linéaire ou ramifié.

8. Polymère contenant un groupe fluoropolyéther selon l'une quelconque des revendications 5 à 7, dans lequel, dans la formule (3), Y et Y' sont chacun un groupe choisi parmi le groupe constitué d'un groupe alkylène possédant 2 à 10 atomes de carbone, d'un groupe alkylène incluant un groupe arylène possédant 6 à 8 atomes de carbone, d'un groupe divalent dans lequel des groupes alkylène sont liés mutuellement via une structure silalkylène ou une structure silarylène, et d'un groupe di- à tétravalent dans lequel un groupe alkylène possédant 2 à 10 atomes de carbone est lié à une extrémité de liaison d'un résidu d'organopolysiloxane di- à tétravalent qui est un résidu linéaire possédant 2 à 10 atomes de silicium ou un résidu ramifié ou cyclique possédant 3 à 10 atomes de silicium.

9. Polymère contenant un groupe fluoropolyéther selon l'une quelconque des revendications 5 à 8, dans lequel, dans la formule (3), W est un groupe choisi parmi le groupe constitué d'une liaison simple, d'un résidu d'organopolysiloxane di- à tétravalent qui est un résidu linéaire possédant 2 à 10 atomes de silicium ou un résidu ramifié ou cyclique possédant 3 à 10 atomes de silicium, d'un résidu de silalkylène linéaire possédant 2 à 10 atomes de silicium, et d'un résidu de silarylène linéaire possédant 2 à 10 atomes de silicium.

10. Polymère contenant un groupe fluoropolyéther selon l'une quelconque des revendications 5 à 9, dans lequel, dans la formule (3), chaque X est choisi parmi le groupe constitué d'un groupe hydroxyle, d'un groupe alcoxy possédant 1 à 10 atomes de carbone, d'un groupe alcoxyalcoxy possédant 2 à 10 atomes de carbone, d'un groupe acyloxy possédant 1 à 10 atomes de carbone, d'un groupe alcényloxy possédant 2 à 10 atomes de carbone, d'un halogène, d'un groupe oxime, d'un groupe isocyanate et d'un groupe cyanate.

11. Polymère contenant un groupe fluoropolyéther selon la revendication 5, représenté par l'une ou l'autre des formules suivantes : 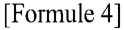 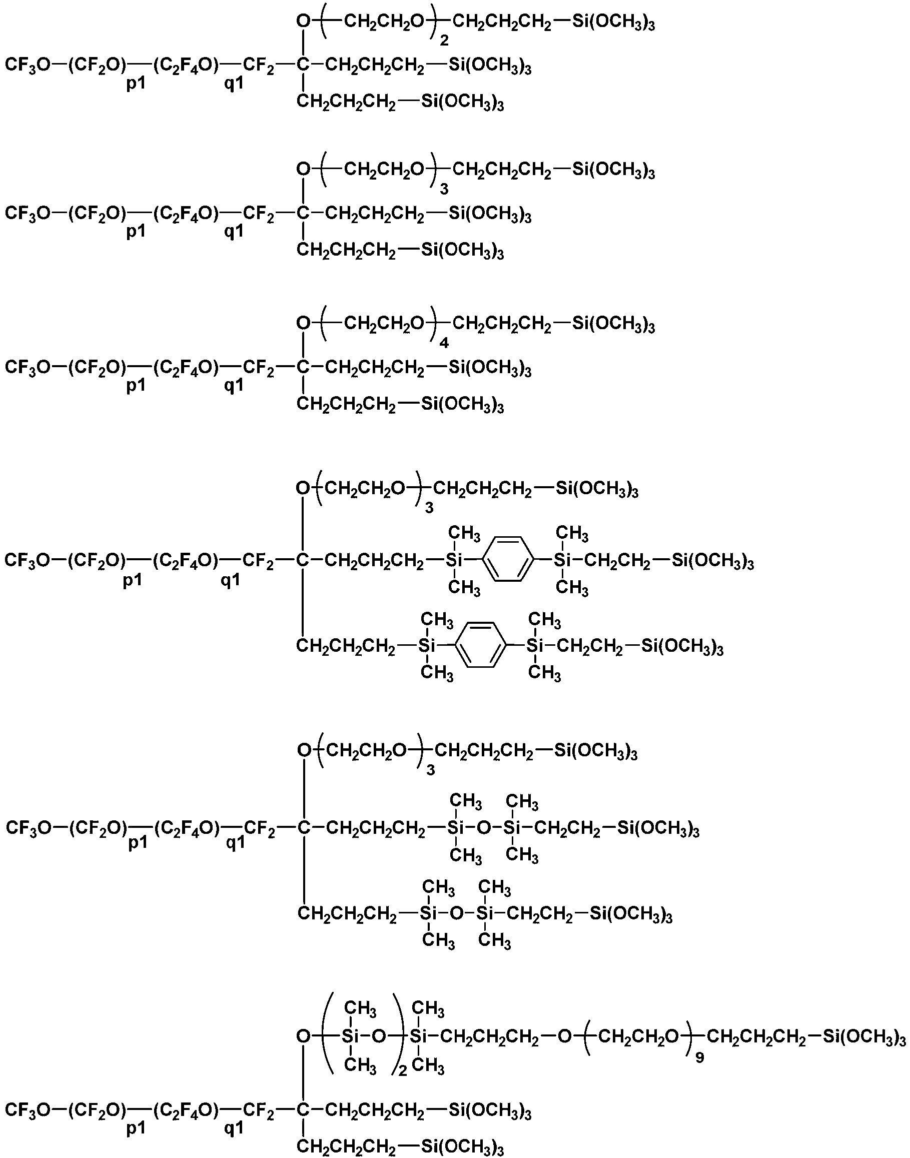 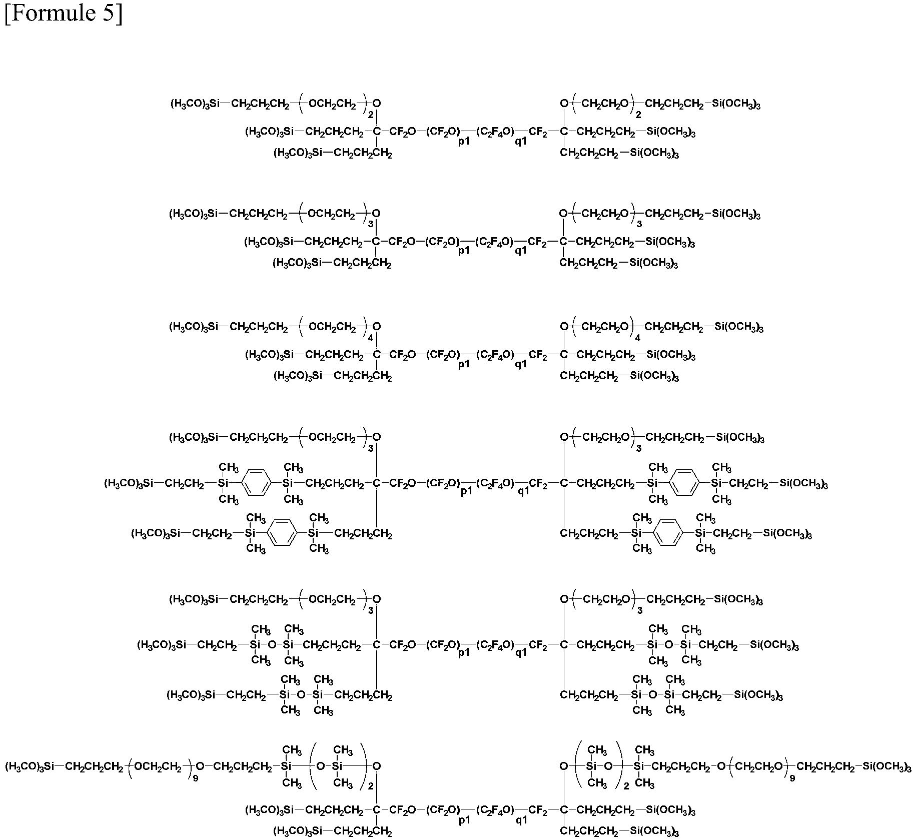 dans lesquelles p1 est un entier de 5 à 100, q1 est un entier de 5 à 100, et p1 + q1 est un entier de 10 à 105.

12. Agent de traitement de surface comportant un polymère contenant un groupe fluoropolyéther ayant un groupe hydroxyle ou un groupe hydrolysable, et un groupe polyéther contenant un groupe hydroxyle ou un groupe hydrolysable selon l'une quelconque des revendications 1 à 11, et/ou un condensat (hydrolytique) partiel de celui-ci.

13. Agent de traitement de surface selon la revendication 12, dans lequel un groupe polyéther dans le polymère contenant un groupe fluoropolyéther ayant un groupe hydroxyle ou un groupe hydrolysable, et un groupe polyéther contenant un groupe hydroxyle ou un groupe hydrolysable est un groupe contenant un groupe oxyalkylène monovalent positionné à une terminaison de chaîne moléculaire.

14. Agent de traitement de surface selon la revendication 12, dans lequel le polymère contenant un groupe fluoropolyéther ayant un groupe hydroxyle ou un groupe hydrolysable, et un groupe polyéther contenant un groupe hydroxyle ou un groupe hydrolysable est le polymère contenant un groupe fluoropolyéther selon l'une quelconque des revendications 1 à 11.

15. Article qui est traité en surface avec l'agent de traitement de surface selon l'une quelconque des revendications 12 à 14.
